(19) Europäisches Patentamt
European Patent Office
Office européen des brevets

(11) **EP 1 773 572 B1**

(12) **EUROPEAN PATENT SPECIFICATION**

(45) Date of publication and mention
of the grant of the patent:
**26.06.2013 Bulletin 2013/26**

(51) Int Cl.:
*B29C 55/08* (2006.01)    *C08L 1/10* (2006.01)
*C08L 1/14* (2006.01)    *C08J 5/18* (2006.01)
*G02B 5/30* (2006.01)    *B29K 1/00* (2006.01)

(21) Application number: 05762077.5

(22) Date of filing: **12.07.2005**

(86) International application number:
**PCT/JP2005/013222**

(87) International publication number:
**WO 2006/006724 (19.01.2006 Gazette 2006/03)**

(54) **METHOD OF MANUFACTURING A THERMOPLASTIC FILM, THERMOPLASTIC FILM AND ITS USE**

VERFAHREN ZUR HERSTELLUNG EINER THERMOPLASTISCHEN FOLIE, THERMOPLASTISCHE FOLIE UND DEREN VERWENDUNG

PROCEDE DE FABRICATION D'UN FILM THERMOPLASTIQUE, FILM THERMOPLASTIQUE ET SON UTILISATION

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.07.2004   JP 2004207737**

(43) Date of publication of application:
**18.04.2007   Bulletin 2007/16**

(73) Proprietor: **FUJIFILM CORPORATION**
**Minato-ku**
**Tokyo 106-8620 (JP)**

(72) Inventors:
• **OTOSHI, Masaaki,**
**c/o Fujifilm Corporation**
**Fujinomiya-shi,**
**Shizuoka 418-8666 (JP)**
• **HASHIMOTO, Kiyokazu,**
**c/o Fujifilm Corporation**
**Kanagawa 250-0193 (JP)**

(74) Representative: **HOFFMANN EITLE**
**Patent- und Rechtsanwälte**
**Arabellastrasse 4**
**81925 München (DE)**

(56) References cited:
| | |
|---|---|
| EP-A1- 1 435 541 | EP-A1- 1 548 063 |
| EP-A2- 0 423 630 | WO-A1-2004/035688 |
| JP-A- 3 193 328 | JP-A- 3 216 326 |
| JP-A- 7 080 928 | JP-A- 2000 178 367 |
| JP-A- 2001 059 907 | JP-A- 2001 059 907 |
| JP-A- 2001 163 995 | JP-A- 2001 206 981 |
| JP-A- 2001 215 332 | JP-A- 2001 215 332 |
| JP-A- 2002 196 137 | JP-A- 2003 053 751 |
| JP-A- 2004 144 942 | JP-A- 2004 144 942 |
| JP-A- 2004 170 760 | JP-A- 2004 170 760 |
| JP-A- 2004 184 964 | US-B1- 6 565 974 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a thermoplastic film and a method of manufacturing the same, a polarizing plate, an optical compensation film and an anti-reflective film.

Background Art

Conventionally, a thermoplastic film has been used as a phase difference film for liquid crystal display device by drawing it to produce in-plane retardation (Re) and retardation in a thickness direction (Rth), thereby increasing a viewing angle.

As a method of drawing a thermoplastic film, there are a method of drawing the film in a lengthwise (longitudinal) direction (longitudinal drawing), a method of drawing the film in a transverse (width) direction (transverse drawing), and a method of alternately performing longitudinal drawing and transverse drawing (sequential biaxial drawing).

Of them, in the sequential biaxial drawing, a film is first placed between at least two pairs of nip rolls, heated to a glass transition temperature (Tg) or more, and drawn longitudinally by setting the transfer speed of the film at the outlet side to be higher than that of the nip rolls at the inlet side. Subsequently, the film is heated while the both ends of the film are held by clips and drawn transversely by use of a tenter. At this time when a straight line is drawn on the film surface in the width direction before the film is fed into the tenter, the straight line deforms within the tenter, leading into a concave form relative to the transfer direction of the film after completion of the drawing process. This phenomenon is called bowing, which is known to be a factor that renders the physical properties in the width direction nonuniform.

Such a bowing phenomenon takes place because the force of constraint applied to the center portion of the film is weaker than that of the end portions held by clips, with the result that retardation occurs when the operation is continuously performed. Also, in a simultaneous biaxial drawing method, bowing generally takes place in the same manner when a film is drawn in a transverse direction.

To overcome such a problem, various methods have been proposed up to now. For example, Japanese Patent Application Laid-Open No.4-74635 proposes that a cooling zone is interposed between a drawing step and a thermal fixation step. According to Japanese Patent Application Laid-Open No.4-74635 (also called Reference document 1), bowing can be reduced to some extent.

However, the film disclosed in Reference document 1 is not sufficient for a phase difference plate to be installed in a liquid crystal display device because the bowing is still large and the uniformity of Re, Rth and orientation angle are still insufficient. Therefore, when the film of Reference document 1 is used as a phase difference film of a liquid crystal display device, display unevenness occurs in the liquid crystal display devise.

EP 0 423 630 relates to a thermoplastic film at least oriented in the transverse direction having a specific thermal shrinkage stress and thermal shrinkage factor. Such a film has a minimized bowing phenomenon.

Disclosure of the Invention

The present invention has been attained under these circumstances and is directed to providing a method of manufacturing a thermoplastic film, which is obtained by drawing, capable of improving its optical properties and also providing such a thermoplastic film.

According to a first aspect of the present invention, to attain the aforementioned objects, there is provided a method of manufacturing a thermoplastic film as defined in independent claim 1.

The present inventors have been intensively studied in view of the aforementioned problems. As a result, they found that bowing occurs depending upon the temperatures before and after drawing (in particular, temperature after drawing). More specifically, they found that the occurrence of bowing can be prevented if the steps after drawing is performed while maintaining the film at a glass transition temperature (Tg) or less. In a conventional method, a fixation zone is provided after the step of drawing, in which a film is maintained at a temperature of Tg or more to crystallize the film to fix. The present inventors found that the presence of the fixation zone exerts an adverse effect to cause bowing. The first aspect of the present invention is attained based on such findings. Since the steps after drawing are performed at a temperature of Tg or more, the occurrence of bowing can be prevented.

A second aspect of the present invention is characterized in that, in the first aspect, the film temperature before the drawing is higher than the film temperature after the drawing.

According to the second aspect, it is possible to increase a strain (convex distortion) which is generated in the reverse direction of that generated at the time drawing is initiated, by setting the film temperature before drawing to be higher than that after drawing. In this way, the occurrence of final concave-form bowing stain can be effectively suppressed.

According to a third aspect of the present invention, to attain the aforementioned objects, there is provided a thermoplastic film characterized in that an orientation angle falls within the range of 0°±5° or 90°±5°, the magnitude of bowing strain falls within the range of 10%, in-plane retardation (Re) falls within the range of 0 nm to 500 nm, and retardation (Rth) in a thickness direction falls within the range of 30 nm to 500 nm (both inclusive). The thermoplastic film characterized as mentioned above can be manufactured by the aforementioned manufacturing method and excellent in optical properties.

A fourth aspect is characterized in that, in the sixth aspect, the retardation Re and Rth have fluctuation in the width direction and the longitudinal direction each within the range of 5%, and the orientation angle has fluctuation in the width direction and the longitudinal direction each within the range of 5 degrees. Therefore, the film according to the fourth aspect has uniform retardation and orientation angle in the width direction and the longitudinal direction and an extremely small variation in in-plain optical properties.

An fifth aspect is characterized in that, in the third or fourth aspect, the thermoplastic film is a cellulose acylate film or a saturated norbornene film. The cellulose acylate film and saturated norbornene film are particularly effective because they do not require crystallization after drawing.

A sixth aspect is characterized in that, in the fifth aspect, the cellulose acylate film has an acylate group satisfying a substitution degree represented by the equations:

$$2.5 \leq A+B < 3.0$$

$$1.25 \leq B < 3.0$$

where A is a substitution degree of an acetate group; and B is the sum of substitution degrees of a propionate group, butyrate group, pentanoyl group, and hexanoyl group. The film having such a substitution degree has characteristics of a low melting point, easy drawing and excellent moisture proofing. In addition, the film having such a substitution degree is particularly effective because it needs not to be crystallized.

A seventh aspect is directed to a polarizing plate, characterized in that at least one cellulose acylate film according to the eighth or ninth aspect is stacked on the polarizing plate.

An eighth aspect is directed to an optical compensation film for a liquid crystal display panel, characterized by using the cellulose acylate film according to the fifth or sixth aspect as a base.

A ninth aspect is directed to an antireflective film characterized by using the cellulose acylate film according to the fifth or sixth aspect as a base.

According to the present invention, it is possible to reduce irregularity of Re, Rth and orientation angle of a drawn film, thereby obtaining good optical properties over the entire film. Therefore, when the film is installed in a liquid crystal device, in-plane display uniformity can be obtained.

Brief Description of the Drawings

Figure 1 shows a structure of a film manufacturing apparatus to which the present invention is applied;
Figure 2 is a schematic illustration of constitution of zones in a transverse drawing step;
Figures 3A and 3B are illustrations for explaining the function of the present invention;
Figures 4A to 4E are tables showing the results of Examples; and
Figures 5A to 5E are tables showing the results of Examples.

Best Mode for Carrying out the Invention

Preferred Embodiments of a thermoplastic film and a method of manufacturing the same according to the present invention will be explained with reference to the accompanied drawings.

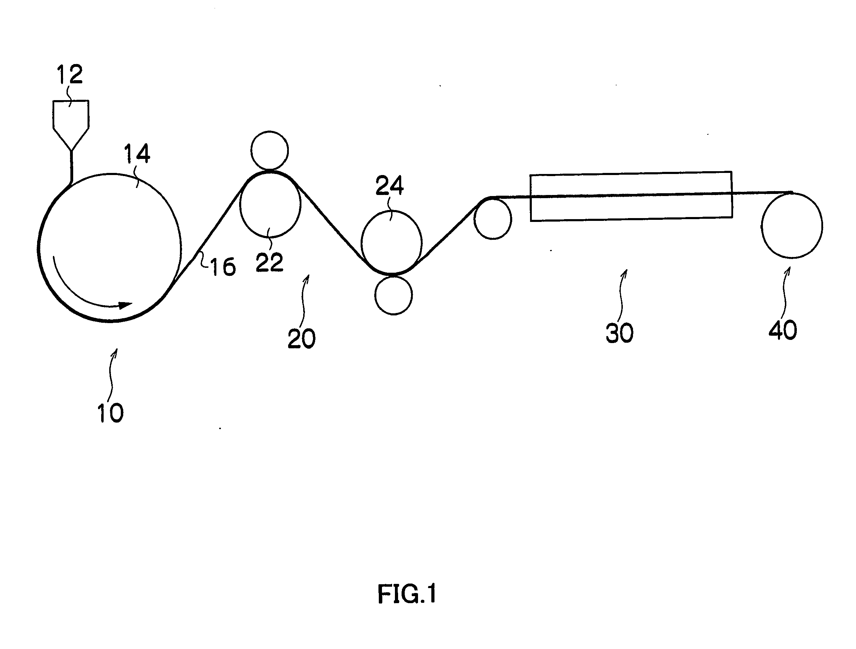

Figure 1 shows a schematic structure of a film manufacturing apparatus. As shown in the figure, the film manufacturing apparatus is principally composed of a film forming process part 10, a longitudinal drawing process part 20, a transverse drawing process part 30, and a roll-up process part 40.

In the film-forming process part 10, a thermoplastic resin is extruded from a die 12 of an extruder in the form of sheet and cast onto a rotating cooling drum 14, thereby quenched and solidified to obtain a film 16. The film 16 is removed from the cooling drum 14 and transferred to the longitudinal drawing process part 20 and the transverse drawing process 30 sequentially in this order, and thereafter rolled up in the roll-up process part 40.

Drawing of the film 16 is performed to orient the molecules in the film 16, thereby providing in-plane retardation (Re) and retardation in a thickness direction (Rth).

The retardation values, Re and Rth, used herein can be obtained in accordance with the following equations:

$$\text{Re (nm)} = |n(MD) - n(TD)| \times T(nm)$$

$$\text{Rth (nm)} = |\{(n(MD)+n(TD))/2\} - n(TH)| \times T(nm)$$

where n(MD), n(TD), and n (TH) represent the refractive indexes in the longitudinal direction, transverse direction and thickness direction, respectively; and T represents the thickness (unit: nm).

The film 16 is drawn in the longitudinal direction in the longitudinal drawing process part 20. In the longitudinal drawing process part 20, after the film 16 is preheated, the film 16 thus heated is spanned between two nip rolls 22 and 24. The nip roll 24 near the outlet side transfers the film 16 at a higher speed than the nip roll 22 near the inlet side, with the result that the film 16 is drawn in the longitudinal direction.

The preheating temperature in the longitudinal drawing process part 20 is preferably Tg-40°C to Tg+60°C (both inclusive), more preferably Tg-20°C to Tg+40°C (both inclusive), and further preferably, Tg to Tg+30°C (both inclusive). The drawing temperature in the longitudinal drawing process part 20 is preferably Tg to Tg+60°C (both inclusive), more preferably Tg+2°C to Tg+40°C (both inclusive), and further preferably, Tg+5°C to Tg+30°C (both inclusive). The drawing rate in the longitudinal direction is preferably 1.01 times to 3 times (both inclusive), more preferably 1.05 times to 2.5 times (both inclusive), and further preferably 1.1 times to 2 times (both inclusive).

Furthermore, the longitudinal drawing of the film 16 is preferably performed in the state where the remaining solvent of the film 16 is 3 wt% or less, more preferably 2 wt% or less, and further preferably 1 wt% or less. This is because the orientation of molecules in the film 16 is easily relaxed with time and Re and Rth tend to change with time if a solvent remains.

Note that, in the present invention, the longitudinal drawing may be skipped and transverse drawing (described later) alone may be carried out. Furthermore, simultaneous biaxial drawing, in which the longitudinal drawing and transverse drawing are simultaneously performed, may be performed.

The film 16 longitudinally drawn is transferred to the transverse drawing process part 30, in which the film 16 is drawn in the width direction. In the transverse drawing process part 30, for example, a tenter is used to draw the film 16 in the width direction while holding both end portions of the film in the width direction by clips. By virtue of the transverse drawing, the retardation Rth can be further increased.

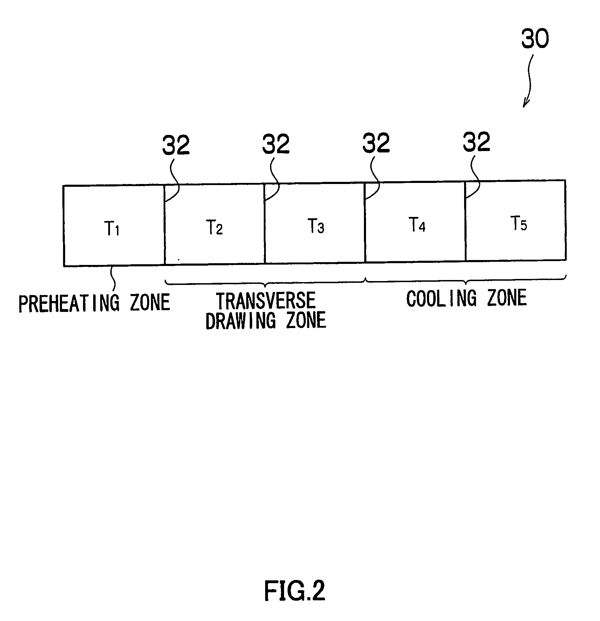

Figure 2 is a schematic illustration of constitution of zones in a transverse drawing process part 30. In the figure, the transverse drawing process part 30 is constituted of a plurality of zones partitioned by shield curtains 32. The temperature of each zone is controllable by the supply of, for example, hot air. A preheating zone T1, transverse-drawing zones T2 and T3, cooling zones T4 and T5 are arranged in the order from the inlet.

The drawing temperature in the transverse drawing zones T2 and T3 is preferably Tg-10°C to Tg+50°C (both inclusive), more preferably Tg-5°C to Tg+40°C (both inclusive), and further preferably, Tg to Tg+30°C (both inclusive).

The preheating temperature of the preheating zone T1 is preferably Tg-20°C to Tg+80°C (both inclusive), more preferably Tg-15°C to Tg+70°C (both inclusive), and further preferably, Tg-10°C to Tg+60°C (both inclusive). In other words, the temperature preferably ranges from 10°C lower than the temperature of the transverse drawing zones T2 and T3 to 30°C higher than the temperature.

The temperature of the cooling zone T4 immediately after the drawing is Tg or less, preferably Tg-5°C or less, and further preferably Tg-10°C or less and less than the preheating temperature. Furthermore, in all process parts coming after the transverse drawing zones T2 and T3 (that is, cooling zones T4 and T5 and roll-up process part 40 in this embodiment), the temperature of a zone should be maintained Tg or less.

Note that an attemperation zone may be provided before entering the cooling zone T4 to perform gradual cooling. In this case, the temperatures of the process parts coming after the transverse drawing zones T2 and T3 should be maintained Tg or less.

The drawing rate of the transverse drawing is preferably 1.0 time to 3 times (both inclusive), more preferably 1.05 times to 2.8 times (both inclusive), and further preferably 1.1 times to 2.5 times (both inclusive). After the transverse drawing, relaxation is preferably performed either one of longitudinal and transverse directions or both directions. In this manner, the distribution of slow axes in the width direction can be reduced.

The retardation value Re of the thermoplastic film 16 drawn in the above is preferably from 0 nm to 500 nm (both inclusive), more preferably from 10 nm to 400 nm (both inclusive), and further preferably, from 15 nm to 300 nm (both inclusive); and the retardation value Rth is preferably from 30 nm to 500 nm (both inclusive), more preferably from 50 nm to 400 nm, and further preferably, from 70 nm to 350 nm. Of these conditions, conditions satisfying Re≤Rth are more preferable and a condition satisfying Re×2≤Rth are further preferable. To attain high Rth value and low Re value, the film drawn longitudinally is preferably drawn in the transverse (width) direction. The reason is as follows. That is, since the difference in orientation between the longitudinal direction and the transverse direction gives the difference of in-plane retardation (Re), Re may be reduced by reducing the difference in orientation between the longitudinal direction and the transverse direction by drawing in the longitudinal direction and also perpendicularly, that is, in the transverse direction. On the other hand, an area is enlarged by drawing not only longitudinally but also transversely, so that the thickness reduces. In accordance with the reduction in thickness, orientation in the thickness direction increases, increasing the Rth value.

Furthermore, positional changes of Re value and Rth value both in the width direction and the longitudinal direction are preferably 5% or less, more preferably 4% or less, and further preferably 3% or less. Moreover, an orientation angle is preferably 90±5°C or less or 0±5°C or less, more preferably, 90±3°C or less or 0±3°C or less, and further preferably 90±1°C or less or 0±1°C or less. This is because bowing can be reduced by performing drawing in accordance with the present invention as well as a bowing strain can be reduced to 10% or less, more preferably, 5% or less, and further preferably 3% or less. The bowing strain used herein is a value obtained by dividing the difference between the center portion of the straight line, which is drawn in the width direction in the surface of the film 16 before tentering, and the center portion of a concave obtained after drawing by a width.

Next, the function of the transverse drawing process part 30 constituted as mentioned above will be explained.

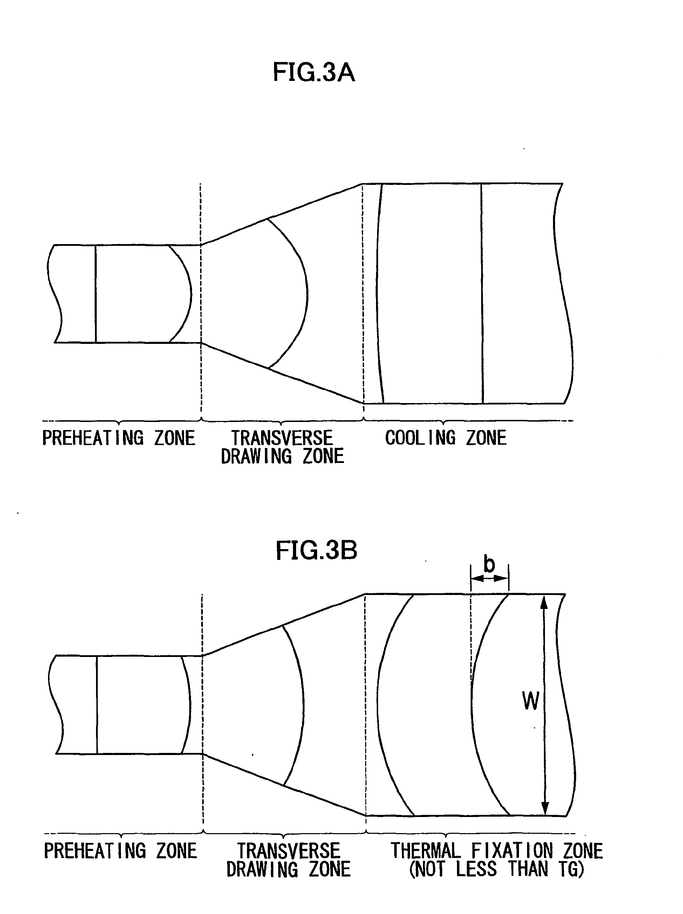

Figures 3A and 3B are illustrations for explaining the function of the present invention. Figure 3A shows a state where bowing is generated in the present invention. Figure 3B shows a state where bowing is generated in Comparative Example in which a heat fixation zone (Temperature > Tg) is interposed between the transverse drawing zone and the cooling zone.

As shown in Figure 3B showing Comparative Example, a distortion of a convex form is formed in the beginning of the transverse drawing zone. The shape of the distortion is reversed in the middle and a concave-form bowing is formed in the heat fixation zone. This is because the film 16 is heated up to Tg or more in the heat fixation zone. Since both ends of the film 16 are stretched in the state where it is easily deformed, a large bowing strain was produced. The bowing strain reaches a maximum in the beginning of the heat fixation zone and remains as it is to the end of heat fixation zone. In this manner, bowing remains.

In contrast, in the Embodiment of the present invention, a cooling zone T4, whose temperature is controlled at Tg or less, is provided immediately after the transverse drawing zone T3. Because of this, the film 16 obtained after completion of processing in the transverse drawing zone T3, is rarely distorted. When a straight line is drawn in the width direction on the surface of the film 16, the distortion of the film 16 is finished before the convex-form line turns to a concave form, as shown in Figure 3A. As a result, the line is maintained almost in a linear state. Since the temperatures of process parts coming after the transverse drawing zones T2 and T3 are set at Tg or less, the state where generation of bowing can be suppressed, can be maintained. In this way, it is possible to manufacture the film 16 while preventing the generation of bowing.

In the embodiment of the present invention, the temperature of the preheating zone T1 is set to be higher than those of the cooling zones T4 and T5. If the temperature of the preheating zone T1 is set to be higher, the convex-form distortion relative to the transfer direction of the film 16 becomes large in the beginning of the transverse drawing zone T2. By increasing the degree of distortion of the convex form, it is possible to suppress as much as possible concave-form bowing strain to be generated in the cooling zone T4. In this manner, the generation of the bowing strain can be effectively suppressed.

According to this embodiment, since the temperatures (T1, T4 and T5) before and after the transverse drawing zones T2 and T3 are appropriately controlled, the generation of the bowing strain can be effectively suppressed. By virtue of this, it is possible to manufacture a thermoplastic film having the values of Re, Rth, orientation angle and bowing strain within the aforementioned ranges. That is, a thermoplastic film excellent in optical properties can be obtained.

Now, a resin suitable for the present invention, a film forming method, and a film processing method will be described.

(1) Thermoplastic resin

The thermoplastic resin to be subjected to the drawing mentioned above is a cellulose acylate film and a saturated norbornene film. This is because they are excellent since they provide appropriate Re, Rth by drawing and rarely causes drawing irregularity. Now, the cellulose acylate resin and saturated norbornene resin will be more specifically described below.

(Cellulose acylate resin)

Cellulose acylate according to the present invention preferably has the following characteristics.

A cellulose acylate film is characterized in that an acrylate group satisfies the following relationship of substitution degrees;

$$2.5 \leq A+B \leq 3.0$$

$$1.25 \leq B \leq 3.0$$

where A is a substitution degree of an acetate group; B is the sum of substitution degrees of a propionate group, butyrate group, pentanoyl group, and hexanoyl group. More preferable substitution degree is, in the case where not less than 1/2 of B is occupied by a propionate group,

$$2.6 \leq A+B \leq 2.95$$

$$2.0 \leq B \leq 2.95$$

and in the case where less than 1/2 of B is occupied by a propionate group,

$$2.6 \leq A+B \leq 2.95$$

$$1.3 \leq B \leq 2.5$$

Further preferable substitution degree is, in the case where not less than 1/2 of B is occupied by a propionate group,

$$2.7 \leq A+B \leq 2.95$$

$$2.4 \leq B \leq 2.9$$

and in the case where less than 1/2 of B is occupied by a propionate group,

$$2.7 \leq A+B \leq 2.95$$

$$1.3 \leq B \leq 2.0$$

In the present invention, it is characterized that the substitution degree of an acetate group is reduced and the sum of substitution degrees of a propionate group, butyrate group, pentanoyl group and hexanoyl group is increased. By virtue of this characteristic, drawing irregularity rarely generates during drawing, non-uniformity of Re and Rth are rarely provided and crystal melting temperature (Tm) can be reduced. In addition, yellow discoloration of the film caused by heat decomposition during a melt-forming process of a film can be suppressed. These effects can be attained by using the largest possible substituent. However, an excessively large substituent is not preferable because it decreases the glass transition temperature (Tg) and elasticity modulus too much. For this reason, a propionate group, butyrate group, pentanoyl group, and hexanoyl group, which are larger than an acetyl group, are preferably used, more preferably a propionate group and a butyrate group, and further preferably, a butyrate group, is used.

A fundamental principle underlying these synthetic methods for cellulose acylate is described in Migita et al., Wood Chemistry, page 180-190 (Kyoritsu Shuppan. 1968). A typical synthetic method is a liquid-phase acetylation method performed by using carboxylic acid anhydride and acetic acid in the presence of a sulfuric acid catalyst. More specifically, after a cellulose material such as cotton linters and wood pulp is pretreated with an appropriate amount of acetic acid, it is put in a carboxylation mixture solution previously cooled, in which the material is esterificated to synthesize complete cellulose acylate (the sum of substitution degrees by an acyl group at the 2nd, 3rd and 6th positions are about 3.00). The carboxylation mixture solution mentioned above generally contains acetic acid serving as a solvent, carboxylic acid anhydride serving as an esterification agent, and a sulfuric acid as serving a catalyst. The carboxylic acid anhydride is usually used in a stoichiometrically excessive amount than the total amount of cellulose to be reacted with the carboxylic acid anhydride and a moisture content present in the system. After completion of an acylation reaction, an aqueous solution of a neutralization agent (such as a carbonate, acetate or oxide of calcium, magnesium, iron, aluminium, or zinc) is added for hydrolysis of the carboxylic acid anhydride present in an excessive amount and neutralization of a part of an esterification catalyst remaining in the system. Subsequently, the complete cellulose acylate thus obtained is subjected to saponification and aging by keeping the temperature at 50 to 90°C in the presence of a small amount of a catalyst (generally remaining sulfuric acid) for an acetylation reaction until cellulose acylate having a desired acyl substitution degree and polymerization degree is obtained. At the moment the desired cellulose acylate is obtained, the catalyst remaining in the system is completely neutralized with the neutralization agent as described above, or alternatively, in place of neutralizing the catalyst, the cellulose acylate solution is added to water or diluted sulfuric acid (or water or diluted sulfuric acid is added to the cellulose acylate solution) to separate cellulose acylate, which is further washed or subjected to stabilization treatment to obtain cellulose acylate.

The polymerization degree of cellulose acylate preferably used in the present invention is 200 to 700, preferably 250 to 550, further preferably 250 to 400, and particularly preferably 250 to 350 in terms of an average viscometric degree of polymerization. The Average degree of polymerization can be measured in accordance with the intrinsic viscosity method of Uda et al. (Kazuo Uda, Hideo Saito, Journal of the Society of Fiber Science and Technology, Vol. 18, 1, 105-120, 1962). Further, it is more specifically described in Japanese Patent Application Laid-Open No. 9-95538.

The polymerization degree can be controlled by removing low molecular components. It is useful to remove the low molecular components since the viscosity decreases lower than that of general cellulose acylate, although the average molecular weight (polymerization degree) increases. The low molecular weight components can be removed by washing cellulose acylate with an appropriate organic solvent. Furthermore, the molecular weight can be controlled by a polymerization method. For example, in manufacturing cellulose acylate having a small amount of low molecular components, it is preferable to control the amount of sulfuric acid catalyst in an acetylation reaction to set at 0.5 to 25 parts by mass based on the 100 parts by weight of cellulose. It is preferable to set the amount of sulfuric acid catalyst within the aforementioned range, because cellulose acylate can be synthesized with a preferable molecular weight distribution (uniform distribution of molecular weight).

The cellulose acylate to be used in the present invention preferably has a ratio of weight average molecular weight (Mw) to number average molecular weight (Mn) preferably within 1.5 to 5.5, particularly preferably 2.5 to 5.0, further preferably 2.5 to 5.0, and further preferably, 3.0 to 5.0.

A single type of cellulose acylate may be used or two or more types of cellulose acylates may be used in the form of a mixture. Furthermore, a polymer component other than cellulose acylate may be added appropriately. The polymer component to be mixed is preferably excellent in compatibility with cellulose acylate and preferably gives a permeability of 80% or more, further preferably 90% or more, and further preferably 92% or more when a film is formed.

In the present invention, the crystal melting temperature (Tm) of cellulose acylate can be decreased by adding a plasticizer to cellulose acylate. The molecular weight of a plasticizer to be used in the present invention is not particularly limited and may be either lower or higher. Examples of such a plasticizer may include phosphoric esters, alkylphthalyl alkyl glycolates, carboxylates, and fatty acid esters of polyalcohols. These plasticizers may take solid forms or be present in an oily state. More specifically, they are not particularly limited in melting point and boiling point. When a film is formed by a melting-forming method, a nonvolatile plasticizer is particularly preferably used.

Examples of the phosphoric esters include triphenyl phosphate, tributyl phosphate, tributoxyethyl phosphate, tricresyl phosphate, trioctyl phosphate, trinaphthyl phosphate, trixylyl phosphate, trisortho-biphenyl phosphate, cresylphenyl phosphate, octyldiphenyl phosphate, binyldiphenyl phosphate, and 1,4-phenylene-tetraphenyl phosphoric ester. Further, use is preferably made of the phosphoric ester plasticizers recited in claims 3 to 7 of Japanese National Publication of International Patent Application No. 6-501040.

Examples of alkyl phthalyl alkyl glycolates may include methyl phthalyl methyl glycolate, ethyl phthalyl ethyl glycolate, propyl phthalyl propyl glycolate, butyl phthalyl butyl glycolate, octyl phthalyl octyl glycolate, methyl phthalyl ethyl glycolate, ethyl phthalyl methyl glycolate, ethyl phthalyl propyl glycolate, methyl phthalyl butyl glycolate, ethyl phthalyl butyl glycolate, butyl phthalyl methyl glycolate, butyl phthalyl ethyl glycolate, propyl phthalyl butyl glycolate, butyl phthalyl propyl glycolate, methyl phthalyl octyl glycolate, ethyl phthalyl octyl glycolate, octyl phthalyl methyl glycolate and octyl phthalyl ethyl glycolate.

**EP 1 773 572 B1**

Examples of the carboxylate may include phthalate esters such as dimethyl phthalate, diethyl phthalate, dibutyl phthalate, dioctyl phthalate and diethylhexyl phthalate; citric acid esters such as acetyl trimethyl citrate, acetyl triethyl citrate, and acetyl tributyl citrate; adipic acid esters such as dimethyl adipate, dibutyl adipate, diisobutyl adipate, bis(2-ethylhexyl)adipate, diisodecyl adipate, and bis(butyldiglycol)adipate; aromatic polycarboxylate esters such as tetraoctyl pyromellitate and trioctyltrimellitate; aliphatic polycarboxylate esters such as dibutyl adipate, dioctyl adipate, dibutyl sebacate, dioctyl sebacate, diethyl azelate, dibutyl azelate, and dioctyl azelate; and fatty acid esters of polyalcohols such as glycerol triacetate, diglycerol tetraacetate, acetylated glyceride, monoglyceride, and diglyceride. Besides these, butyl oreate, methylacetyl ricinoleate, dibutyl sebacate, and triacetin may be preferably used singly or in combination.

Furthermore, use may be made of polymer plasticizers such as aliphatic polyesters formed of a glycol such as polyethylene adipate, polybutylene adipate, polyethylene succinate, and polybutylene succinate and a dibasic acid; aliphatic polyesters formed of oxycarboxylate such as poly lactate and polyglycolic acid; aliphatic polyesters formed of lactones such as polycaprolactone, polypropiolactone, and polyvalerolactone; and vinyl polymers such as polyvinylpyrrolidone. The plasticizers may be used singly or in combination with a low molecular weight plasticizer.

Examples of the polyalcohol plasticizers include glycerol ester compounds, which have a good compatibility with a cellulose fatty acid ester and in which thermoplastic effects are remarkably obtained, such as glycerol ester, diglycerol ester, polyalkylene glycol, and compounds formed by binding an acyl group to a hydroxyl group of a polyalkylene glycol, such as polyethylene glycol and polypropylene glycol.

Examples of the glycerol esters include, but are not limited to, glycerol diacetate stearate, glycerol diacetate palmitate, glycerol diacetate myristate, glycerol diacetate laurate, glycerol diacetate caprate, glycerol diacetate nonanoate, glycerol diacetate octanoate, glycerol diacetate heptanoate, glycerol diacetate hexanoate, glycerol diacetate pentanoate, glycerol diacetate oleate, glycerol acetate dicaprate, glycerol acetate dinonanoate, glycerol acetate dioctanoate, glycerol acetate diheptanoate, glycerol acetate dicaproate, glycerol acetate divalerate, glycerol acetate dibutylate, glycerol dipropionate caprate, glycerol dipropionate laurate, glycerol dipropionate myristate, glycerol dipropionate palmitate, glycerol dipropionate stearate, glycerol dipropionate oleate, glycerol tributylate, glycerol tripentanoate, glycerol monopalmitate, glycerol monostearate, glycerol distearate, glycerol propionate laurate and glycerol oleate propionate. They can be used singly or in combination.

Of them, use is preferably made of glycerol diacetate caprylate, glycerol diacetate pelargonate, glycerol diacetate caprate, glycerol diacetate laurate, glycerol diacetate myristate, glycerol diacetate palmitate, glycerol diacetate stearate, and glycerol diacetate oleate.

Examples of the diglycerol esters include, but are not limited to, mixed acid esters of diglycerol such as diglycerol tetraacetate, diglycerol tetrapropionate, diglycerol tetrabutyrate, diglycerol tetravalerate, diglycerol tetrahexanoate, diglycerol tetraheptanoate, diglycerol tetracaprylate, diglycerol tetrapelargonate, diglycerol tetracaprate, diglycerol tetralaurate, diglycerol tetramyristate, diglycerol tetrapalmitate, diglycerol triacetate propionate, diglycerol triacetate butyrate, diglycerol triacetate valerate, diglycerol triacetate hexanoate, diglycerol triacetate heptanoate, diglycerol triacetate caprylate, diglycerol triacetate pelargonate, diglycerol triacetate caprate, diglycerol triacetate laurate, diglycerol triacetate myristate, diglycerol triacetate palmitate, diglycerol triacetate stearate, diglycerol triacetate oleate, diglycerol diacetate dipropionate, diglycerol diacetate dibutyrate, diglycerol diacetate divalerate, diglycerol diacetate dihexanoate, diglycerol diacetate diheptanoate, diglycerol diacetate dicaprylate, diglycerol diacetate dipelargonate, diglycerol diacetate dicaprate, diglycerol diacetate dilaurate, diglycerol diacetate dimyristate, diglycerol diacetate dipalmitate, diglycerol diacetate distearate, diglycerol diacetate dioleate, diglycerol acetate tripropionate, diglycerol acetate tributyrate, diglycerol acetate trivalerate, diglycerol acetate trihexanoate, diglycerol acetate triheptanoate, diglycerol acetate tricaprylate, diglycerol acetate tripelargonate, diglycerol acetate tricaprate, diglycerol acetate trilaurate, diglycerol acetate trimyristate, diglycerol acetate tripalmitate, diglycerol acetate tristearate, diglycerol acetate trioleate, diglycerol laurate, diglycerol stearate, diglycerol caprylate, diglycerol myristate and diglycerol oleate. They can be used singly or in combination.

Of them, use is preferably made of diglycerol tetraacetate, diglycerol tetrapropionate, diglycerol tetrabutylate, diglycerol tetracaprylate, and diglycerol tetralaurate.

Examples of the polyalkylene glycols include polyethylene glycol and polypropylene glycol having an average molecular weight of 200 to 1,000, but not limited to these, they can be used singly or in combination.

Examples of the compound formed by binding an acyl group to a hydroxyl group of a polyalkylene glycol include, but are not limited to, polyoxyethylene acetate, polyoxyethylene propionate, polyoxyethylene butyrate, polyoxyethylene valerate, polyoxyethylene caproate, polyoxyethylene heptanoate, polyoxyethylene octanoate, polyoxyethylene nonanoate, polyoxyethylene caprate, polyoxyethylene laurate, polyoxyethylene myristate, polyoxyethylene palmitate, polyoxyethylene stearate, polyoxyethylene oleate, polyoxyethylene linolate, polyoxypropylene acetate, polyoxypropylene propionate, polyoxypropylene butyrate, polyoxypropylene valerate, polyoxypropylene caproate, polyoxypropylene heptanoate, polyoxypropylene octanoate, polyoxypropylene nonanoate, polyoxypropylene caprate, polyoxypropylene laurate, polyoxypropylene myristate, polyoxypropylene palmitate, polyoxypropylene stearate, polyoxypropylene oleate and polyoxypropylene linolate. They can be used singly or in combination.

The addition amount of a plasticizer is preferably 0 to 20 wt%, more preferably 2 to 18 wt%, and most preferably, 4 to 15 wt%. When the content of a plasticizer is larger than 20 wt%, the heat-flow kinesis of cellulose acylate becomes satisfactory; however, a plasticizer oozes out to the surface of the film formed by a melt-forming method and a glass transition temperature Tg exhibiting heat resistance decreases.

Furthermore, to the cellulose acylate of the present invention, if necessary, a stabilizing agent for preventing heat deterioration and coloring may be added as long as it does not damage the performance required.

Examples of the stabilizing agent include phosphite compounds, phosphorous ester compounds, phosphates, thiophosphates, weak organic acids, and epoxy compounds. They may be used singly or in a mixture of two or more types. As examples of the phosphite stabilizing agent, the compounds described in Japanese Patent Application Laid-Open No. 2004-182979, paragraphs [0023] to [0039] can be preferably used. As specific examples of the phosphorous ester stabilizing agent, the compounds described in Japanese Patent Application Laid-Open Nos. 51-70316, 10-36175, 57-78431, 54-157159 and 55-13765 can be preferably used.

The addition amount of the stabilizing agent according to the present invention is preferably 0.005 to 0.5 wt%, more preferably 0.01 to 0.4 wt%, and further preferably 0.05 to 0.3 wt% based on the amount of cellulose acylate. The case where the addition amount is less than 0.005% is not preferable because deterioration preventing effect and coloring suppression effect of the stabilizing agent during film formation by a melting-forming method are insufficient. On the other hand, the case where the addition amount is larger than 0.5 wt% is also not preferable because the stabilizing agent oozes out to the surface of cellulose acylate film formed by a melting-forming method.

Furthermore, it is preferable to add a deterioration preventing agent and an antioxidant. Phenol compounds, thioether compounds, and phosphorus compounds, if added as a deterioration preventing agent or an antioxidant, have synergetic effects upon deterioration preventing effect and antioxidation effect. As other example of such a stabilizing agent, materials specifically described in "Kokai Gihou" No. 2001-1745, p. 17-22 (published on March 15, 2001, by the Japanese Institute of Invention and Innovation) can be preferably used.

In cellulose acylate of the present invention, an UV ray protective agent may be contained. One or two or more types of UV ray absorbing agents may be contained. As UV ray absorbing agents for a liquid crystal, those excellent in absorbing UV rays having a wavelength of 380 nm or less in view of preventing deterioration of a liquid crystal and poor in absorbing visible light having a wavelength of 400 nm or more, in view of performance of a liquid crystal display. Examples of such UV ray absorbing agents include oxybenzophenone compounds, benzotriazole compounds, salicylate ester compounds, benzophenone compounds, cyanoacrylate compounds, and nickel complex salt compounds. Particularly preferable US ray absorbing agents are benzotriazole compounds and benzophenone compounds. Of them, benzotriazole compounds are preferable because unnecessary coloring of a cellulose ester or cellulose acrylate, is not observed.

Examples of preferable UV ray protective agents include 2,6-di-tert-butyl-p-cresol, pentaerythrityl-tetrakis[3-(3,5-di-tert-butyl-4-hydroxyphenyl)propionate], triethylene glycol-bis[3-(3-tert-butyl-5-methyl-4-hydroxyphenyl)propionate], 1,6-hexanediol-bis[3-(3,5-di-tert-butyl-4-hydroxyphenyl)propionate], 2,4-bis-(n-octylthio)-6-(4-hydroxy-3,5-di-tert-butylanilino)-1,3,5-triazine, 2,2-thio-diethylenebis[3-(3,5-di-tert-butyl-4-hydroxyphenyl)propionate], octadecyl-3-(3,5-di-tert-butyl-4-hydroxyphenyl)propionate, N,N'-hexamethylenebis(3,5-di-tert-butyl-4-hydroxy-hydrocinnamide), 1,3,5-trimethyl-2,4,6-tris(3,5-di-tert-butyl-4-hydroxybenzyl)benzene and tris-(3,5-di-tert-butyl-4-hydroxybenzyl)-isocyanurate.

Furthermore 2,6-di-tert-butyl-p-cresol, pentaerythrityl-tetrakis[3-(3,5-di-tert-butyl-4-hydroxyphenyl)propionate], and triethylene glycol-bis[3-(3-tert-butyl-5-methyl-4-hydroxyphenyl)propionate], are preferable. Furthermore, a metal inactivating agent of a hydrazine compound such as N, N'-bis[3-(3,5-di-tert-butyl-4-hydroxyphenyl)propionyl]hydrazine, and a phosphorus processing stabilizer such as tris(2,4-di-tert-butylphenyl)phosphite may be used in combination. The addition amount of these compounds is preferably 1 ppm to 3.0%, and further preferably, 10 ppm to 2% by mass based on the amount of a cellulose ester, cellulose acylate.

Commercially available UV ray absorbing agents as mentioned below may be used.

Examples of the benzotriazole UV ray absorbing agents include TINUBIN P (Ciba Specialty Chemicals Inc.), TINUBIN 234 (Ciba Specialty Chemicals Inc.), TINUBIN 320 (Ciba Specialty Chemicals Inc.), TINUBIN 326 (Ciba Specialty Chemicals Inc.), TINUBIN 327 (Ciba Specialty Chemicals Inc.), TINUBIN 328 (Ciba Specialty Chemicals Inc.), and Sumisorb 340 (Sumitomo Chemical). Examples of the benzophenone UV ray absorbing agents include seesorb 100 (Shipro Kasei Kaisha, Ltd.), seesorb 101 (Shipro Kasei Kaisha, Ltd.), seesorb 101S (Shipro Kasei Kaisha, Ltd.), seesorb 102 (Shipro Kasei Kaisha, Ltd.), seesorb 103 (Shipro Kasei Kaisha, Ltd.), Adekas type LA-51 (Asahi Denka Co., Ltd.), Chemisoap III (Chemipro Kasei Kaisha), and UVINUL D-49 (BASF). Examples of the oxalic acid anilide UV ray absorbing agents include TINUBIN 312 (Ciba Specialty Chemicals Inc.) and TINUBIN 315 (Ciba Specialty Chemicals Inc.). Examples of the salicylic acid UV ray absorbing agents include seesorb 201 (Shipro Kasei Kaisha, Ltd.) and seesorb 202 (Shipro Kasei Kaisha, Ltd.). Examples of the cyano acrylate UV absorbing agents include seesorb 501 (Shipro Kasei Kaisha, Ltd.) and UVINUL N-539 (BASF).

(Saturated norbomene resin)

Examples of the saturated norbornene resin to be used in the present invention include (1) resins produced by, if necessary, subjecting a ring-opened (co) polymer of a norbomene monomer, to modification such as an addition reaction with a maleic acid or a cyclopentadiene, followed by subjecting to hydrogenation; (2) resins produced by addition polymerization of a norbomene monomer; and (3) resins produced by addition polymerization of a norbomene monomer, ethylene, and an olefin monomer such as $\alpha$-olefin. The polymerization method and the hydrogenation method can be performed in accordance with customary methods.

Examples of such a norbomene monomer include norbornene, norbomene substituted by an alkyl group and/or an alkylidene group, for example, 5-methyl-2-norbornene, 5-dimethyl-2-norbornene, 5-ethyl-2-norbornene, 5-butyl-2-norbomene, and 5-ethylidene-2-norbomene; norbomene substituted by a polar group such as halogen; dicyclopentadiene; and 2,3-dihydrodicyclopendadiene; dimethanooctahydronaphthalene, dimethanooctahydronaphthalene substituted by an alkyl group and/or an alkylidene group, and dimethanooctahydronaphthalene substituted by a polar group such as halogen; for example, 6-methyl-1,4:5,8-dimethano-1,4,4a,5,6,7,8,8a-octahydronaphthalene, 6-ethyl-1,4:5,8-dimethano-1,4,4a,5,6,7,8,8a-octahydronaphthalen, 6-ethlidene-1,4:5,8-dimethano-1,4,4a,5,6,7,8,8a-octahydronaphthalen, 6-chloro-1,4:5,8-dimethano-1,4,4a,5,6,7,8,8a-octahydronaphthalen 6-cyano-1,4:5,8-dimethano-1,4,4a,5,6,7,8,8a-octahydronaphthalen, 6-pyridyl-1,4:5,8-dimethano-1,4,4a,5,6,7,8,8a-octahydronaphthalen, and 6-methoxycarbonyl-1,4:5,8-dimethano-1,4,4a,5,6,7,8,8a-octahydronaphthalen; adducts of cyclopentadiene and tetrahydroindene and the like; and trimers to tetramers of cyclopentadiene, for example, 4,9:5,8-dimethano-3a,4,4a,5,8,8a,9,9a-octahydro-1H-benzoindene, and 4,11:5,10:6,9-trimethano-3a,4,4a,5,5a,6,9,9a,10,10a,11,11a-dodecahydro-1H-cyclopentaa nthracene.

In the present invention, other cycloolefins capable of polymerizing by ring-opening reaction can be used in combination as long as they do no damage the object of the present invention. Examples of such a cycloolefin include compounds having a reactive double bond such as cyclopentene, cyclooctene, and 5,6-dihydrodicyclopentadiene.

The saturated norbornene resin to be used in the present invention preferably has a number average molecular weight, which is measured by the gel permeation chromatography (GPC) using toluene as a solvent, generally within the range of 25,000 to 100,000, preferably 30,000 to 80,000, and more preferably, 35,000 to 70,000. If the number average molecular weight is excessively small, physical strength is poor. In contrast, when it is excessively large, manageability during molding becomes poor.

In the present invention, the glass transition temperature (Tg) of a saturated norbomene resin is preferably 100°C to 250°C (both inclusive), more preferably 115°C to 220°C (both inclusive), and further preferably, 130°C to 200°C (both inclusive).

The thermoplastic saturated norbomene resin to be used in the present invention may contain, if desired, various types of additives such as an anti-aging agent, anti-electrostatic agent, and UV ray absorbing agent of phenol and phosphorus series. In particular, a liquid crystal is degraded generally by UV rays. Therefore, a UV ray absorbing agent is preferably added as long as no protective means (for example, a UV ray shield filter stacked) is devised. Examples of such UV ray absorbing agents include benzophenone UV ray absorbing agents, benzotriazole UV ray absorbing agents, and acrylonitirile UV ray absorbing agents. Of them, benzophenone UV ray absorbing agents are preferable. The addition amount thereof is generally 10 to 100,000 ppm and preferably, 100-10,000 ppm. When a sheet is manufactured by the solution casting method, a leveling agent is preferably added to reduce the surface roughness. Examples of such a leveling agent include leveling agents for use in coating such as fluorine nonionic surfactants, and specific acrylic resin leveling agents, and silicone leveling agents. Of them, a leveling agent having a good compatibility with a solvent is preferably used. The addition amount thereof is generally 5 to 50,000 ppm and preferably 10 to 20,000 ppm.

(2) Film formation

These resins can be formed into films either by the solution casting method and the melt-forming method. In the case of a saturated norbomene resin, the melt-forming method is preferably used. In the case of a cellulose acylate resin, both methods are preferably used. Now, the solution casting method and melt-forming method will be explained below.

(Solution casting method)

As a solvent to be used for forming a cellulose acylate film by the solution casting method, not only (a) chlorine solvent but also (b) non-chlorine solvent can be used.

(a) Chlorine solvent

As a chlorine organic solvent, preferably dichloromethane and chloroform may be mentioned. In particularly, dichloromethane is preferable. Needless to say, an organic solvent other than a chlorine organic solvent is mixed. In such a case, dichloromethane must be used in an amount of 50% by mass.

Now, a non-chlorine organic solvent to be used in combination according to the present invention will be explained below. The non-chlorine organic solvent is preferably selected from esters, ketones, ethers, alcohols, and hydrocarbons having 3 to 12 carbon atoms. Esters, ketones, ethers and alcohols may have a ring structure. A compound having two or more of functional groups (that is, -O-, -CO-, and -COO-) of esters, ketones and ethers may also be used as a solvent. More specifically, the solvent may have another functional group such as an alcoholic functional group at the same time. In the case of a solvent having at least two types of functional groups, the solvent whose number of carbon atoms of the solvent falls within the defined range of a compound having either one of the functional groups, may be used. Examples of the ester groups having 3 to 12 carbon atoms include ethyl formate, propyl formate, pentyl formate, methyl acetate, ethyl acetate, and pentyl acetate. Examples of the ketones having 3 to 12 carbon atoms include acetone, methylethyl ketone, diethylketone, diisobutylketone, cyclopentanone, cyclohexanone, and methylcyclohexanone. Examples of the ethers having 3 to 12 carbon atoms include diisopropyl ether, dimethoxymethane, dimethoxyethane, 1,4-dioxane, 1,3-dioxolane, tetrahydrofuran, anisole and phenetole. Examples of the organic solvents having at least two types of functional groups include 2-ethoxyethyl acetate, 2-methoxy ethanol, and 2-butoxy ethanol.

Alcohols preferably used in combination with a chlorine base organic solvent may have straight or branched chain or a ring form. Of them, a saturated aliphatic hydrocarbon is preferable. The hydroxyl group of an alcohol may be any one of primary to tertiary hydroxyl groups. Examples of such an alcohol include methanol, ethanol, 1-propanol, 2-propanol, 1-butanol, 2-butanol, t-butanol, 1-pentanol, 2-methyl-2-butanol and cyclohexanol. Note that a fluorine-alcohol may be used as the alcohol. Examples of the fluorine alcohol include 2-fluoroethanol, 2,2,2-trifluoroethanol, and 2,2,3,3,-tetrafluoro-1-propanol. The hydrocarbon may have a straight chain or a branched chain or ring form. Not only an aromatic hydrocarbon but also an aliphatic hydrocarbon may be used. The aliphatic hydrocarbon may be saturated or unsaturated. Examples of such a hydrocarbon include cyclohexane, hexane, benzene, toluene, and xylene.

The non-chlorine organic solvent to be used in combination with a chlorine organic solvent is not particularly limited and selected from methyl acetate, ethyl acetate, methyl formate, ethyl formate, acetone, dioxolane, dioxane, ketones or acetoacetate having 4 to 7 carbon atoms, and alcohols or hydrocarbons having 1 to 10 carbon atoms. Note that preferable examples of the non-chlorine organic solvent to be used in combination may include methyl acetate, acetone, methyl formate, ethyl formate, methylethyl ketone, cyclopentanone, cyclohexanone, methyl acetoacetate, methanol, ethanol, 1-propanol, 2-propanol, 1-butanol, 2-butanol, cyclohexanol, cyclohexane and hexane.

Examples of preferable combinations of chlorine organic solvents serving as a main solvent in the present invention, include, but not limited to (the unit of the numerals within parentheses is part by mass):

·Dichloromethane/methanol/ethanol/butanol (80/10/5/5)
·Dichloromethane/acetone/methanol/propanol (80/10/5/5)
·Dichloromethane/methanol/butanol/cyclohexane (80/10/5/5)
·Dichloromethane/methyl ethyl ketone/methanol/butanol (80/10/5/5)
·Dichloromethane/acetone/methyl ethyl ketone/ethanol/isopropanol (72/9/9/4/6)
·Dichloromethane/cyclopentanone/methanol/isopropanol (80/10/5/5)
·Dichloromethane/methyl acetate/butanol (80/10/10)
·Dichloromethane/cyclohexanone/methanol/hexane (70/20/5/5)
·Dichloromethane/methyl ethyl ketone/acetone/methanol/ethanol (50/20/20/5/5)
·Dichloromethane/1,3-dioxolane/methanol/ethanol (70/20/5/5)
·Dichloromethane/dioxane/acetone/methanol/ethanol (60/20/10/5/5)
·Dichloromethane/acetone/cyclopentanone/ethanol/isobutanol/cyclohexane (65/10/10/5/5/5)
·Dichloromethane/methyl ethyl ketone/acetone/methanol/ethanol (70/10/10/5/5)
·Dichloromethane/acetone/ethyl acetate/ethanol/butanol/hexane (65/10/10/5/5/5)
·Dichloromethane/methyl acetoacetate/methanol/ethanol (65/20/10/5)
·Dichloromethane/cyclopentanone/ethanol/butanol (65/20/10/5)

(b) Non-chlorine solvent

The non-chlorine organic solvent is preferably a solvent selected from esters, ketones and ethers having 3 to 12 carbon atoms. The esters, ketones and ethers may have a ring form structure. A compound having at least two types of functional groups (-O-, -CO-, and -COO-) of esters, ketones and ethers may also be used as a main solvent. More specifically, the solvent may have another functional group such as an alcoholic functional group at the same time. In the case of a main solvent having at least two types of functional groups, the solvent whose number of carbon atoms of the solvent falls within the defined range of a compound having either one of the functional groups, may be used. Examples of the ester groups having 3 to 12 carbon atoms include ethyl formate, propyl formate, pentyl formate, methyl acetate, ethyl acetate, and pentyl acetate. Examples of the ketones having 3 to 12 carbon atoms include acetone, methylethyl ketone, diethylketone, diisobutylketone, cyclopentanone, cyclohexanone and methylcyclohexanone. Examples of the ethers having 3 to 12 carbon atoms include diisopropyl ether, dimethoxymethane, dimethoxyethane, 1,4-dioxane, 1,3-dioxolane, tetrahydrofuran, anisole and phenetole. Examples of the organic solvents having at least two types of functional groups include 2-ethoxyethyl acetate, 2-methoxy ethanol, and 2-butoxy ethanol.

A preferable solvent for cellulose acylate according to the present invention is a solvent mixture consisting of different 3 or more types of solvents. A first solvent is at least one type of solvent selected from methyl acetate, ethyl acetate, methyl formate, ethyl formate, acetone, dioxolane, and dioxane or a mixture thereof. A second solvent is selected from ketones having 4 to 7 carbon atoms and acetoacetate. A third solvent is selected from alcohols and hydrocarbons having 1 to 10 carbon atoms and more preferable alcohol having 1 to 8 carbon atoms. Note that when the first solvent is a solvent mixture of two types or more solvents, no second solvent is used. The first solvent is further preferably methyl acetate, acetone, methyl formate, ethyl formate or a mixture thereof. The second solvent may be preferably methylethyl ketone, cyclopentanone, cyclohexanone, methyl acetoacetate or a mixture thereof.

An alcohol serving as the third solvent may have a straight chain or a branched chain, or a ring form. Of them, a saturated aliphatic hydrocarbon is preferable. The hydroxyl group of the alcohol may be any one of primary to tertiary hydroxyl groups. Examples of such an alcohol include methanol, ethanol, 1-propanol, 2-propanol, 1-butanol, 2-butanol, t-butanol, 1-pentanol, 2-methyl-2-butanol and cyclohexanol. Note that a fluorine-alcohol may be used as the alcohol. Examples of the fluorine alcohol include 2-fluoroethanol, 2,2,2-trifuloroethanol, and 2,2,3,3,-tetrafluoro-1-propanol. The hydrocarbon may have a straight chain or a branched chain or ring form. Not only an aromatic hydrocarbon but also an aliphatic hydrocarbon may be used. The aliphatic hydrocarbon may be saturated or unsaturated. Examples of such a hydrocarbon include cyclohexane, hexane, benzene, toluene, and xylene. An alcohol and a hydrocarbon serving as the third solvent are not particularly limited and may be used singly or in a mixture of two or more types. Examples of a compound serving as the third solvent include alcohols such as methanol, ethanol, 1-propanol, 2-propanol, 1-butanol, and 2-butanol; cyclohexanol; cyclohexane; and hexane. In particularly, methanol, ethanol, 1-propanol, 2-propanol and 1-butanol may be mentioned.

In the solvent mixture containing three types of solvents mentioned above, the first solvent, the second solvent, and the third solvent may be preferably contained in an amount of 20 to 95% by mass, 2 to 60% by mass, and 2 to 30% by mass, respectively; further preferably, 30 to 90% by mass, 3 to 50% by mass, and 3 to 25% by mass, respectively; and particularly preferably, 30 to 90% by mass, 3 to 30% by mass, and 3 to 15% by mass, respectively. Note that in the case where a first solvent is a solvent mixture and no second solvent is used, it is preferable that the first solvent is contained in an amount of 20 to 90% by mass and the third solvent is contained in an amount of 5 to 30% by mass, and further preferable that the first solvent is contained in an amount of 30 to 86% by mass and the third solvent is contained in an amount of 7 to 25% by mass. The non-chlorine organic solvent to be used in the present invention are described more specifically in "Kokai Gihou" No. 2001-1745, p. 12-16 (published on March 15, 2001, by the Japanese Institute of Invention and Innovation).

Preferable combinations of the non-chlorine organic solvent according to the present invention may include, but not limited to (the unit of the numerals within parentheses is part by mass):

·Methyl acetate/acetone/methanol/ethanol/butanol (75/10/5/5/5)
·Methyl acetate/acetone/methanol/ethanol/propanol (75/10/5/5/5)
·Methyl acetate/acetone/methanol/butanol/cyclohexane (75/10/5/5/5)
·Methyl acetate/acetonelethanol/butanol (81/8/7/4)
·Methyl acetatelacetone/ethanol/butanol (82/10/4/4)
·Methyl acetate/acetone/ethanol/butanol (80/10/4/6)
·Methyl acetate/methyl ethyl ketone/methanol/butanol (80/10/5/5)
·Methyl acetate/acetone/methyl ethyl ketone/ethanol/isopropanol (75/8/8/4/5)
·Methyl acetate/cyclopentanone/methanol/isopropanol (80/10/5/5)
·Methyl acetate/acetone/butanol (85/10/5)
·Methyl acetate/cyclopentanone/acetone/methanol/butanol (60/15/15/5/5)
·Methyl acetate/cyclohexanone/methanol/hexane (70/20/5/5)
·Methyl acetate/methyl ethyl ketone/acetone/methanol/ethanol (50/20/20/5/5)
·Methyl acetate/1,3-dioxolane/methanol/ethanol (70/20/5/5)
·Methyl acetate/dioxane/acetone/methanol/ethanol (60/20/10/5/5)
·Methyl acetate/acetone/cyclopentanone/ethanol/isobutanol/cyclohexane (65/10/10/5/5/5)
·Methyl formate/methyl ethyl ketone/acetone/methanol/ethanol (50/20/20/5/5)

·Methyl formate/acetone/ethyl acetate/ethanol/butanol/hexane (65/10/10/5/5/5)
·Acetone/methyl acetoacetate/methanol/ethanol (65/20/10/5)
·Acetone/cyclopentanone/ethanol/butanol (65/20/10/5)
·Acetone/1,3-dioxolane/ethanol/butanol (65/20/10/5)
·1,3-Dioxolane/cyclohexanone/methyl ethyl ketone/methanol/butanol (55/20/10/5/5/5)

After dissolution, a part of solvent is further added and dissolution may be preferably performed in multiple steps as described below (the unit of the numerals within parentheses is part by mass).

· A cellulose acylate solution is prepared by adding methyl acetate/acetone/ethanol/butanol (81/8/7/4), filtered and concentrated, and thereafter 2 parts by mass of butanol is additionally added.
· A cellulose acylate solution is prepared by adding methyl acetatelacetone/ethanol/butanol (81/10/4/2), filtered and concentrated, and thereafter 4 parts by mass of butanol is additionally added.
· A cellulose acylate solution is prepared by adding methyl acetate/acetone/ethanol (84/10/6), filtered and concentrated, and thereafter 5 parts by mass of butanol is additionally added.

In the present invention, in the case where either a chlorine solvent or a non-chlorine solvent is used, it is preferable that cellulose acylate is dissolved in a solvent in an amount of 10 to 40% by mass, more preferably 13 to 35% by mass, and particularly, 15 to 30% by weight. Prior to the dissolution, cellulose acylate is preferably swollen at 0°C to 50°C for 0.1 to 100 hours. Note that various types of additives may be added before, in the middle of or after the swelling step and furthermore, after the following dissolution step while cooling or even after the step.

In the present invention, to dissolve cellulose acylate, a cooling and heating method may be employed. As the cooling and heating method, use may be made of methods described in Japanese Patent Application Laid-Open Nos. 11-323017, 10-67860, 10-95854,10-324774, and 11-302388. More specifically, a solvent and cellulose acylate are mixed and swollen and the resultant mixture is dissolved by means of screw-form kneader equipped with a cooling jacket.

The dope of the present invention is preferably concentrated and filtered in accordance with the method specifically described in "Kokai Gihou" No. 2001-1745, p. 25 (published on March 15, 2001, by the Japanese Institute of Invention and Innovation). (Melt-forming method)

(a) Cellulose acylate film

[Dehydration]

Resin particles may be used as they are; however, they are preferably formed into pellets and then used in order to reduce difference in thickness of the formed film. The resin is controlled in moisture content to 1% or less, more preferably, 0.5% or less and cast in a hopper of a molten extruder. At this time, the hopper is controlled at a temperature of Tg-50°C to Tg+30°C (both inclusive), more preferably Tg-40°C to Tg+ 10°C (both inclusive), and further preferably Tg-30°C to Tg (both inclusive). In this manner, re-adsorption of water within the hopper can be controlled to facilitate the hydration efficiency.

[Knead extruding]

Kneading while melting is performed at a temperature of 120°C to 250°C (both inclusive), more preferably, 140°C to 220°C (both inclusive), and further preferably, 150°C to 200°C (both inclusive). At this time, the melting is performed at a constant temperature or controlled at several steps. Preferably kneading time is 2 to 60 minutes (both inclusive), more preferably 3 to 40 minutes (both inclusive) and further preferably, 4 to 30 minutes (both inclusive). Furthermore, kneading is preferably performed by supplying an inert gas flow (nitrogen) to the molten extruder or in an extruder equipped with a vent while evacuating into vacuum.

[Cast]

The resin molten is passed through a gear pump. After the pulse of the extruder is removed, the resin is filtered through a metal mesh filter and supplied to a T-form die equipped to the downstream and extruded onto a cooling drum from the die in sheet form. A single layer or a plurality of layers may be extruded by use of a multi-manifold die or a feed block die. The difference in thickness in the width direction can be controlled by controlling the intervals between the lips of the die.

Thereafter, the resin is extruded on a casting drum. At this time, the adhesiveness of the sheet molten-extruded

EP 1 773 572 B1

to the casting drum is preferably increased by an electrostatic power application method, air knife method, air chamber method, vacuum nozzle method, or touch-roll method. Such a method of improving the -adhesiveness may be applied to the whole or a part surface of the molten extruded sheet.

The casting drum is controlled at a temperature of 60°C to 160°C (both inclusive), more preferably 70°C to 150°C (both inclusive), and further preferably, 80°C to 150°C (both inclusive). Thereafter, the sheet is removed from the casting drum, passed though a nip roll and rolled up. The sheet is rolled up at a rate of 10 m/minute to 100 m/minute (both inclusive), more preferably 15 m/minute to 80 m/minute (both inclusive) and further preferably 20 m/minute to 70 m/minutes (both inclusive).

The width of the formed sheet is 1 to 5 m (both inclusive), further preferably 1.2 m to 4 m (both inclusive) and further preferably 1.3 m to 3 m (both inclusive). The thickness of the film before drawn thus obtained is preferably 30 $\mu$m to 400 $\mu$m (both inclusive), more preferably 40 $\mu$m to 300 $\mu$m (both inclusive), and more preferably 50 $\mu$m to 200 $\mu$m (both inclusive).

The sheet thus obtained is preferably rolled up after both ends thereof are trimmed. The part trimmed off is crushed and processed, or, subjected to a granulation process, a de-polymerization and re-polymerization process, as needed and then reused as a raw material for the same-type film or a raw material for a different-type film. Also, it is preferable to apply a laminate film to at least one surface of the sheet before rolled up, in view of preventing flaw formation.

(b) Saturated norbomene film

Pellets of a saturated norbomene resin are put into a molten extruder, and dehydrated at a temperature of 100°C to 200°C (both inclusive) for 1 minute to 10 hours (both inclusive), and thereafter kneaded and extruded. The kneading can be performed by use of a one-shaft and two-shaft extruder.

The film is formed in the same manner as in a cellulose acylate film except that melting is performed at a temperature of 240 to 320°C, more preferably 250 to 310°C, and further preferably 260 to 300°C and the temperature of a casting drum is set at 80 to 170 °C, more preferably 90 to 160°C (both inclusive), and further preferably 100 to 150°C (both inclusive).

The difference in thickness of a thermoplastic film formed in the aforementioned method both in the longitudinal direction and in the transverse direction falls within 0% to 2% (both inclusive), more preferably 0% to 1.5% (both inclusive), and further preferably 0% to 1% (both inclusive). The film is drawn in accordance with the aforementioned method to obtain thermoplastic film of the present invention.

(3) Processing of thermoplastic film

The two-axially drawn thermoplastic film may be used alone, in combination with a polarizing board, or by mounting a liquid crystal layer, a layer whose refractivity has been controlled (low refractive layer), and a hard coat layer on the film in accordance with the following steps.

(Surface treatment)

A thermoplastic film can be improved in adhesiveness to a functional layer (e.g. undercoating layer and backing layer) by applying a surface treatment such as glow discharge treatment, UV ray irradiation treatment, corona treatment, flame treatment, or acid or alkali treatment. The glow discharge treatment may be performed by applying a low temperature plasma generated under a low-pressure gas at 10-3 to 20 Torr or a plasma treatment under the atmospheric pressure. The plasma excited gas refers to a gas capable of being excited by a plasma under the aforementioned conditions. Examples of such a gas include argon, helium, neon, krypton, xenon, nitrogen, carbon dioxide, flons such as tetrafluoromethane, and mixtures thereof. They are described more specifically in "Kokai Gihou" No. 2001-1745, p. 30-32 (published on March 15, 2001, by the Japanese Institute of Invention and Innovation). In the plasma treatment performed under the atmospheric pressure recently focused upon, for example, an irradiation energy of 20 to 500 Kgy under 10 to 1000 Kev, and more preferably 20 to 300 Kgy under 30 to 500Kev may be used.

Of them, particularly preferably, alkali-saponification treatment is used in the cellulose acylate film, and glow discharge treatment, corona treatment, and flame treatment are used in the case of the saturated norbornene film.

The alkali-saponification treatment may be performed by soaking a film into a saponification solution (soaking method) or applying a saponification solution to a film (coating method). In the soaking method, the alkali-saponification treatment is performed by soaking a film in a vessel containing an aqueous solution of NaOH or KOH, pH 10-14 and heated at 20°C to 80°C for 0.1 to 10 minutes, neutralizing, washing, and dehydrating the film.

In the coating method, a dip coating method, curtain coating method, extrusion-coating method, bar-coating method and E-type coating method may be used. The solvent to be used in a coating solution for alkaline saponification treatment is preferably a saponification solvent which has a good wettability and is capable of maintaining the surface

14

state in a good state without forming irregularity on the transparent substrate, since the saponification solution is applied to a transparent substrate. Examples of such a solvent include alcohol solvents. Isopropyl alcohol is particularly preferable. Alternatively, an aqueous solution of a surfactant may be used as a solvent. As an alkali of the alkaline saponification coating solution, an alkali soluble in the aforementioned solvent is preferable, and KOH and NaOH are further preferable. The pH of the saponification coating solution is preferably 10 or more, and further preferably, 12 or more. Alkaline saponification is preferably performed under the reaction conditions such as room temperature for 1 second to 5 minutes (both inclusive), further preferably, for 5 seconds to 5 minutes (both inclusive), and particularly preferably, 20 seconds and 3 minutes (both inclusive). After the alkaline saponification reaction, the surface treated with the saponification solution is washed with water or acid, and thereafter rinsed with water. The coating saponification treatment and coating film removal process from an orientation film (described later) can be continuously performed. Therefore, the number of steps can be reduced. As these saponification methods, those described in Japanese Patent Application Laid-Open No. 2002-82226 and WO 02/46809 may be mentioned.

It is also preferable that an undercoating layer is provided to adhere to a functional layer. The undercoating layer may be formed by coating after the aforementioned surface treatment is completed or without such treatment. Details with respect to the undercoating layer are specifically described in "Kokai Gihou" No. 2001-1745, p. 32 (published on March 15, 2001, by the Japanese Institute of Invention and Innovation).

These surface treatments and undercoating steps can be integrated in the last of a film formation process or performed independently, or performed during the step of attaching a functional layer (described later).

(Attachment of functional layer)

It is preferable that the thermoplastic film of the present invention may be used in combination with a functional layer specifically described in "Kokai Gihou" No. 2001-1745, p. 32-45 (published on March 15, 2001, by the Japanese Institute of Invention and Innovation). Of them, a polarizing layer (polarizing board), an optical compensation layer (optical compensation sheet) and an anti-reflective layer (anti-reflective film) are preferably attached.

I. Attachment of polarizing layer (formation of polarizing board)

(I-1) Material

At present, a commercially available polarizing layer is generally formed by soaking a drawn polymer in a vessel containing a solution of iodine or a dichromatic dye, thereby allowing iodine or the dichromatic dye to penetrate into a binder. As the polarizing film, a coated polarizing film represented by a product manufactured by Optiva Inc. can be used. The iodine and dichromatic dye of the polarizing film are oriented in the binder to produce polarizing properties. Examples of such a dichromatic dye used herein include azo series pigments, stylbene series pigments, pyrazolone series pigments, triphenylmethane series pigments, quinoline series pigments, oxazine series pigment, thiazine series pigment, and anthraquinone series pigment. The dichromatic dye is preferably water soluble. The dichromatic dye preferably has a hydrophilic substituent (e.g., sulfo, amino, hydroxyl). Examples of the dichromatic dye include compounds described in "Kokai Gihou" No. 2001-1745, p. 58 (published on March 15, 2001, by the Japanese Institute of Invention and Innovation).

The binder of the polarizing film can employ both a self-linkable polymer and a polymer crosslinked by a crosslinking agent and combinations thereof. Examples of such a binder include a methacrylate copolymer, styrene copolymer, polyolefin, polyvinyl alcohol, modified polyvinyl alcohol, poly(N-methylolacrylamide), polyester, polyimide, vinyl acetate copolymer, carboxymethylcellulose, and polycarbonate described, for example, in Japanese Patent Application Laid-Open No. 8-338913, Paragraph [0022]. A silane coupling agent can be used as a polymer. Water soluble polymers (such as poly(N-methylolacrylamide), carboxymethylcellulose, gelatin, polyvinyl alcohol, modified polyvinyl alcohol) are preferable, and gelatin, polyvinyl alcohol and modified polyvinyl alcohol are further preferable. A polyvinyl alcohol and a modified polyvinyl alcohol are the most preferable. A combination of two types of polyvinyl alcohols or modified polyvinyl alcohols different in polymerization degree is particularly preferable. The degree of saponification of a polyvinyl alcohol is preferably 70 to 100%, and further preferably, 80 to 100%. The degree of polymerization of a polyvinyl alcohol is preferably 100 to 5,000. A modified polyvinyl alcohol is described in Japanese Patent Application Laid-Open Nos. 8-338913, 9-152509, and 9-316127. At least two types of polyvinyl alcohols and modified polyvinyl alcohols may be used in combination.

The lowermost limit of the thickness of a binder is preferably 10 $\mu$m. With respect to the uppermost limit of the binder, in view of light leakage from a liquid crystal display device, the thinner the better. Therefore, the uppermost limit is preferably thinner than that of a commercially available polarizing board (about 30 $\mu$m) at present, preferably 25 $\mu$m or less, and further preferably, 20 $\mu$m or less.

The binder of the polarizing film may be crosslinked. Alternatively, a polymer or a monomer having a crosslinkable functional group may be mixed in the binder, or the crosslinkable functional group may be added to the binder polymer itself. Crosslinking can be performed by light, heat or pH change, with the result that a binder having a crosslink structure can be formed. As to crosslinking agents, there is a description in the specification of reissued US Patent No. 23297. Furthermore, boron compounds (e.g., boric acid, borax) can be used as a crosslinking agent. The addition amount of a crosslinking agent to a binder is preferably 0.1 to 20% by mass based on the amount of the binder. This is because the orientation properties of a polarizing device and the moisture resistance and heat resistance of a polarizing film becomes satisfactory.

Even after completion of the crosslinking reaction, a crosslinking agent preferably remains unreacted in an amount of not more than 1.0% by mass, and further preferably not more than 0.5% by mass. By virtue of this, the weather resistance is improved.

(I-2) Drawing of a polarizing layer

After the polarizing film is drawn (drawing method) or rubbed (rubbing method), it is preferably stained with iodide or a dichromatic dye.

In the drawing method, a drawing rate is preferably 2.5 to 30.0 folds, and further preferably 3.0 to 10.0 folds. The drawing is performed by dry drawing in the air or by wet drawing while soaking in water. The drawing rate in the dry drawing is preferably 2.5 to 5.0 folds. The drawing rate in the wet drawing is preferably 3.0 to 10.0 folds. The drawing may be performed in parallel to an MD direction (parallel drawing) or in a slanting direction (slant drawing). These drawing methods may be performed in a single operation or in several operations. If drawing is performed in several operations, drawing can be performed more uniformly even if the drawing rate is high.

a) Parallel drawing method

Before drawing, a PVA film is swollen. The degree of swelling is 1.2 to 2.0 folds (in terms of a weight ratio of before to after swelling). Thereafter, the PVA film is continuously transferred by the help of a guide roll to a bath containing an aqueous medium or a staining bath dissolving a dichromatic dye, in which the PVA film is drawn at a temperature of 15 to 50°C, particularly, 17 to 40°C. The PVA film is held by two pairs of nip rolls and drawn by controlling the transfer rate of the latter nip roll arranged downstream to be faster than the former roll. The drawing rate is determined based on the ratio in length of the film after drawing to before drawing (hereinafter the same). In consideration of the functional effects, a preferable drawing rate is 1.2 to 3.5 folds, particularly, 1.5 to 3.0 folds. Thereafter, the film is dehydrated at 50°C to 90°C to obtain a polarizing film.

(b) Slant drawing

The slant drawing can be performed by use of a drawing method of using a tenter extending in a slant direction described in Japanese Patent Application Laid-Open No. 2002-86554. Since the drawing of this type is performed in the air, a film must be allowed to get wet with water in advance to facilitate drawing. A preferable water content is 5% to 100% (both inclusive), and more preferably 10% to 100% (both inclusive).

The temperature during a drawing operation is preferably 40°C to 90°C (both inclusive), and more preferably 50°C to 80°C. The humidity is 50% rh to 100% rh (both inclusive), more preferably 70% rh to 100% rh, and further preferably 80% rh to 100% rh (both inclusive). The transfer speed in the longitudinal direction is preferably 1 m/minute or more, and more preferably, 3 m/minute or more.

After completion of drawing, the film is dehydrated at 50°C to 100°C (both inclusive), and more preferably, 60°C to 90°C(both inclusive) for 0.5 to 10 minutes (both inclusive) and more preferably 1 to 5 minutes (both inclusive).

Angle of the absorption axis of the polarizing film thus obtained is preferably 10 to 80 degrees, more preferably 30 to 60 degrees, further preferably, substantially 45 degrees (40 to 50 degrees).

(I-3) Adhesion

The cellulose acylate film obtained after saponification and the polarizing layer prepared by drawing are adhered to prepare a polarizing board. They are adhered such that the angle between the solution-casting axis of the cellulose acylate film and the drawing axis of the polarizing board becomes 45 degrees.

The adhesive agent is not particularly limited and includes a PVA resin (including a modified PVA with an acetoacetyl group, sulfonate group, carboxyl group, and oxyalkylene group), an aqueous solution of a boron compound. Of them, a PVA resin is preferable. The thickness of the adhesive agent layer after dry is preferably 0.01 to 10 $\mu$m, and particularly preferably, 0.05 to 5 $\mu$m.

With respect to the polarizing board thus obtained, the higher the light permeability, the better; and the higher the polarization degree the better. The permeability of the polarizing board against light of a wavelength of 550 nm preferably falls within the range of 30 to 50%, further preferably 35 to 50%, and most preferably 40 to 50%. The degree of polarization against light of a wavelength of 550 nm preferably falls within the range of 90 to 100%, further preferably 95 to 100%, and most preferably 99 to 100%.

When the polarizing board thus obtained is layered with a $\lambda/4$ board, circular polarization can be attained. In this case, they are layered such that the angle formed between the absorption axis of the polarizing board with the delay-phase axis of $\lambda/4$ board become 45 degrees. At this time, $\lambda/4$ board is not particularly limited and preferably has the dependency of wavelength, more specifically, the lower the retardation, the lower the wavelength. Furthermore, it is preferable to use a polarizing film preferably having an absorption axis slanted at an angle of 20 to 70 degrees with respect to the longitudinal direction and a $\lambda/4$ board consisting of an optically anisotropic layer formed of a liquid crystal compound.

(II) Attachment of optical compensation layer (formation of optical compensation sheet)

An optical compensation layer is used for compensating a liquid crystal compound in a liquid crystal cell displaying black in a liquid crystal display device, and manufactured by forming an orientation film on a cellulose acylate film and further attaching an optical anisotropic layer.

(II-1) Orientation film

An orientation film is formed on the cellulose acylate film whose surface has been treated. This film has a function of regulating the orientation of liquid crystalline molecules. However, if the orientation state is fixed after the liquid crystal compound is oriented - this is a function of the orientation film - the orientation film is no longer necessary as a constitutional element of the present invention. More preferably, the polarizing board of the present invention can be manufactured by transferring only an optical anisotropic layer whose orientation state has been fixed, on the orientation film, to a polarizer.

The orientation film can be provided by rubbing an organic compound (preferably, a polymer), slant deposition of an inorganic compound, forming a layer having micro grooves, or accumulation of an organic compound (e.g., $\omega$-tricosanoic acid, dioctadecyl methyl ammonium chloride, methyl stearate) by the Langmuir-Blodgett method (LB film). Furthermore, an orientation film is known whose orientation function is produced by application of en electric field, magnetic field or light.

The orientation film is preferably formed by rubbing a polymer. The polymer to be used in the orientation film fundamentally has a molecular structure having a function of orienting liquid crystalline molecules.

In the present invention, in addition to a function of orienting liquid crystalline molecules, it is preferable that a side chain having a crosslinkable functional group (e.g., double bond) is bound to the main chain or a crosslinkable functional group having a function of orienting liquid crystalline molecules is introduced in a side chain of the polymer.

As the polymer to be used in the orientation film, use can be made of not only a crosslinkable polymer by itself but also a polymer crosslinked by the aid of a crosslinking agent, and also combinations thereof. Examples of such a polymer include methacrylate copolymer, styrene copolymer, polyolefin, polyvinyl alcohol, modified polyvinyl alcohol, poly(N-methylolacrylamide), polyester, polyimide, vinyl acetate copolymer, carboxymethylcellulose, and polycarbonate described, for example, in Japanese Patent Application Laid-Open No. 8-338913, Paragraph [0022]. A silane coupling agent can be used as a polymer. Water soluble polymers (such as poly(N-methylolacrylamide), carboxymethylcellulose, gelatin, polyvinyl alcohols, modified polyvinyl alcohols) are preferable. Gelatin, a polyvinyl alcohol and a modified polyvinyl alcohol are further preferable. A polyvinyl alcohol and a modified polyvinyl alcohol are the most preferable. A combination of two types of polyvinyl alcohols or modified polyvinyl alcohols different in polymerization degree is particularly preferable. The degree of saponification of a polyvinyl alcohol is preferably 70 to 100%, and further preferably 80 to 100%. The degree of polymerization of a polyvinyl alcohol is preferably 100 to 5,000.

The side chain having a function of orienting liquid crystalline molecules generally has a hydrophilic group as a functional group. Examples of such a functional group can be determined depending upon the type of liquid crystalline molecules and the orientation state to be required. More specifically, a modifying group of modified polyvinyl alcohol can be introduced by copolymerization modification, chain transfer modification or block polymerization modification. Examples of such a modifying group include a hydrophilic groups (such as carboxylic acid group, sulfonic acid group, phosphonic acid group, amino group, ammonium group, amide group, and thiol group), hydrocarbon groups having 10 to 100 carbon atoms, hydrocarbon groups substituted with a fluorine atom, thioether groups, polymerizable groups (unsaturated polymerizable group, epoxy group, azirinidyl group), and alkoxysilyl groups (trialkoxy, dialkoxy, monoalkoxy). These modified polyvinyl alcohols are, for example, described in Japanese Patent Application Laid-Open No. 2000-155216, paragraphs [0022]-[0145], and Japanese Patent Application Laid-Open No. 2002-62426, paragraphs [0018]-[0022].

The polymer of an orientation film can be copolymerized with a multi-functional group contained in an optical anisotropic layer by binding a side chain having a crosslinkable functional group to the main chain of the polymer of the orientation film or by introducing a crosslinkable functional group into a side chain having a function of orienting liquid crystalline molecules. As a result, not only a multifunctional monomer and another multifunctional monomer, but also a polymer of an orientation film and another polymer of the orientation film, as well as the multi-functional monomer and the polymer of the orientation film are tightly bonded by a covalent bond. Therefore, by introducing a crosslinkable functional group into the orientation-film polymer, the strength of an optical compensation sheet can be significantly improved.

The crosslinkable functional group of the orientation-film polymer preferably contains a polymerizable group in the same manner as in the multifunctional monomer. Examples of such a crosslinkable functional group are described in Japanese Patent Application Laid-Open No. 2000-155216, paragraphs [0080]-[0100]. Unlike the crosslinkable functional group, the orientation-film polymer can be crosslinked by a crosslinking agent.

Examples of such a crosslinking agent include compounds starting functioning by activating an aldehyde, N-methylol compound, a dioxane derivative, and a carboxyl group; active vinyl compounds; active halogen compounds; isooxasol; and dialdehyde starch. At least two types of crosslinking agents may be used in combination. Specific compounds are described in Japanese Patent Application Laid-Open No. 2002-62426, paragraphs [0023]-[0024]. Aldehyde having a high reaction activity, in particular, glutaraldehyde, is preferable.

The addition amount of a crosslinking agent is preferably 0.1 to 20% by mass, and further preferably, 0.5 to 15% by mass, based on the amount of a polymer. The amount of a crosslinking agent remaining unreacted in the orientation film is preferably not more than 1.0% by mass, and further preferably, not more than 0.5% by mass. By virtue of this regulation, the orientation film can acquire sufficient durability without reticulation, even if it is used for a long time in a liquid crystal display device or allowed to stand still under a high-temperature and high-humid atmosphere for a long time.

The orientation film can be formed by applying the aforementioned polymer serving as an orientation film forming material onto a transparent support containing a crosslinking agent, dehydrating it with heat (crosslinking), and subjecting to a rubbing treatment. The crosslinking reaction can be performed in any time after coating on the transparent support as mentioned above. When a water-soluble polymer such as a polyvinyl alcohol is used as an orientation film forming material, the coating solution is preferably a solution mixture of an organic solvent (e.g., methanol) having a defoaming function and water. The ratio of water to methanol is preferably 0:100 to 99:1, and further preferably, 1:100 to 91:9 in terms of mass. By virtue of this, generation of foams can be suppressed and the defections of the surface of the orientation film of the optical anisotropic layer significantly decrease.

Preferable examples of a coating method for an orientation film include the spin coating method, dip coating method, curtain-coating method, extrusion-coating method, rod coating method, and roll coating method. In particular, the rod coating method is preferable. The thickness of the film after dry is preferably 0.1 to 10 $\mu$m. Dehydration with heating can be performed at a temperature of 20°C to 110°C. To form a sufficient amount of crosslinking, dehydration is preferably performed at a temperature of 60 to 100°C, and particularly preferably, 80 to 100°C. Heating may be performed for 1 minute to 36 hours; however, preferably 1 to 30 minutes. The pH is preferably set at an appropriate value for the crosslinking agent to be used. When glutaraldehyde is used, pH is preferably 4.5 to 5.5, and particularly preferably 5.

The orientation film is provided on the transparent support or the undercoating layer mentioned above. The orientation film can be obtained by crosslinking a polymer layer as mentioned above, followed by rubbing the surface of the polymer layer.

To the rubbing treatment, a method widely employed in a liquid crystal orientation treatment step for LCDs can be applied. More specifically, orientation is obtained by rubbing the surface of the orientation film with paper, gauze, felt, rubber, nylon fiber, or polyester fiber in the same direction. Generally, the rubbing treatment is performed by rubbing the surface several times with a piece of cloth onto which fibers of uniform length and thickness are planted.

Industrially, rubbing can be performed by bringing a rubbing roll in rotation into contact with a film having a polarizing layer attached thereto, while transferring. In this case, each of the roundness, cylindricity, and eccentricity of the rubbing roll is preferably 30 $\mu$m or less. The rubbing roll rubs the film preferably with a rubbing angle of 0.1 to 90 degrees. However, as described in Japanese Patent Application Laid-Open No. 8-160430, a stable rubbing can be performed by rolling up the film around the rubbing roll more than one round. The transfer rate of the film is preferably 1 to 100 m/min. It is preferable that the rubbing angle is appropriately selected from the range of 0 to 60 degrees. When the rubbed film is used in a liquid crystal display device, the rubbing angle is preferably 40 to 50 degrees and particularly preferably 45 degrees.

The thickness of the orientation film thus obtained preferably falls within the range of 0.1 to 10 $\mu$m.

Then, the liquid crystalline molecules of the optical anisotropic layer are oriented on the orientation film. Thereafter, if necessary, the orientation-film polymer is reacted with a multi-functional monomer contained in the optical anisotropic layer or the polymers of the orientation film are mutually crosslinked with a crosslinking agent.

The liquid crystalline molecules to be used in the optical anisotropic layer include rod-shape liquid crystalline molecules and discotic liquid crystalline molecules. The rod-shape liquid crystalline molecules and discotic liquid crystalline molecules may be polymer liquid crystal or low-molecular liquid crystal. Further, low molecular liquid crystalline molecules, which are crosslinked and no longer mesomorphism, are also included.

(II-2) Rod-shape liquid crystalline molecules

Preferably examples of the rod-shape liquid crystalline molecules include azomethines, azoxys, cyanobiphenyls, cyanophenylesters, benzoates, cyclohexanecarboxylate phenyl esters, cyanophenyl cyclohexanes, cyano-substituted phenylpyrimidines, alkoxy-substituted phenylpyrimidines, phenyldioxanes, trans, and alkenylcyclohexyl benzonitriles.

Note that metal complexes are also included in the rod-shape liquid crystalline molecules. Furthermore, a liquid crystal polymer containing the rod-shape liquid crystalline molecules in a repeat unit can be used as the rod-shape liquid crystalline molecules. In other words, the rod-shape liquid crystalline molecules may be bound to a (liquid crystal) polymer.

The rod-shape liquid crystalline molecules are described in Survey of Chemistry, Quarterly Vo. 22, "Chemistry of Liquid Crystal" (1994), edited by the Chemical Society of Japan, Chapters 4, 7 and 11; and "Liquid crystal device handbook", edited by the Japan Society for the Promotion of Science, the 142nd committee, Chapter 3.

The birefringence of the rod-shape liquid crystalline molecules preferably falls within the range of 0.001 to 0.7. The rod-shape liquid crystalline molecules preferably have a polymerizable group to fix its orientation state. As a polymerizable group, a radical polymerizable unsaturated group or a cationic polymerizable group is preferable. Specific examples thereof are a polymerizable group and a polymerizable liquid crystal compound described, for example, in Japanese Patent Application Laid-Open No. 2002-62427, paragraphs [0064] to [0086].

(II-3) Discotic liquid crystalline molecules

Examples of the discotic liquid crystalline molecules include benzene derivatives described in the report of C. Destrade et al. (Mol. Cryst. Vol. 71, page 111 (1981); torxen derivatives described in the report of C. Destrade et al. (Mol. Cryst. Vol. 122, page 141 (1985); Physicslett, A, Vol. 78, page 82 (1990); cyclohexane derivatives described in the report of B. Kohne et al., (Angew. Chem. Vol. 96, page 70(1984); and azacrown and phenylacetylene macrocycles described in the report of J. M. Lehn et al. (J. Chem. Commun., page 1794 (1985), and J. Zhang et al. (J. Am. Chem. Soc. Vol. 116, page 2655 (1994).

The discotic liquid crystalline molecules also include compounds showing mesomorphism, which is a structure where a straight-chain alkyl group, alkoxy group, substituted benzoyloxy group are radially substituted for side chains of a mother core of the molecule. The compound preferably has a molecule or a molecule assembly, which has a rotation symmetry and can impart a predetermined orientation. In an optical anisotropic layer formed by discotic liquid crystalline molecules, a compound finally forming the optical anisotropic layer is not necessary constituted by discotic liquid crystalline molecules. The compound may be a compound constituted by low molecular weight discotic liquid crystalline molecules having a group reactive to heat or light are polymerized or crosslinked with the help of heat or light and changed into a polymer. Such a polymer losing mesomorphism is also included. Preferable examples of such a discotic liquid crystal compound are described in Japanese Patent Application Laid-Open No. 8-50206. Polymerization of discotic liquid crystalline molecules is described in Japanese Patent Application Laid-Open No. 8-27284.

To fix discotic liquid crystalline molecules by polymerization, it is necessary to bind a polymerizable group as a substituent to a discotic core of the discotic liquid crystalline molecule. The compound preferably has a discotic core capable of binding to the polymerizable group via a linkage group. By virtue of this, the orientation state can be maintained during a polymerization reaction. Examples of such a compound are described in Japanese Patent Application Laid-Open No. 2000-155216, Paragraphs [0151] to [0168].

In a hybrid orientation, the angle between the longitudinal axis (disc surface) of a discotic liquid crystalline molecule and the surface of polarizing film increases or decreases with an increase of the distance from the surface of the polarizing film in a depth direction of the optical anisotropic layer. The angle preferably decreases with an increase of the distance. Furthermore, the angle may change. To describe more specifically, the angle may continuously increase, continuously decrease, intermittently increase, intermittently decrease, continuously increase and decrease, or intermittently increase and decrease. The "intermittent change" means that there is a region in the middle in the thickness direction where an angle of inclination does not change. Even if there is a region where the angle does not change, it is satisfactory as long as the angle may increase or decrease as a whole. Furthermore, the angle preferably changes continuously.

The average direction of the longitudinal axes of discotic liquid crystalline molecules at the side of the polarizing film can be controlled generally by selecting a discotic liquid crystalline molecule or a material for the orientation film, or selecting a rubbing method. Furthermore, the direction of the longitudinal axis (disc surface) of the discotic liquid crystalline molecules at the surface side (near the air) can be adjusted by selecting the type of discotic liquid crystalline molecules or additives to be used together with the discotic liquid crystalline molecules. Examples of the additives to be used together with the discotic liquid crystalline molecules include a plasticizer, surfactant, polymerizable monomer, and polymerizable polymer. The degree of change in the orientation direction of the longitudinal axis can be adjusted by selecting an additives used together with the liquid crystalline molecule as mentioned above.

(II-4) Other compositions for optical anisotropic layer

If a plasticizer, surfactant, polymerizable monomer and the like are used together with liquid crystalline molecules, uniformity of coated film and strength of a film, orientation of liquid crystalline molecules, and the like can be improved. They preferably have compatibility with the liquid crystalline molecules and capable of changing the angle of inclination or giving no damage on orientation.

Examples of polymerizable monomer include a radical polymerizable and cationic polymerizable compounds. Preferably, a multifunctional radical polymerizable monomer co-polymerizable with a liquid crystal compound containing a polymerizable group is favorable. Examples of such a compound are described in Japanese Patent Application Laid-Open No. 2002-296423, Paragraphs [0018] to [0020]. The addition amount of such a compound falls within the range of 1 to 50% by mass, preferably 5 to 30% by mass, based on the amount of the discotic liquid crystalline molecules.

As a surfactant, compounds hitherto known in the art may be mentioned. In particular, a fluorine compound is preferable. Examples of such a compound are described in Japanese Patent Application Laid-Open No. 2002-330725, Paragraphs [0028] to [0056].

The polymer to be used together with the discotic liquid crystalline molecules is preferably capable of changing the angle of inclination of the discotic liquid crystalline molecules.

Examples of such a polymer include cellulose esters. Preferable examples of such cellulose esters are described in Japanese Patent Application Laid-Open No. 2000-155216, Paragraph [0178]. The polymer is added not to damage the orientation of the liquid crystalline molecules. Therefore, the addition amount of the polymer preferably falls within the range of 0.1 to 10% by mass, and more preferably, 0.1 to 8% by mass based on the amount of the liquid crystalline molecules.

A transient temperature of the discotic liquid crystalline molecules from a discotic nematic liquid phase -solid phase is preferably 70 to 300°C, and further preferably, 70 to 170°C.

(II-5) Formation of optical anisotropic layer

The optical anisotropic layer is formed by applying a coating solution containing liquid crystalline molecules, if necessary, a polymerization initiation agent (described later) and optional components, onto the orientation film.

As a solvent used for preparing the coating solution, an organic solvent is preferably used. Examples of such an organic solvent include amides (e.g., N, N-dimethylformamide), sulfoxides (e.g., dimethylsulfoxide), hetero-ring compounds (e.g., pyridine), hydrocarbons (e.g., benzene, hexane), alkyl halides (e.g., chloroform, dichloromethane, tetrachloroethane), esters (e.g., methyl acetate, butyl acetate), ketone (e.g., acetone, methylethyl ketone), and ethers (e.g., tetrahydrofuran, 1,2-dimethoxyethane). An alkyl halide and a ketone are preferable. At least two types of organic solvents may be used in combination.

The coating solution may be applied by a known method (e.g., wire bar coating method, extrude-coating method, direct gravure coating method, reverse gravure coating method, and die-coating method).

The thickness of the optical anisotropic layer is preferably 0.1 to 20 $\mu$m, further preferably 0.5 to 15 $\mu$m, and most preferably 1 to 10 $\mu$m.

(II-6) Fixation of orientation state of liquid crystalline molecules

Liquid crystalline molecules oriented can be fixed while maintaining its orientation state. Such a fixation is preferably performed by a polymerization reaction. The polymerization reaction includes a thermal polymerization reaction using a thermal polymerization initiation agent and a photo polymerization reaction using a photo polymerization initiation agent. Of them, the photo polymerization reaction is preferable.

Examples of the photo polymerization initiation agent include an $\alpha$-carbonyl compound (described in US patent Nos. 2367661 and 2367670), acyloin ether (described in US patent No. 2448828), $\alpha$-hydrocarbon substituted aromatic acyloin compound (described in US patent No. 2722512), polynuclear quinone compound (described in US patent Nos. 3046127 and 2951758), a combination of triaryl imidazole dimer and p-aminophenyl ketone (described in US patent No. 3549367), acridine and phenazine compounds (described in Japanese Patent Application Laid-Open No. 60-105667 and US Patent No. 4239850), and oxadiazole compound (described in US patent No. 4212970).

The amount of the photo-polymerization initiation agent to be used, preferably falls within the range of 0.01 to 20% by mass, and further preferably 0.5 to 5% by mass based on the solid component of the coating solution.

Light irradiation for polymerization of liquid crystalline molecules is preferably performed by UV rays.

The Irradiation energy preferably falls within the range of 20 mJ/cm$^2$ to 50 J/cm$^2$, more preferably 20 to 5,000 mJ/cm$^2$, and further preferably 100 to 800 mJ/cm$^2$. Furthermore, to facilitate the photo-polymerization reaction, light irradiation may be performed under heating conditions. The protective layer may be provided on the optical anisotropic layer.

The optical compensation film and polarizing layer may be preferably used in combination. More specifically, the optical anisotropic layer is formed by applying a coating solution for the optical anisotropic layer onto the surface of the polarizing film. As a result, a thin polarizing board producing a small stress (distortionxsectional area× modulus of elasticity) in accordance with dimensional change of the polarizing film, can be formed without interposing a polymer film between the polarizing film and the optical anisotropic layer. When the polarizing board according to the present invention is attached to a large-size liquid crystal display device, high definition image can be displayed without producing a problem such as light leakage.

Drawing is preferably performed so as to agree the inclination angle formed between the polarizing layer and the optical compensation layer with the angle formed between the permeation axis of two polarizing boards (which is to be adhered to both sides of liquid crystal cells constituting an LCD) and the longitudinal direction or transverse direction of the liquid crystal cells. The angle of inclination is generally 45 degrees. However, in some of recently developed devices, for example, transmission type LCD, reflection type LCD, and semi-transmission type LCD, the angle of inclination is not always 45 degrees. The drawing direction is preferably controlled arbitrarily in accordance with the design of LCDs.

(II-7) Liquid crystal display device

Individual display modes using such an optical compensation film will be explained.

(TN mode liquid crystal display device)

This derive has been most widely used as a color TFT liquid crystal display device and described in numerous documents. In the orientation state of a liquid crystal cell during black display in a TN mode, rod-shape liquid crystalline molecules are standing up at the center portion of a cell, whereas they are lying down in the cell in the proximity of a substrate.

(OCB mode liquid crystal display device)

This device is a liquid crystal cell of a bend orientation mode where the rod-shape liquid crystalline molecules of the upper portion and lower portion in a liquid crystal cell are oriented mutually oppositely (symmetrically). Liquid crystal display devices using a liquid crystal cell of the bend orientation mode are disclosed in US patent Nos. 4583825 and 5410422. Since the rod-shape liquid crystalline molecules of the upper portion and the lower portion are symmetrically oriented, the liquid crystal cell of the bend orientation mode has a self-optical compensation function. Therefore, this liquid crystal mode is also called an OCB (Optically Compensatory Bend) liquid crystal mode.

In the OCB mode liquid crystal cell, the orientation state of a liquid crystal cell during black display is the same as in the TN mode. That is, the rod-shape liquid crystalline molecules are standing up in the center portion of a cell, where they are lying down in the cell in the vicinity of a substrate.

(VA mode liquid crystal display device)

This device is characterized in that rod-shape crystalline molecules are substantially vertically oriented during the time in which no voltage is applied. Examples of a liquid crystal cell of a VA mode, include:

(1) A narrow-defined VA mode liquid crystal cell, in which rod shape liquid crystalline molecules are substantially vertically oriented during no voltage application time and substantially horizontally oriented during voltage application time (described in Japanese Patent Application Laid-Open No. 2-176625);

(2) A multi-domain system VA mode (MVA mode) liquid crystal cell for increasing an viewing angle (described in SID97, Digest of tech. Papers (preparatory resume) 28 (1997) 845);

(3) An n-ASM mode liquid crystal cell in which rod-shape liquid crystalline molecules are substantially vertically oriented during no voltage application time and oriented in a multi-domain system during voltage application time (described in the preparatory resume of the Japanese liquid crystal symposium, 58-59 (1998); and

(4) A SURVAIVAL mode liquid crystal cell (presented in LCD International 98).

(Other liquid crystal display derives)

Optical compensation can be performed in the liquid crystal display devices of an ECB mode and an STN mode in the same way as mentioned above.

(III) Attachment of anti-reflective layer (anti-reflective film)

The anti-reflective film is formed by forming a low-refractive layer also serving as an antifouling layer and at least one of the layers having a higher refractive index than the low-refractive layer, (that is, a high refractive-index layer and a medium refractive-index layer) on a base.

As a manufacturing method of a multilayered film formed by stacking transparent thin films formed of inorganic compounds (metal oxides and the like) different in refractive index, it is known that manufacturing the multilayered film by forming a film of colloidal metal oxide particles in accordance with a chemical vapor deposition (CVD) method, a physical vapor deposition (PVD) method, or a sol-gel method of a metal compound such as a metal alkoxide, followed by applying post treatment (UV ray irradiation: Japan Patent Application Laid-Open No. 9-157855; or plasma treatment: Japan Patent Application Laid-Open No. 2002-327310).

On the other hand, various anti-reflective films formed by stacking thin films, which have inorganic particles, dispersed in the matrix and formed by coating, have been proposed as an anti-reflective film having high productivity.

Alternatively, as an example, there is an anti-reflective film that has an anti-reflective layer imparted with anti-glare properties by forming microscopic asperities on the top-layer surface of the anti-reflective film formed by coating as mentioned above.

In manufacturing the anti-reflective film, any one of the aforementioned methods can be applied to the cellulose acylate film according to the present invention; however, manufacturing the anti-reflective film by applying the coating method is particularly preferable.

(III-1) Structure of a coating type anti-reflective film

An anti-reflective film, which is composed of a medium refractive-index layer, a high refractive-index layer, a low refractive index layer (outermost layer) stacked on a base in this order, is designed so as to satisfy the following relationship between refractive indexes:

The refractive index of a high refractive-index layer >
the refractive index of a medium refractive-index layer>
the refractive index of a transparent support>the refractive index of a low refractive index layer.

Furthermore, a hard coat layer may be interposed between the base and the middle refractive-index layer. Moreover, the anti-reflective film may be composed of a middle refractive-index layer, a hard coat layer, a high refractive-index layer, and a low refractive index layer.

Reference may be made of Japanese Patent Application Laid-Open Nos. 8-122504, 8-110401, 10-300902, 2002-243906, and 2000-111706. Individual layers may have different functions. For example, a low refractive index layer may have antifouling properties and a high refractive-index layer may have anti-electrostatic properties (e.g., Japanese Patent Application Laid-Open Nos. 10-206603 and 2002-243906).

The haze of the anti-reflective film is preferably 5% or less, and further preferably 3% or less. The strength of the film is preferably "H" or more, further preferably, 2H or more, and most preferably 3H or more, in terms of the index of the pencil hardness test according to JIS K5400.

(III-2) High refractive-index layer and low refractive index layer

The layer having a high refractive index of the anti-reflective film is formed of a hard film containing at least ultra-fine particles of an inorganic compound having a high refractive index of 100 nm or less in average particle size and a matrix binder. Examples of the ultra-fine particles of an inorganic compound having a high refractive index include those of an inorganic compound having a refractive index of 1.65 or more, and preferably 1.9 or more. For example, mention may be made of oxides containing Ti, Zn, Sb, Sn, Zr, Ce, Ta, La and In, and composite oxides containing their metal atoms.

Such ultra-fine particles are formed by treating the surface of particles with a surface treatment agent (for example, a silane coupling agent or the like: see Japanese Patent Application Laid-Open Nos. 11-295503, 11-153703, 2000-9908; anionic compound or an organic metal coupling agent: see Japanese Patent Application Laid-Open No. 2001-310432); and by forming a core-shell structure with high refractive-index particles used as the core (e.g., Japanese Patent Application Laid-Open No.2001-166104); and by using a specific dispersion agent (e.g., Japanese Patent Application Laid-Open No.11-153703, US Patent No. 6210858B1, and Japanese Patent Application Laid-Open No. 2002-2776069).

As a material for forming the matrix, mention may be made of a thermoplastic resin and curable resin film conventionally known. Furthermore, preferably used is at least one composition selected from a composition containing a multiple functional compound which has at least two of radical polymerizable groups and/or cationic polymerizable groups, a composition containing an organic metal compound which has a hydrolytic group and a composition of a partially condensed product of the organic metal compound. Examples of such a compound are described in Japanese Patent Application Laid-Open Nos. 2000-47004, 2001-315242, 2001-31871 and 2001-296401.

Moreover, a curable film obtained from a colloidal metal oxide, which is obtained from a hydrolytic condensed product of a metal alkoxide, and a metal alkoxide compound, as is described in, for example, Japanese Patent Application Laid-Open No.2001-293818.

The refractive index of the high refractive-index layer is generally 1.70 to 2.20. The thickness of the high refractive-index layer is preferably 5 nm to 10 $\mu$m, and further preferably 10 nm to 1 $\mu$m.

The refractive index of the medium refractive-index layer is adjusted so as to have a value between the refractive index of the high refractive-index layer and that of the low refractive index layer. The thickness of the medium refractive-index layer is preferably 1.50 to 1.70.

(III-3) Low refractive index layer

The low refractive index layer is stacked on the high refractive-index layer. The refractive index of the low refractive index layer is 1.20 to 1.55 and preferably 1.30 to 1.50.

The low refractive index layer is preferably formed as the outermost layer having anti-scratching properties and antifouling properties. To greatly improve the anti-scratching properties, it is effective to impart smoothing properties to the surface of the layer. A conventionally known method, that is, a method of introducing silicone or fluorine to form a thin-film layer can be applied.

The refractive index of a fluorine-containing compound is preferably 1.35 to 1.50, and more preferably, 1.36 to 1.47. The fluorine-containing compound preferably contains fluorine atoms within the range of 35 to 80% by mass and contains a crosslinkable or polymerizable functional group.

Examples of such a compound are described in Japanese Patent Application Laid-Open No.9-222503, Paragraphs [0018] to [0026], Japanese Patent Application Laid-Open No. 11-38202, Paragraphs [0019] to [0030]; Japanese Patent Application Laid-Open No.2001-40284, Paragraphs [0027] to [0028]; and Japanese Patent Application Laid-Open No.2000-284102.

As the silicone compound, a silicone compound having a polysiloxane structure and containing a curable functional group or a polymerizable group in the polymer chain, and forming a bridge structure in the film, is preferable. Examples of such a silicone compound include reactive silicone (e.g., Silaplane manufactured by Chisso Corporation, etc.,) and polysiloxane containing a silanol group at both ends (Japanese Patent Application Laid-Open No. 11-258403).

The crosslinking reaction or polymerization reaction of a fluorine and/or siloxane containing polymer having a crosslinkable or polymerizable group is preferably performed at the same time a coating composition containing a polymerization initiating agent and a sensitizing agent is applied for forming the outermost layer or by applying light or heat after the coating.

Furthermore, a sol-gel cured film is also preferable, which is formed by a condensation reaction between an organic metal compound such as a silane coupling agent and a silane-coupling agent containing a predetermined fluorine-containing hydrocarbon group in the presence of a catalyst.

For example, mention is made of silane compounds containing a polyfluoroalkyl group or their hydrolytic condensation products (compounds described in Japanese Patent Application Laid-Open Nos. 58-142958, 58-147483, 58-147484, 9-157582, 11-106704); and silyl compounds containing a long-chain fluorine containing group, namely, a poly(perfluoroalkyl ether) (compounds described in Japanese Patent Application Laid-Open Nos. 2000-117902, 2001-48590, and 2002-53804.

The low refractive index layer may contain, other than the aforementioned additives, a filler (e.g., particles of 1 to 150 nm in primary-particle average diameter of low refractive-index inorganic compound such as silicon dioxide (silica) and fluorine-containing particles (magnesium fluoride, calcium fluoride, barium fluoride) and fine organic particles described in Japanese Patent Application Laid-Open No. 11-3820, Paragraph [0020]-[0038]), a silane coupling agent, a lubricant, and a surfactant.

When the low refractive index layer is located as an outermost layer, the low refractive index layer may be formed by a gas phase method (vacuum deposition method, sputtering method, ion plating method, or plasma CVD method). In view of cost, a coating method is preferable.

The film-thickness of the low refractive index layer is preferably 30 to 200 nm, further preferably 50 to 150 nm, and most preferably 60 to 120 nm.

(III-4) Hard coat layer

A hard coat layer is formed on the surface of a transparent support to provide physical strength to anti-reflective film, and particularly formed between the transparent support and the high refractive-index layer.
The hard coat layer is preferably formed by crosslinking reaction of a curable compound with a light and/or heat, or a polymerization reaction. As a curable functional group, a photopolymerizable functional group is preferable. As an organic metal compound containing a hydrolyzable functional group, an organic alkoxysilyl compound is preferable. Examples of these compounds are the same as mentioned with respect to the high refractive-index layer.
Examples of a composition for the hard coat layer, mention may be made of those described in Japanese Patent Application Laid-Open Nos.2002-144913 and 2000-9908, and WO0/46617.
The high refractive-index layer may serve as the hard coat layer. In this case, the hard coat layer is preferably formed by introducing fine particles by finely dispersing in accordance with a method described with respect to the high refractive-index layer.
The hard coat layer may serve as an anti-glare layer (described later) by adding particles of 0.2 to 10 $\mu$m in average diameter, thereby imparting an anti-glare function. The thickness of the hard coat layer may be appropriately designed in accordance with its use. The thickness of the hard coat layer is preferably 0.2 to 10 $\mu$m, and further preferably 0.5 to 7 $\mu$m. The strength of the hard coat layer is preferably "H" or more, and more preferably "2H" or more and most preferably "3H" or more in terms of the index of the pencil hardness test according to JIS K5400. Furthermore, in the taper test in accordance with JIS K5400, the lower the abrasion amount of a test piece before and after the test, the better.

(III-5) Forward scattering layer

A forward scattering layer is provided to improve a viewing angle when an angle of sight is changed in various directions in a case that the thermoplastic film is applied to a liquid crystal display device. By scattering fine particles different in refractive index in the hard coat layer, the hard coat layer can be used as the forward scattering layer.
As references concerning the forward scattering layer, for example, following references are known: Japanese Patent Application Laid-Open No. 11-38208 where a forward scatting coefficient is defined; Japanese Patent Application Laid-Open No. 2000-199809 where a relative refractive index of fine particles to a transparent resin is defined within a specific range; and Japanese Patent Application Laid-Open No.2002-107512 where the Hayes value is defined 40% or more.

(III-6) Other layers

Other than the aforementioned layers, a primer layer, anti-electrostatic layer, undercoating layer, and protective layer may be provided.

(III-7) Coating method

Each layer of an anti-reflective film may be formed by coating in accordance with a dip-coating method, air-knife coating method, curtain coating method, roller coating method, wire-bar coating method, gravure coating, micro-gravure coating method, and extrusion method (US patent No. 2,681,294).

(III-8) Anti-glare function

The anti-reflective film may have an anti-glare function for scattering incident light. The anti-glare function may be obtained by forming projections and depressions in the surface of the anti-reflective film. When the anti-reflective film has an anti-glare function, the Hayes value of the anti-reflective film is preferably 3 to 30%, more preferably 5 to 20% and most preferably 7 to 20%.
A method of forming projections and depressions in the surface of the anti-reflective film, any method may be used as long as it can maintain the projections and depressions in the surface. Examples of such a method include a method of forming projections and depressions in a film surface by use of fine particles in the low refractive index layer (e.g., Japanese Patent Application Laid-Open No.2000-271878), a method in which a small amount (0.1 to 50% by mass) of relative large particles (0.05 to 2 $\mu$m in average particle size) are added to the underlying layer (high refractive-index layer, medium refractive-index layer or hard coat layer) of the low refractive index layer to form a film having a convexo-concave surface and then the low refractive index layer is formed while keeping these convexo-concave forms (e.g., Japanese Patent Application Laid-Open Nos.2000-281410, 2000-95893, 2001-100004, and 2001-281407); and a method of physically transferring convexo-concave form to a coated surface of the outermost layer (antifouling layer) (e.g., emboss processing methods described in Japanese Patent Application Laid-Open Nos.63-278839, 11-183710, and 2000-275401).

Now, various measuring methods in the present invention will be described.

(Calculation method for bowing strain)

A straight line is drawn on the surface of a film in the width direction before transverse drawing is performed. Based on the state of the arch line, which is deformed as shown in Figures 3A and 3B, on the film fmally obtained, a bowing strain can be calculated in accordance with the following equations:

$$B = b/W \times 100 \; (\%)$$

where B is a bowing strain (%), w is a film width (mm) and b is the maximum depression amount of the bowing line.

(Measuring methods for Re, Rth, fluctuation of Re and Rth in the width direction)

One hundred sample pieces of 1cm squares are cut from a thermoplastic film at intervals of 0.5 m in the MD direction (longitudinal direction). Fifty sample pieces of 1cm squares are cut from a thermoplastic film in the TD direction (width direction) at the regular intervals. Re, Rth and orientation angle are measured as follows. After the sample film pieces are conditioned in a humidity to 60% rh at 25°C for 3 hours, retardation value and the angle of inclination of the slow axis at a wavelength of 550 nm are measured by an automatic double refraction meter (KOBRA-21ADH/PR: manufactured by Ouji Science Instruments) at 25°C in a humidity to 60%, in the perpendicular direction to the sample film surface and in the direction having an angle of $\pm 40°C$ with respect to the normal line to the film surface. The in-plane retardation (Re) is computationally obtained from the value of the perpendicular direction and the angle of inclination of the slow axis with respect to a flow direction is computationally obtained as an orientation angle. Rth is calculated from the measurement values in the perpendicular direction and the $\pm 40°C$ direction. Values of all sampling points are averaged and used as Re, Rth and the orientation angle.

The fluctuations of Re, Rth and the orientation angle are calculated as follows. The difference between the maximum value and the minimum value of 100 sample points in the MD direction is divided by its average value and expressed by percentage. This value is used as Re fluctuation. The difference between the maximum value and the minimum value of 50 sample points in the TD direction is divided by its average value and expressed by percentage. This value is used as Rth fluctuation. With respect to the fluctuation of the orientation angle, the difference between the maximum value and the minimum value of each point is used as it is.

(Substitution degree of cellulose acylate)

The substitution degree of an acyl group of cellulose acylate is obtained by 13C-NMR in accordance with a method described in Carbonhydr. Res, 273 (1995) 83-91 (Tezuka et al.).

[Examples]

1. Thermoplastic resin

(1) Cellulose acylate

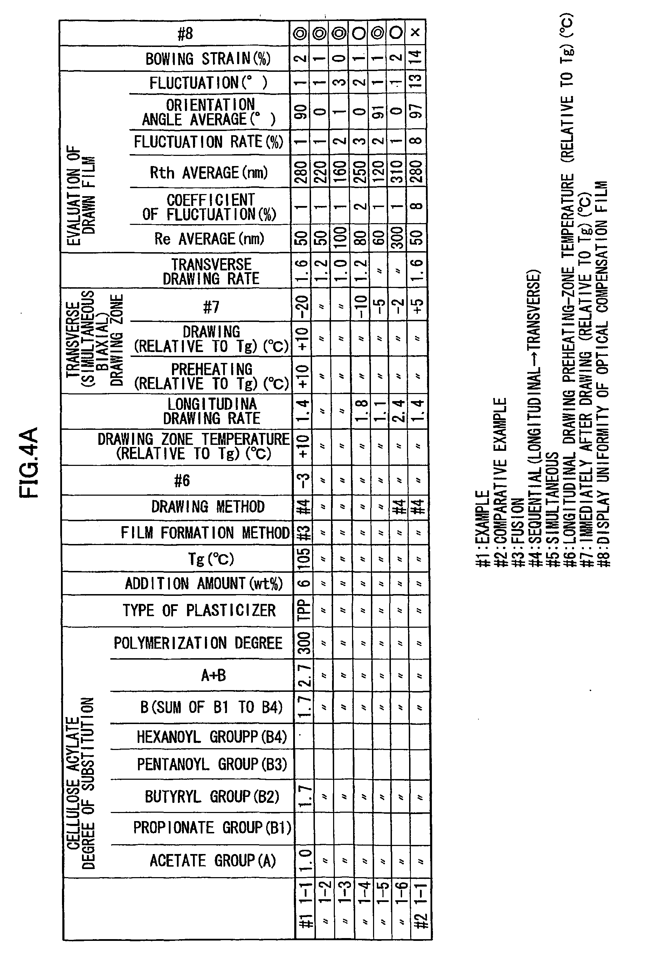

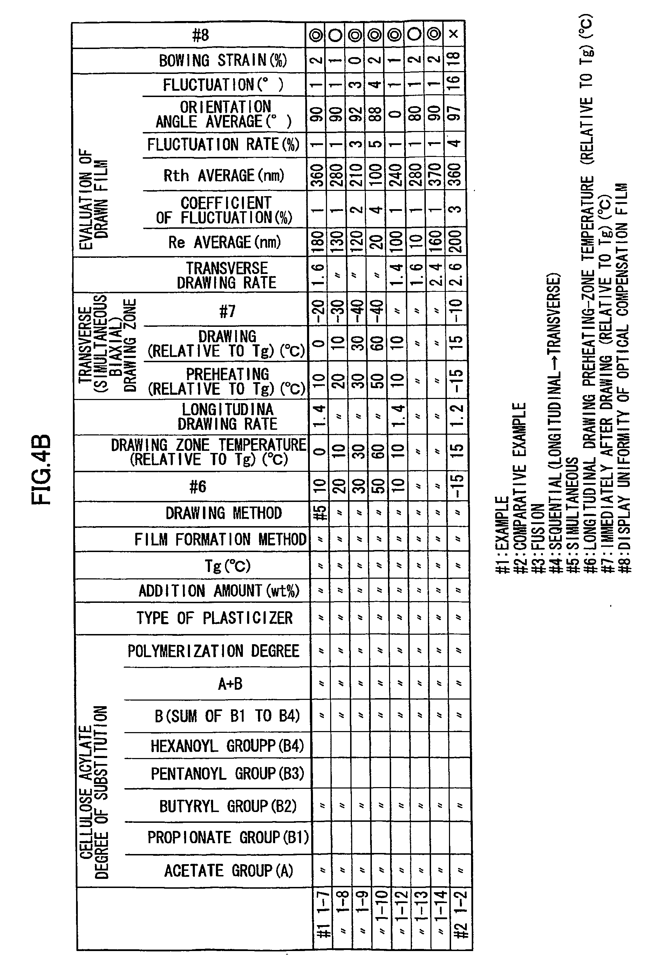

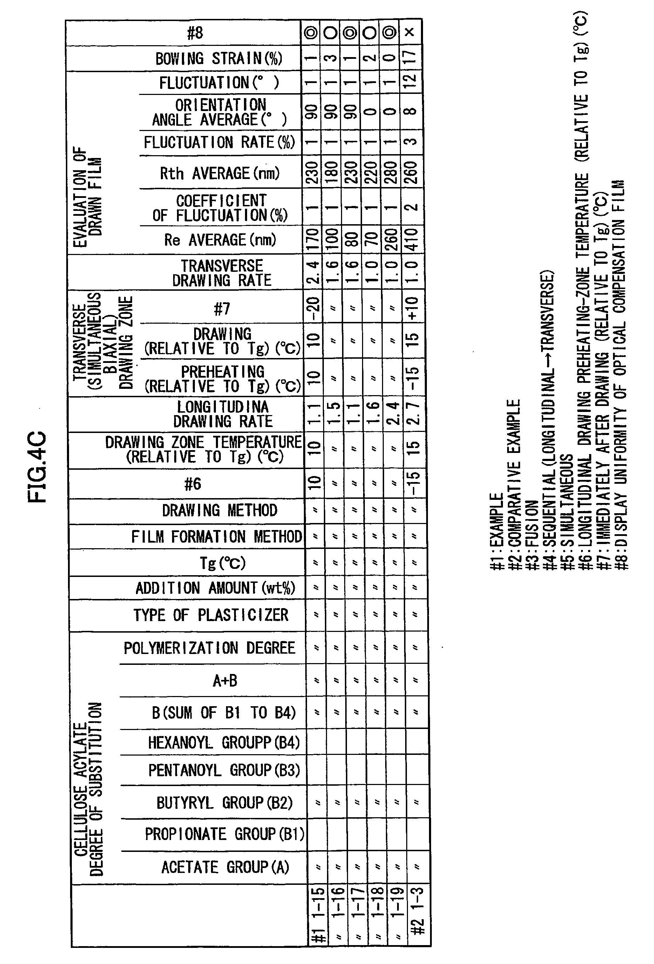

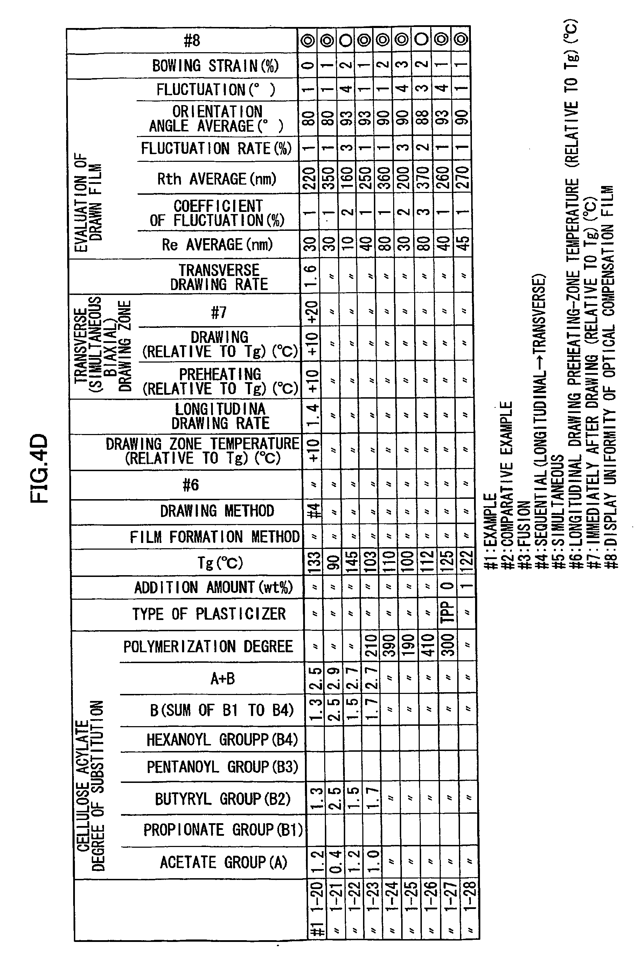

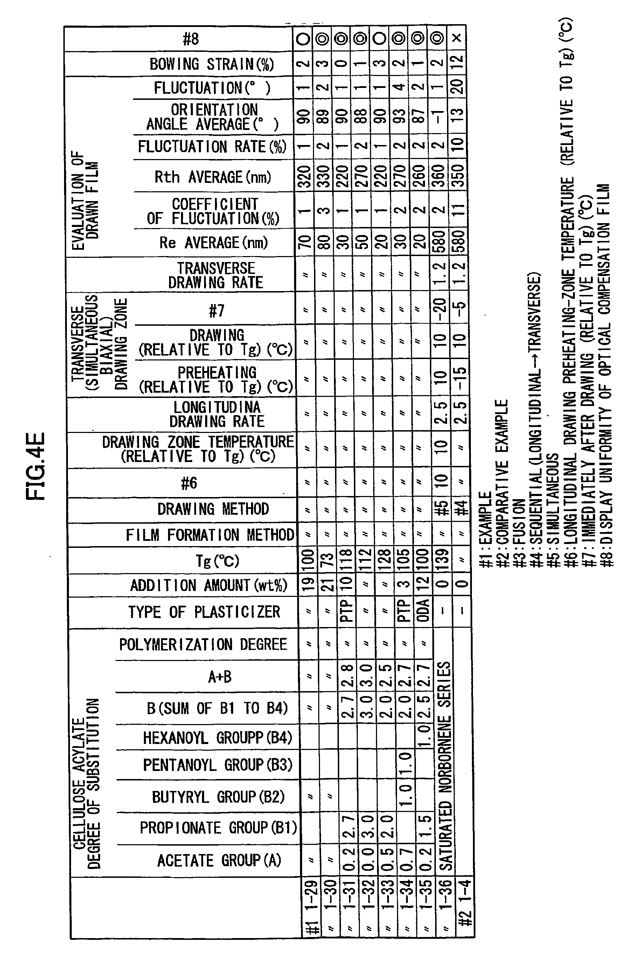

Cellulose acylates having different types of acyl groups and different substitution degrees as described in Table 1 (Figures 4A to 4E) were prepared. Each of them was prepared through an acylation reaction performed at 40°C by adding sulfuric acid (in an amount of 7.8 parts by weight based on the 100 parts by weight of cellulose) as a catalyst and a carboxylic acid serving as a raw material for an acyl substituent. At this time, the type and substitution degree of an acyl group were controlled by controlling the type and amount of the carboxylic acid. Furthermore, after the acylation reaction, aging was performed at 40°C. The polymerization degrees of the resultant cellulose acylates thus obtained were obtained by the following method and listed in Tables 1 and 2.

(Measuring method for polymerization degree)

About 0.2 g of cellulose acylate completely dried was accurately weighed and dissolved in 100 ml of a methylene chloride:ethanol =9:1 (mass ratio) mixed solvent. While the mixture was allowed to drop at 25°C, the speed of a drop (second) was measured by the Ostwald's viscosimeter. The degree of polymerization was obtained in accordance with the following equation:

$$\eta rel = T/T0$$

$$[\eta] = (1n\eta rel)/C$$

$$DP = [\eta]/Km$$

where T is a drop speed (second) of a test sample; T0 is a drop speed of a solvent alone; C is a concentration (g/l), and Km is $6 \times 10^4$.

Tg values of these cellulose acylates were measured and listed in Tables 1 and 2. Note that samples containing a plasticizer, the values shown in the tables were measured after addition of the plasticizer.

(Tg measurement)

20 mg of a sample was added to a DSC measurement pan. The pan was heated from 30°C to 250°C at a rate of 10°C/minutes in nitrogen air flow (1st run) and cooled to 30°C at a rate of -10°C/minute. Thereafter, the temperature was raised again from 30°C to 250°C (2nd run). In the second run, the temperature at which the base line was started to biased from a lower temperature side was defined at a glass transition temperature (Tg), which were listed in Tables 1 and 2. Furthermore, 0.05% by mass of silicon dioxide particles (aerosil R972V) was added to the total level.

(2) Saturated norbornene resin

To 6-methyl-1,4,5,8-dimethano-1,4,4a,5,6,7,8,8a-octahydronaphthalene, 10 parts of a 15% cyclohexane solution containing triethyl aluminium as a polymerization catalyst, and 5 parts of triethylamine and 10 parts of a 20% cyclohexane solution of titanium tetrachloride were added. Ring-opening polymerization was performed in cyclohexane and the ring-opened polymer thus obtained was hydrogenated in the presence of a nickel catalyst to obtain a polymer solution. The polymer solution was solidified in isopropyl alcohol and dried to obtain a powdery resin. The number average molecular weight of the resin was 40,000. The hydrogenation rate was 99.8% or more. Tg was 139°C.

(3) Polycarbonate resin (PC resin)

A PC resin modified with 9,9-bis(3-methyl-4-hydroxyphenyl)fluorene was obtained in accordance with Example 1 of Japanese Patent Application Laid-Open No. 2003-29040. The Tg of the PC resin was 215°C.

2. Film formation

(1) Melt-forming film

Each of the cellulose acylates and a saturated norbornene resin mentioned above were formed into cylindrical pellets of 3 mm in diameter and 5 mm in length. At this time, plasticizers were selected from below (shown in Table 1) and kneaded in the pellets. The resultant pellets were dried in a vacuum drier at 110°C up to a water content of 0.1% or less and thereafter loaded into a hopper adjusted at a temperature of Tg-10°C.

In Table 1, TPP: triphenyl phosphate, BDP: biphenyldiphenyl phosphate, DOA: bis(2-ethylhexyl)adipate, and PTP: 1,4-phenylene tetraphenyl phosphate.

The melting temperature was adjusted so as to obtain a melt viscosity of 1000Pa·s. While keeping the same temperature, melting was performed by a single-axis kneader for 5 minutes. Thereafter, a melt was cast from T-die set at a temperature higher than 10°C onto a casting drum adjusted at a temperature of Tg-5°C, and solidified to form a film. At this time, a standard electrostatic application method was used (a 10kV wire was arranged at a distance of 10 cm from the landing site of the melt on the casting drum). The solidified melt was peeled off and rolled up. Note that, immediately before the rolling up, both ends (corresponding to 3% of the total width) of the solidified melt were trimmed off and knurling of 10 mm in width and 50 $\mu$m in height was provided to both ends. Each level (3000 m in length, 1.5 m in width) was rolled up at a rate of 30 m/minute.

(2) Solution casting film

(Cellulose acylate)

(I) Preparation

After each of the cellulose acylate resins was dried up to a water content of 0.1 wt% or less, a plasticizer listed in Table 1 was added. After the mixture was dissolved in a solvent selected from below, it was dissolved such that that cellulose acylate was contained in an amount of 25 wt%.

- Non chlorine series: methyl acetate/acetone/methanol/ethanol/butanol (80/5/7/5/3 parts by mass)
- Chlorine series: dichloromethane/methanol/ethanol/butanol (85/6/5/4, parts by mass)

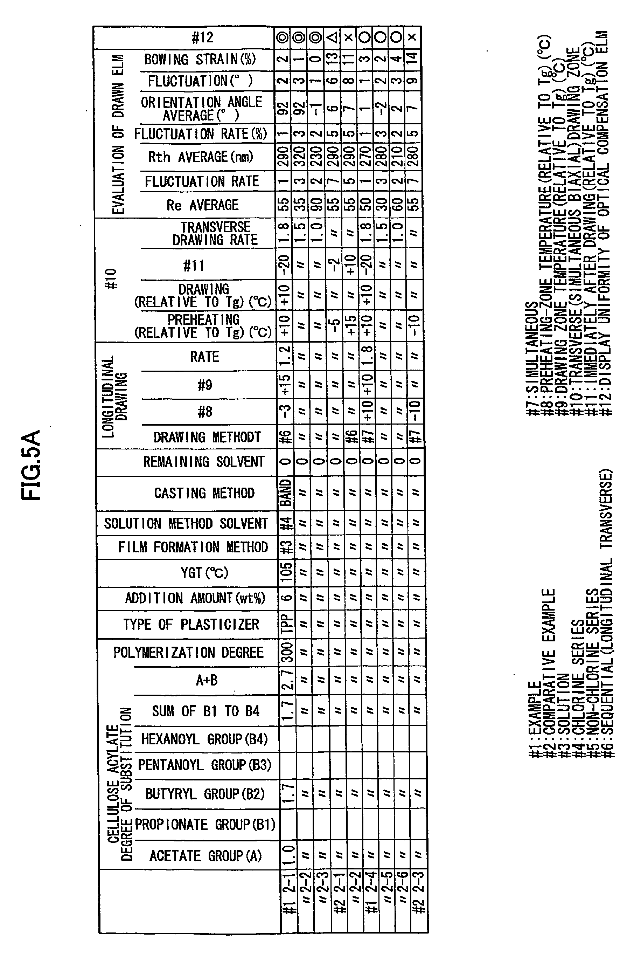

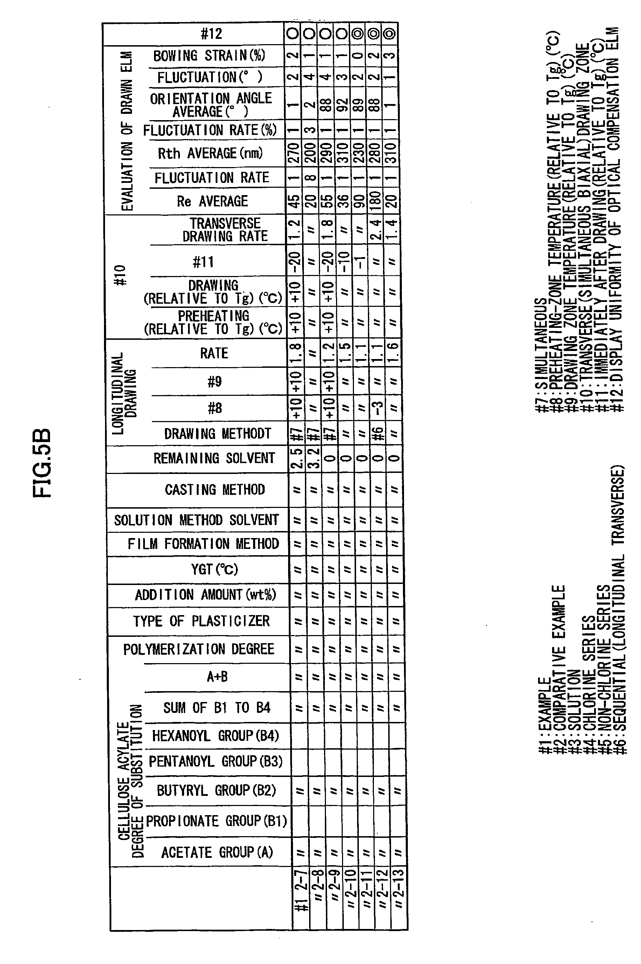

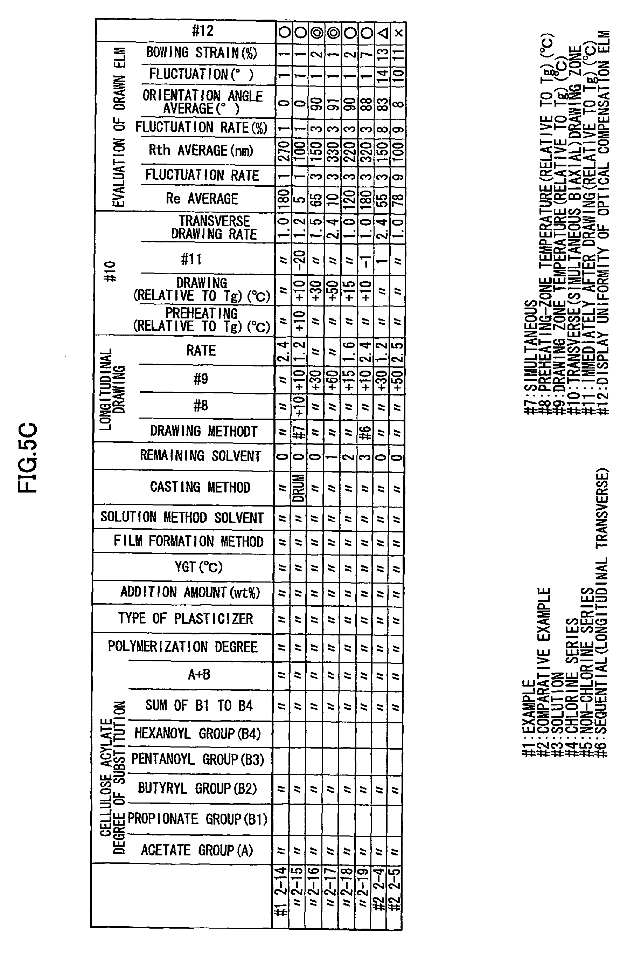

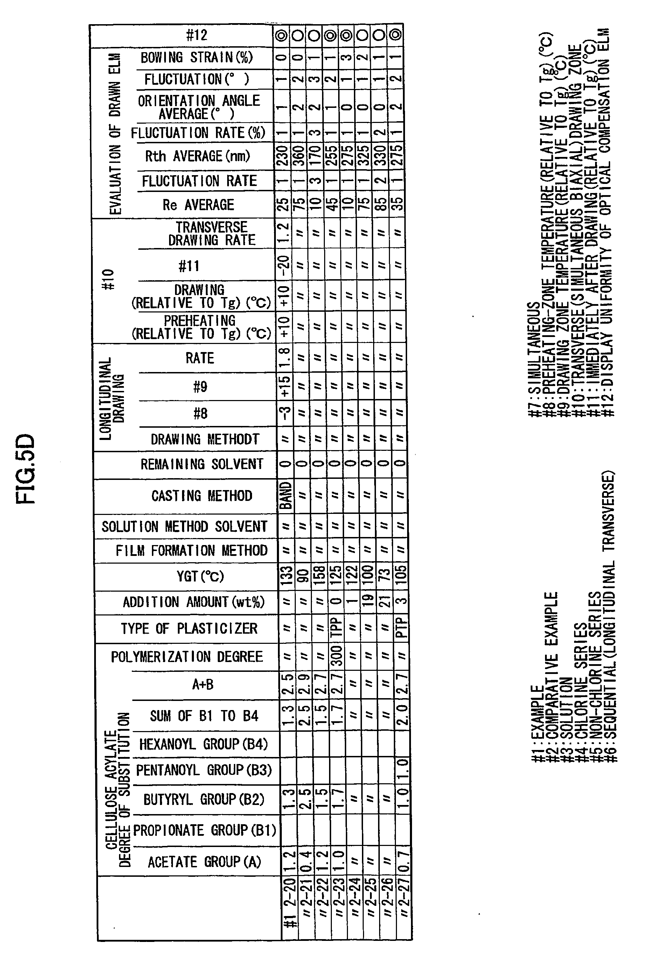

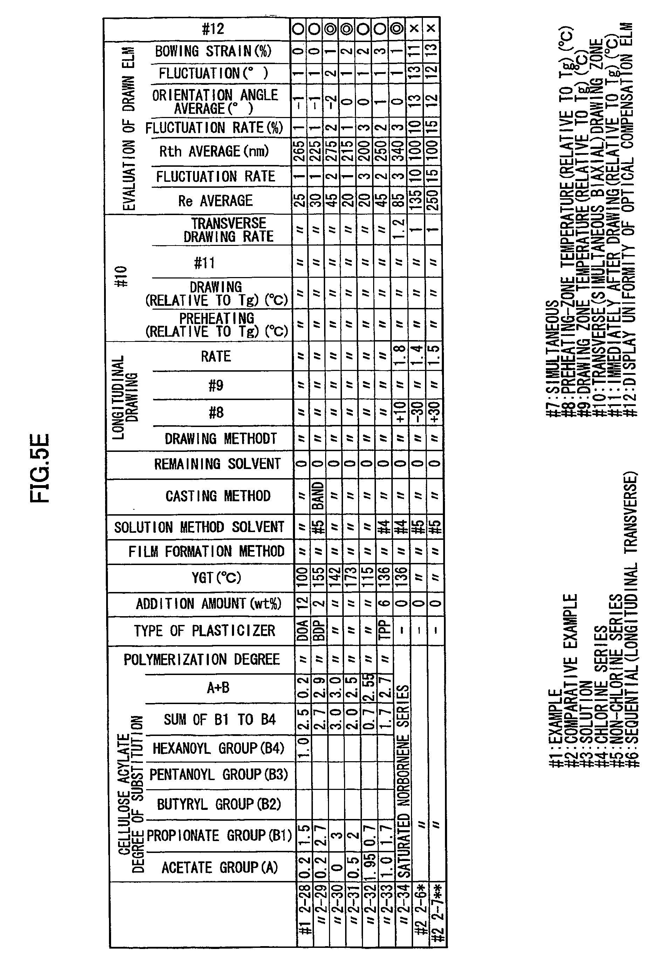

The plasticizer was selected from TPP, BDP, DOA, and PTP and listed in Table 2 (Figures 5A to 5E). Besides these, the following additives were added to each level.

- An optical anisotropy-controlling agent (3 wt%): a plate-form compound represented by Chemical formula (1) described in Japanese Patent Application Laid-Open No. 2003-66230;
- UV agent <u>a</u> (0.5 wt%):

    2,4-bis-(n-octylthio)-6-(4-hydroxy-3,5-di-tert-butylanilino)-1,3,5-triadine;

- UV agent <u>b</u> (0.2 wt%):

    2(2'-hydroxy-3',5'-di-tert-butylphenyl)-5-chlorobenzotriazole;

- UV agent <u>c</u> (0.1 wt%):

    2(2'-hydroxy-3',5'-di-tert-amylphenyl)-5-chlorobenzotriazole;

- Fine particles (0.25 wt%): Silicon dioxide (particle diameter: 20 nm) having a hardness of about 7 in terms of the Mohs' scale;
- Ethyl citrate (0.2 wt%) (a monoester and a diester were contained in the ratio of 1:1).

Note that the amounts (wt%) mentioned above were a proportion relative to cellulose acylate.

(II) Swelling and dissolution

Each of these cellulose acylates and additives were added to a solvent while stirring. After addition of these, stirring was stopped. The mixture was allowed to swollen at 25°C for 3 hours to make slurry. The slurry was again stirred to completely dissolve cellulose acylate.

(III) Filtration and concentration

Thereafter, the mixture was filtrated by a filter having an absolute filter accuracy of 0.01 mm (manufactured by the company Toyo Seishi, #63) and further filtrated by a filter having an absolute filter accuracy of 2.5 $\mu$m (manufactured by the company Pole, FH025).

(IV) Film formation

Dope was heated up to 35°C and solution -casting was performed in any one of the following methods (described in Table 2).

(IV-1) Band method

The dope was cast through a geyser on a mirror surface of a stainless-steel support having a band length of 60 m adjusted at a temperature of 15°C. The shape of the geyser used herein was similar to the one described in Japanese Patent Application Laid-Open No.11-314233. Note that the solution-casting speed was 60 m/minute and the solution-casting width was 250 cm.

The film was peeled off while its solvent was remained in an amount of 100 wt% and dried at 130°C. When the amount of the remaining solvent reached that shown in Table 1, the film was rolled up to obtain a cellulose acylate film. After a width of 3 cm was trimmed off from both ends of the resultant film and knurling of 100 μm in height was attached at a portion 2 to 10 mm inside both ends, the film of 3000 m was rolled up.

(IV-2) Drum method

The dope was cast through a geyser on a mirror surface of a stainless steel drum of 3 m in diameter adjusted at a temperature of -15°C. The shape of the geyser used herein was similar to the one described in Japanese Patent Application Laid-Open No.11-314233. Note that the casting speed was 100 m/minute and the casting width was 250 cm.

The film was peeled off while its solvent was remained in an amount of 200 wt% and dried at 130°C. When the amount of the remaining solvent reached that shown in Table 1, the film was rolled up to obtain a cellulose acylate film. After a width of 3 cm was trimmed off from both ends of the resultant film and knurling of 100 μm in height was attached at a portion 2 to 10 mm inside both ends, the film of 3000 m was rolled up.

(PC: poly-carbonate)

Polycarbonate was dissolved in 19 wt% dichloromethane in accordance with Example 1 of Japanese Patent Application Laid-Open No. 2003-29040. The resultant dope was extruded from T-die onto the band. When the remaining solvent reached 35 wt%, the film was peeled off and then subjected to drawing.

3. Drawing

(Simultaneous biaxial drawing)

The thermoplastic films obtained by melt-forming and solution casting mentioned above were drawn in the conditions described in Table 2 while maintaining the remaining volatile components mentioned above. The drawing temperature was shown in relative to Tg of raw material of each level (when a plasticizer was used, the drawing temperature was measured with respect to a composition containing the plasticizer). More specifically, when the drawing temperature was higher than Tg, it was expressed by putting a symbol "+" in front of a temperature value, whereas the drawing temperature is lower than Tg, the temperature is expressed by putting a symbol "-" in front of a temperature value. In Table 1, the note of "versus Tg" was added. The drawn films thus obtained were evaluated. The evaluation results are shown in Tables 1 and 2. The Re, Rth (average value), orientation angle and fluctuation rate were calculated in the aforementioned methods and shown in Tables 1 and 2. In addition, adhesion irregularity was measured by the aforementioned methods and shown in Tables 1 and 2.

(Sequential biaxial drawing)

The thermoplastic films obtained by melt-forming and solution casting mentioned above were pre-heated at temperatures shown in Tables 1 and 2 and thereafter longitudinally drawn at temperatures shown in Tables 1 and 2. The drawing temperature was shown in relative to Tg of raw material of each level. More specifically, when the drawing temperature was higher than Tg, it was expressed by putting a symbol "+" in front of a temperature value, whereas the drawing temperature is lower than Tg, the temperature is expressed by putting a symbol "-" in front of a temperature value. In Table 1, the note of "versus Tg" was added. Thereafter, the films were transversely drawn by a tenter in the conditions shown in Tables 1 and 2. In the thermoplastic films according to the present invention thus drawn, Re and Rth in the overall width and the longitudinal direction each were 5% or less. Note that Re and Rth were obtained as follows: 10 points of the overall width equally divided and 10 points sampled at intervals of 1 m in the longitudinal direction were measured 10 times. The difference between a maximum value and a minimum value of 100 points in total was divided by its average value and shown in percentage. Furthermore, an orientation angle and bowing strain were measured and shown in Tables 1 and 2.

4. Formation of a polarizing board

(1) Surface treatment

(1-1) Cellulose acylate film

After drawing, the cellulose acylate films were subjected to saponification by any one of the methods below and described in Tables 1 and 2.

(a) Saponification by coating

To 80 parts by weight of iso-propanol, 20 parts by weight of water was added. To the mixture, KOH was added up to a concentration of 1.5N. The resultant mixture was adjusted to temperature of 60°C and used as a saponification solution. The saponification solution was applied onto a cellulose acylate film of 60°C in a proportion of 10 g/m$^2$. Saponification was performed for one minute. Thereafter, the film was washed by spraying warm water of 50°C onto the film at a rate of 10 l/m$^2$ for one minute.

(b) Saponification by soaking

A 1.5N aqueous solution of NaOH was used as a saponification solution. The saponification solution was warmed up to 60°C and a cellulose acylate film was soaked for 2 minutes, and thereafter soaked in a 0.1N aqueous solution of sulfuric acid for 30 seconds and then soaked in a water bath.

(1-2) Saturated norbornene film, PC film

Colona treatment was applied to a film surface so as to have the angle of the surface in contact with water came to be 60 degrees.

(2) Formation of polarizing layer

A polarizing layer of 20 $\mu$m in thickness was formed by any one of the methods below (shown in Tables 1 and 2). Note that, in the present invention, a film drawn and imparted with polarizing properties was called a polarizing layer, which is distinguishably used from a polarizing board formed by sandwiching the polarizing layer with two protective films or phase difference films.

(a) Slant drawing method

In accordance with Example 1 of Japanese Patent Application Laid-Open No. 2002-86554, a film was drawn by a tenter such that the drawn axis is slanted by 45 degrees.

(b) Parallel drawing method

In accordance with Example 1 of Japanese Patent Application Laid-Open No. 2001-141926, a film was drawn in the longitudinal direction by differentiating the circumferential speeds of two pairs of nip rollers.

(3) Adhesion

The polarizing layer thus obtained was inserted between the thermoplastic film (phase difference board) drawn and saponificated and a polarizing board protective film (Trade name; Fujitack) saponificated. At this time, the adhesion between the phase difference board and the polarizing layer was performed as follows. When the phase difference board was formed of cellulose acylate, a 3% aqueous solution of PVA (PVA-117H, manufactured by Kuraray Co., Ltd.) was used as an adhesive agent. When the phase difference board was formed of a different material from cellulose acylate, an epoxy series adhesive agent was used to adhere them. Furthermore, Fujitack and the polarizing layer were adhered by using the aqueous PVA solution as an adhesive agent such that the polarization axis and a longitudinal direction of the phase-difference board formed an angle of 45 degrees. The polarizing board thus obtained was installed into 20-inch VA type liquid crystal display device described in Figures 2 to 9 of Japanese Patent Application Laid-Open No. 2000-154261, such that the phase difference board came on a liquid crystal side and Fujitack came on the outside (watch side). Frequency of occurrence of display unevenness per unit area was visually evaluated and listed in Tables 1 and 2. The films according to the present invention exhibited uniform display and good performance.

5. Formation of optical compensation film

When a thermoplastic film of the present invention was used in place of a drawn cellulose acylate film coated with a liquid crystal layer according to Example 1 of Japanese Patent Application Laid-Open No. 11-316378, a good optical compensation film was formed as shown in Table 3 (described as optical compensation film A).

An optical compensation filter film was manufactured by using a drawn thermoplastic film of the present invention in place of a cellulose acetate film coated with a liquid crystal layer according to Example 1 of Japanese Patent Application Laid-Open No. 7-333433 (described as optical compensation film B), a good optical compensation film was formed.

On the other hand, films outside the scope of the present invention deteriorated in optical properties. In particular, significant deterioration of the optical properties was observed in the films (Comparative Examples 1 to 4 in Table 1) according to Japanese Patent Application Laid-Open No. 2002-311240, Example 1); the films (Comparative Examples 2 to 4 in Table 2) according to Japanese Patent Application Laid-Open No. 2003-315551, sample S-11 in Examples); and the films (Comparative Examples 2 to 5 in Table 2) according to Japanese Patent Application Laid-Open No. 2001-42130, Example 1).

6. Formation of low-reflective film

When a low reflective film was formed of a drawn thermoplastic film of the present invention in accordance with "Kokai Gihou" No. 2001-1745, Example 47 (published by the Japanese Institute of Invention and Innovation), uniform and satisfactory optical performance were obtained.

7. Formation of Liquid crystal display device

The polarizing board of the present invention was used in a liquid crystal display device described in Examples in Japanese Patent Application Laid-Open No. 10-48420, an optical anisotropic layer containing a discotic liquid crystalline molecule and an orientation film coated with polyvinyl alcohol described in Examples 1 of Japanese Patent Application Laid-Open No.9-26572; 20-inch VA liquid crystal display device described in Figures 2 to 9 according to Japanese Patent Application Laid-Open No. 2000-154261; and 20-inch OCB type liquid crystal display device described in Figures 10-15 of Japanese Patent Application Laid-Open No.2000-154261. Furthermore, when a low refractive film according to the present invention was adhered to the surface of the outermost layer of these liquid crystal display devices and evaluated, uniform and good liquid crystal display devices free from display unevenness due to adhesion trace was obtained, as shown in Tables 1 and 2.

8. Results

Table 1 shows the results in the case where a melt-forming film is drawn. In Table 1, Examples 1-1 to 1-6 show the results in the case where a cellulose acylate film was subjected to a sequential biaxial drawing. Since the temperature immediately after drawing was set to be lower than Tg, films each having Re, Rth and an orientation angle within appropriate ranges could be manufactured. In contrast, in comparative Example 1-1, since the temperature immediately after drawing was set to be higher than Tg, fluctuation rates in Re, Rth and orientation angle were high and an average of orientation angles fell in an inappropriate range.

Similarly, also in Examples 1-7 to 1-19 where simultaneous biaxial drawing was performed, since the temperature immediately after drawing was set at to be lower than Tg, films each having Re, Rth and an orientation angle within an appropriate range could be obtained. However, in Comparative Examples 1 to 3, since the temperature immediately after drawing was larger than Tg, the average value and fluctuation of orientation angles were inadequate. Further in Comparative Example 1-2 where preheating temperature was lower than that immediately after drawing, films each having an inadequate average value and fluctuation of the orientation angle were obtained.

Examples 1-20 to 1-35 show the results of films obtained by performing subsequent drawing while changing the substitution degree, polymerization degree and the addition amount of a plasticizer, etc. In these cases, since the temperature immediately after drawing was set to be lower than Tg, good results were obtained.

Examples 1-36 and Comparative Example 1-4 show the results of saturated norbornene films. In the cases of Comparative Example 1-4 where the temperature immediately after drawing was lower than preheating temperature, the average values and fluctuation of orientation angles were inadequate.

Table 2 shows the results of films drawn by a solution casting method. As shown in Table 2, a sequential biaxial drawing and simultaneous biaxial drawing were performed also in Examples 2-1 to 2-34. In these cases, films having good display uniformity can be obtained by controlling temperature immediately after drawing and preheating temperature within appropriate ranges. In contrast, in Comparative Example 2-1, since the preheating temperature is lower than the temperature immediately after drawing, an average value and fluctuation of orientation angles fall within inadequate range and bowing strain is large. Further, in Comparative Example 2-2, since the temperature immediately after drawing is higher than Tg, the orientation angle and bowing strain fall within inadequate ranges. In Comparative Example 2-3, since the preheating temperature is low, the orientation angle and bowing strain fall within inadequate ranges. In Comparative Examples 2-4 and 2-5, since a solvent remains in a large amount, which means the temperature immediately after drawing is larger than Tg, with the result that orientation angles and bowing strain of the obtained films come to be inadequate.

## Claims

1. A method of manufacturing a thermoplastic film (16) by drawing the thermoplastic film in a transverse direction, **characterized in that** the steps after the drawing until the film comes out from a tenter are carried out while maintaining the film at a glass transition temperature or less, wherein in the thermoplastic film (16) an orientation angle falls within the range of 0°±5° or 90°±5°, the magnitude of bowing strain falls within the range of 10%, in-plane retardation (Re) falls within the range of 0 nm to 500 nm, and retardation (Rth) in a thickness direction falls within the range of 30 nm to 500 nm, both inclusive, and wherein the film is a cellulose acylate film or a saturated norbornene film.

2. The method of manufacturing a thermoplastic film (16) according to claim 1, **characterized in that** the film temperature before drawing is higher than the film temperature after drawing.

3. A thermoplastic film (16) **characterized in that** an orientation angle falls within the range of 0°±5° or 90°±5°, the magnitude of bowing strain falls within the range of 10%, in-plane retardation (Re) falls within the range of 0 nm to 500 nm, and retardation (Rth) in a thickness direction falls within the range of 30 nm to 500 nm, both inclusive, wherein the film is a cellulose acylate film or a saturated norbornene film.

4. The thermoplastic film (16) according to claim 3, **characterized in that** the retardation Re and Rth have fluctuation in the width direction and the longitudinal direction each within the range of 5%, and the orientation angle has fluctuation in the width direction and the longitudinal direction each within the range of 5 degrees.

5. The thermoplastic film (16) according to claim 3, **characterized in that** the cellulose acylate film has an acylate group satisfying a substitution degree represented by the equations:

$$2.5 \leq A+B < 3.0$$

$$1.25 \leq B < 3.0$$

where A is a substitution degree of an acetate group; and B is the sum of substitution degrees of a propionate group, butyrate group, pentanoyl group, and hexanoyl group.

6. A polarizing plate, **characterized in that** at least one cellulose acylate film according to claim 3 or 5 is stacked on the polarizing plate.

7. An optical compensation film for a liquid crystal display panel, **characterized by** using the cellulose acylate film according to claim 3 or 5 as a base.

8. An anti-reflective film **characterized by** using the cellulose acylate film according to claim 3 or 5 as a base.

## Patentansprüche

1. Verfahren zur Herstellung eines thermoplastischen Films (16) durch Ziehen des thermoplastischen Filmes in transversaler Richtung, **dadurch gekennzeichnet, dass** die Schritte nach dem Ziehen, bis der Film aus dem Spannrahmen herauskommt, durchgeführt werden, während der Film bei einer Glasübergangstemperatur oder weniger gehalten wird, worin in dem thermoplastischen Film (16) ein Orientierungswinkel innerhalb des Bereiches von 0°±5° oder 90°±5° fällt, wobei die Größenordnung der Krümmungsspannung innerhalb des Bereichs von 10% fällt, die Retardierung in der Ebene(Re) innerhalb des Bereiches von 0 bis 500 nm fällt und die Retardierung (Rth) in Dickenrichtung innerhalb des Bereiches von 30 bis 500 nm fällt, beides inklusive, und worin der Film ein Celluloseacylatfilm oder ein gesättigter Norbornenfilm ist.

2. Verfahren zur Herstellung eines thermoplastischen Filmes (16) nach Anspruch 1, **dadurch gekennzeichnet, dass** die Filmtemperatur vor dem Ziehen höher ist als die Filmtemperatur nach dem Ziehen.

3. Thermoplastischer Film (16), **dadurch gekennzeichnet, dass** ein Orientierungswinkel innerhalb des Bereiches von 0°±5° oder 90°±5° fällt, die Größenordnung der Krümmungsspannung innerhalb des Bereiches von 10% fällt, die Retardierung in der Ebene(Re) innerhalb des Bereiches von 0 bis 500 nm fällt, und die Retardierung (Rth) in Dickenrichtung innerhalb des Bereiches von 30 bis 500 nm, beides inklusive, fällt, worin der Film ein Celluloseacylatfilm oder ein gesättigter Norbornenfilm ist.

4. Thermoplastischer Film (16) nach Anspruch 3, **dadurch gekennzeichnet, dass** die Retardierungen Re und Rth eine Fluktuation in der Breitenrichtung und Longitudinalrichtung jeweils innerhalb des Bereiches von 5% haben und der Orientierungswinkel eine Fluktuation in der Breitenrichtung und der Longitudinalrichtung jeweils innerhalb des Bereiches von 5° hat.

5. Thermoplastischer Film (16) nach Anspruch 3, **dadurch gekennzeichnet, dass** der Celluloseacylatfilm eine Acylatgruppe hat, die einen Substitutionsgrad erfüllt, dargestellt durch die Gleichungen:

$$2,5 \leq A+B < 3,0$$

$$1,25 \leq B < 3,0$$

worin A ein Substitutionsgrad einer Acetatgruppe ist und B die Summe der Substitutionsgrade einer Propionat-, Butyrat-, Pentanoyl- und Hexanoyl-Gruppe ist.

6. Polarisierungsplatte, **dadurch gekennzeichnet, dass** zumindest ein Celluloseacylatfilm nach Anspruch 3 oder 5 auf der Polarisierungsplatte gestapelt ist.

7. Optischer Kompensationsfilm für ein Flüssigkristallanzeigepanel, **gekennzeichnet durch** Verwendung des Celluloseacylatfilmes nach Anspruch 3 oder 5 als Basis.

8. Antireflexionsfilm, **gekennzeichnet durch** Verwendung des Celluloseacylatfilmes nach Anspruch 3 oder 5 als Basis.

**Revendications**

1. Procédé de fabrication d'un film thermoplastique (16) en étirant le film thermoplastique dans une direction transversale, **caractérisé en ce que** les étapes postérieures à l'étirage, jusqu'à ce que le film sorte d'un banc d'étirage, sont effectuées en maintenant le film à une température de transition vitreuse ou inférieure, dans lequel, dans le film thermoplastique (16), un angle d'orientation se situe dans la plage de 0° ± 5° ou 90° ± 5°, l'amplitude de la contrainte de flexion se situe dans la limite de 10 %, le retardement dans le plan (Re) se situe dans la plage de 0 nm à 500 nm, et le retardement (Rth) dans le sens de l'épaisseur se situe dans la plage de 30 nm à 500 nm, ces deux limites comprises, et dans lequel le film est un film d'acylate de cellulose ou un film de norbornène saturé.

2. Procédé de fabrication d'un film thermoplastique (16) selon la revendication 1, **caractérisé en ce que** la température de film avant étirage est supérieure à la température de film après étirage.

3. Film thermoplastique (16) **caractérisé en ce qu'**un angle d'orientation se situe dans la plage de 0° ± 5° ou 90° ± 5°, l'amplitude de contrainte de flexion se situe dans la limite de 10 %, le retardement dans le plan (Re) se situe dans la plage de 0 nm à 500 nm et le retardement (Rth) dans le sens de l'épaisseur se situe dans la plage de 30 nm à 500 nm, ces deux limites comprises, dans lequel le film est un film d'acylate de cellulose ou un film de norbornène saturé.

4. Film thermoplastique (16) selon la revendication 3, **caractérisé en ce que** le retardement Re et le retardement Rth fluctuent dans le sens de la largeur et la direction longitudinale dans la limite de 5 % pour chaque, et l'angle d'orientation fluctue dans le sens de la largeur et la direction longitudinale dans la limite de 5 degrés pour chaque.

5. Film thermoplastique (16) selon la revendication 3, **caractérisé en ce que** le film d'acylate de cellulose a un groupe acylate satisfaisant à un degré de substitution représenté par les équations :

$$2,5 \leq A + B < 3,0$$

$$1,25 \leq B < 3,0$$

où A est un degré de substitution d'un groupe acétate ;
et B est la somme des degrés de substitution d'un groupe propionate, d'un groupe butyrate, d'un groupe pentanoyle et d'un groupe hexanoyle.

6. Plaque polarisante, **caractérisée en ce qu'**au moins un film d'acylate de cellulose selon la revendication 3 ou 5 est empilé sur la plaque polarisante.

7. Film de compensation optique pour un panneau d'affichage à cristaux liquides, **caractérisé par** l'utilisation du film d'acylate de cellulose selon la revendication 3 ou 5 en tant que base.

8. Film antireflet **caractérisé par** l'utilisation du film d'acylate de cellulose selon la revendication 3 ou 5 en tant que base.

FIG.1

EP 1 773 572 B1

30

32    32    32    32

| $T_1$ | $T_2$ | $T_3$ | $T_4$ | $T_5$ |
|---|---|---|---|---|

PREHEATING ZONE    TRANSVERSE DRAWING ZONE    COOLING ZONE

FIG.2

## FIG.3A

PREHEATING ZONE   TRANSVERSE   COOLING ZONE
                  DRAWING ZONE

## FIG.3B

PREHEATING ZONE   TRANSVERSE   THERMAL FIXATION ZONE
                  DRAWING ZONE  (NOT LESS THAN TG)

36

## FIG.4A

| | | #1 1-1 | " 1-2 | " 1-3 | " 1-4 | " 1-5 | " 1-6 | #2 1-1 |
|---|---|---|---|---|---|---|---|---|
| CELLULOSE ACYLATE DEGREE OF SUBSTITUTION | ACETATE GROUP (A) | 1.0 | " | " | " | " | " | " |
| | PROPIONATE GROUP (B1) | | | | | | | |
| | BUTYRYL GROUP (B2) | 1.7 | " | " | " | " | " | " |
| | PENTANOYL GROUP (B3) | | | | | | | |
| | HEXANOYL GROUPP (B4) | · | | | | | | |
| | B (SUM OF B1 TO B4) | 1.7 | " | " | " | " | " | " |
| | A+B | 2.7 | " | " | " | " | " | " |
| POLYMERIZATION DEGREE | | 300 | " | " | " | " | " | " |
| TYPE OF PLASTICIZER | | TPP | " | " | " | " | " | " |
| ADDITION AMOUNT (wt%) | | 6 | " | " | " | " | " | " |
| Tg (°C) | | 105 | " | " | " | " | " | " |
| FILM FORMATION METHOD | | #3 | " | " | " | " | " | " |
| DRAWING METHOD | | #4 | " | " | " | " | #4 | #4 |
| #6 | | -3 | " | " | " | " | " | " |
| TRANSVERSE (SIMULTANEOUS BIAXIAL) DRAWING ZONE | DRAWING ZONE TEMPERATURE (RELATIVE TO Tg) (°C) | +10 | " | " | " | " | " | " |
| | LONGITUDINA DRAWING RATE | 1.4 | " | " | 1.8 | 1.1 | 2.4 | 1.4 |
| | PREHEATING (RELATIVE TO Tg) (°C) | +10 | " | " | " | " | " | " |
| | DRAWING (RELATIVE TO Tg) (°C) | +10 | " | " | " | " | " | " |
| | #7 | -20 | " | " | -10 | -5 | -2 | +5 |
| | TRANSVERSE DRAWING RATE | 1.6 | 1.2 | 1.0 | 1.2 | " | " | 1.6 |
| EVALUATION OF DRAWN FILM | Re AVERAGE (nm) | 50 | 50 | 100 | 80 | 60 | 300 | 50 |
| | COEFFICIENT OF FLUCTUATION (%) | 1 | 1 | 1 | 2 | 1 | 1 | 8 |
| | Rth AVERAGE (nm) | 280 | 220 | 160 | 250 | 120 | 310 | 280 |
| | FLUCTUATION RATE (%) | 1 | 1 | 2 | 3 | 2 | 1 | 8 |
| | ORIENTATION ANGLE AVERAGE (°) | 90 | 0 | 1 | 0 | 91 | 0 | 97 |
| | FLUCTUATION (°) | 1 | 1 | 3 | 2 | 1 | 1 | 13 |
| | BOWING STRAIN (%) | 2 | 1 | 0 | 1 | 1 | 2 | 14 |
| #8 | | ◎ | ◎ | ◎ | ○ | ◎ | ○ | × |

#1:EXAMPLE
#2:COMPARATIVE EXAMPLE
#3:FUSION
#4:SEQUENTIAL (LONGITUDINAL→TRANSVERSE)
#5:SIMULTANEOUS
#6:LONGITUDINAL DRAWING PREHEATING-ZONE TEMPERATURE (RELATIVE TO Tg) (°C)
#7:IMMEDIATELY AFTER DRAWING (RELATIVE TO Tg) (°C)
#8:DISPLAY UNIFORMITY OF OPTICAL COMPENSATION FILM

# FIG.4B

EP 1 773 572 B1

| | Cellulose Acylate Degree of Substitution | | | | | | | Polymerization Degree | Type of Plasticizer | Addition Amount (wt%) | Tg (°C) | Film Formation Method | Drawing Method | #6 | Drawing Zone Temperature (relative to Tg)(°C) | Longitudinal Drawing Rate | Transverse (Simultaneous Biaxial) Drawing Zone | | | Transverse Drawing Rate | Evaluation of Drawn Film | | | | | | Bowing Strain (%) | #8 |
|---|---|---|---|---|---|---|---|---|---|---|---|---|---|---|---|---|---|---|---|---|---|---|---|---|---|---|---|---|
| | Acetate Group (A) | Propionate Group (B1) | Butyryl Group (B2) | Pentanoyl Group (B3) | Hexanoyl Group (B4) | B (Sum of B1 to B4) | A+B | | | | | | | | | | Preheating (relative to Tg)(°C) | Drawing (relative to Tg)(°C) | #7 | | Re Average (nm) | Coefficient of Fluctuation (%) | Rth Average (nm) | Fluctuation Rate (%) | Orientation Angle Average (°) | Fluctuation (°) | | |
| #1 1-7 | // | | // | | // | // | // | // | // | // | // | // | #5 | 10 | 0 | 1.4 | 10 | 0 | -20 | 1.6 | 180 | 1 | 360 | 1 | 90 | 1 | 2 | ◎ |
| " 1-8 | // | | // | | // | // | // | // | // | // | // | // | // | 20 | 10 | " | 20 | 10 | -30 | " | 130 | 1 | 280 | 1 | 90 | 1 | 1 | ○ |
| " 1-9 | // | | // | | // | // | // | // | // | // | // | // | // | 30 | 30 | " | 30 | 30 | -40 | " | 120 | 2 | 210 | 3 | 92 | 3 | 0 | ◎ |
| " 1-10 | // | | // | | // | // | // | // | // | // | // | // | // | 50 | 60 | " | 50 | 60 | -40 | " | 20 | 4 | 100 | 5 | 88 | 4 | 2 | ◎ |
| " 1-12 | // | | // | | // | // | // | // | // | // | // | // | // | 10 | 10 | 1.4 | 10 | 10 | " | 1.4 | 100 | 1 | 240 | 1 | 0 | 1 | 1 | ◎ |
| " 1-13 | // | | // | | // | // | // | // | // | // | // | // | // | " | " | " | " | " | " | 1.6 | 10 | 1 | 280 | 1 | 80 | 1 | 2 | ○ |
| " 1-14 | // | | // | | // | // | // | // | // | // | // | // | // | " | " | " | " | " | " | 2.4 | 160 | 1 | 370 | 1 | 90 | 1 | 2 | ◎ |
| #2 1-2 | // | | // | | // | // | // | // | // | // | // | // | // | -15 | 15 | 1.2 | -15 | 15 | -10 | 2.6 | 200 | 3 | 360 | 4 | 97 | 16 | 18 | × |

#1 : EXAMPLE
#2 : COMPARATIVE EXAMPLE
#3 : FUSION
#4 : SEQUENTIAL (LONGITUDINAL→TRANSVERSE)
#5 : SIMULTANEOUS
#6 : LONGITUDINAL DRAWING PREHEATING-ZONE TEMPERATURE (RELATIVE TO Tg) (°C)
#7 : IMMEDIATELY AFTER DRAWING (RELATIVE TO Tg) (°C)
#8 : DISPLAY UNIFORMITY OF OPTICAL COMPENSATION FILM

# FIG.4C

| | CELLULOSE ACYLATE DEGREE OF SUBSTITUTION | | | | | | | POLYMERIZATION DEGREE | TYPE OF PLASTICIZER | ADDITION AMOUNT (wt%) | Tg (°C) | FILM FORMATION METHOD | DRAWING METHOD | #6 | DRAWING ZONE TEMPERATURE (RELATIVE TO Tg) (°C) | LONGITUDINA DRAWING RATE | TRANSVERSE (SIMULTANEOUS BIAXIAL) DRAWING ZONE | | | | EVALUATION OF DRAWN FILM | | | | | | BOWING STRAIN (%) | #8 |
| | ACETATE GROUP (A) | PROPIONATE GROUP (B1) | BUTYRYL GROUP (B2) | PENTANOYL GROUP (B3) | HEXANOYL GROUPP (B4) | B (SUM OF B1 TO B4) | A+B | | | | | | | | | | PREHEATING (RELATIVE TO Tg) (°C) | DRAWING (RELATIVE TO Tg) (°C) | #7 | TRANSVERSE DRAWING RATE | Re AVERAGE (nm) | COEFFICIENT OF FLUCTUATION (%) | Rth AVERAGE (nm) | FLUCTUATION RATE (%) | ORIENTATION ANGLE AVERAGE (°) | FLUCTUATION (°) | | |
|---|---|---|---|---|---|---|---|---|---|---|---|---|---|---|---|---|---|---|---|---|---|---|---|---|---|---|---|---|
| #1 1-15 | " | | " | | | " | " | " | " | " | " | " | " | 10 | 10 | 1.1 | 10 | 10 | -20 | 2.4 | 170 | 1 | 230 | 1 | 90 | 1 | 1 | ◎ |
| " 1-16 | " | | " | | | " | " | " | " | " | " | " | " | " | " | 1.5 | " | " | " | 1.6 | 100 | 1 | 180 | 1 | 90 | 1 | 3 | ○ |
| " 1-17 | " | | " | | | " | " | " | " | " | " | " | " | " | " | 1.1 | " | " | " | 1.6 | 80 | 1 | 230 | 1 | 90 | 1 | 1 | ◎ |
| " 1-18 | " | | " | | | " | " | " | " | " | " | " | " | " | " | 1.6 | " | " | " | 1.0 | 70 | 1 | 220 | 1 | 0 | 1 | 2 | ○ |
| " 1-19 | " | | " | | | " | " | " | " | " | " | " | " | " | " | 2.4 | " | " | " | 1.0 | 260 | 1 | 280 | 1 | 0 | 1 | 0 | ◎ |
| #2 1-3 | " | | " | | | " | " | " | " | " | " | " | " | -15 | 15 | 2.7 | -15 | 15 | +10 | 1.0 | 410 | 2 | 260 | 3 | 8 | 12 | 17 | × |

#1: EXAMPLE
#2: COMPARATIVE EXAMPLE
#3: FUSION
#4: SEQUENTIAL (LONGITUDINAL→TRANSVERSE)
#5: SIMULTANEOUS
#6: LONGITUDINAL DRAWING PREHEATING-ZONE TEMPERATURE (RELATIVE TO Tg) (°C)
#7: IMMEDIATELY AFTER DRAWING (RELATIVE TO Tg) (°C)
#8: DISPLAY UNIFORMITY OF OPTICAL COMPENSATION FILM

EP 1 773 572 B1

## FIG.4D

| | 1-20 | 1-21 | 1-22 | 1-23 | 1-24 | 1-25 | 1-26 | 1-27 | 1-28 |
|---|---|---|---|---|---|---|---|---|---|
| | #1 | 〃 | 〃 | 〃 | 〃 | 〃 | 〃 | 〃 | 〃 |
| **CELLULOSE ACYLATE DEGREE OF SUBSTITUTION** — ACETATE GROUP (A) | 1.2 | 0.4 | 1.2 | 1.0 | 〃 | 〃 | 〃 | 〃 | 〃 |
| PROPIONATE GROUP (B1) | | | | | | | | | |
| BUTYRYL GROUP (B2) | 1.3 | 2.5 | 1.5 | 1.7 | 〃 | 〃 | 〃 | 〃 | 〃 |
| PENTANOYL GROUP (B3) | | | | | | | | | |
| HEXANOYL GROUPP (B4) | | | | | | | | | |
| B (SUM OF B1 TO B4) | 1.3 | 2.5 | 1.5 | 1.7 | 〃 | 〃 | 〃 | 〃 | 〃 |
| A+B | 2.5 | 2.9 | 2.7 | 2.7 | 〃 | 〃 | 〃 | 〃 | 〃 |
| POLYMERIZATION DEGREE | 〃 | 〃 | 〃 | 210 | 390 | 190 | 410 | 300 | 〃 |
| TYPE OF PLASTICIZER | 〃 | 〃 | 〃 | 〃 | 〃 | 〃 | 〃 | TPP | 〃 |
| ADDITION AMOUNT (wt%) | 〃 | 〃 | 〃 | 〃 | 〃 | 〃 | 〃 | 0 | 1 |
| Tg (°C) | 133 | 90 | 145 | 103 | 110 | 100 | 112 | 125 | 122 |
| FILM FORMATION METHOD | 〃 | 〃 | 〃 | 〃 | 〃 | 〃 | 〃 | 〃 | 〃 |
| DRAWING METHOD | #4 | 〃 | 〃 | 〃 | 〃 | 〃 | 〃 | 〃 | 〃 |
| #6 | 〃 | 〃 | 〃 | 〃 | 〃 | 〃 | 〃 | 〃 | 〃 |
| DRAWING ZONE TEMPERATURE (RELATIVE TO Tg) (°C) | +10 | 〃 | 〃 | 〃 | 〃 | 〃 | 〃 | 〃 | 〃 |
| LONGITUDINAL DRAWING RATE | 1.4 | 〃 | 〃 | 〃 | 〃 | 〃 | 〃 | 〃 | 〃 |
| **TRANSVERSE (SIMULTANEOUS BIAXIAL) DRAWING ZONE** — PREHEATING (RELATIVE TO Tg) (°C) | +10 | 〃 | 〃 | 〃 | 〃 | 〃 | 〃 | 〃 | 〃 |
| DRAWING (RELATIVE TO Tg) (°C) | +10 | 〃 | 〃 | 〃 | 〃 | 〃 | 〃 | 〃 | 〃 |
| #7 | +20 | 〃 | 〃 | 〃 | 〃 | 〃 | 〃 | 〃 | 〃 |
| TRANSVERSE DRAWING RATE | 1.6 | 〃 | 〃 | 〃 | 〃 | 〃 | 〃 | 〃 | 〃 |
| **EVALUATION OF DRAWN FILM** — Re AVERAGE (nm) | 30 | 30 | 10 | 40 | 80 | 30 | 80 | 40 | 45 |
| COEFFICIENT OF FLUCTUATION (%) | 1 | 1 | 2 | 1 | 1 | 2 | 3 | 1 | 1 |
| Rth AVERAGE (nm) | 220 | 350 | 160 | 250 | 360 | 200 | 370 | 260 | 270 |
| FLUCTUATION RATE (%) | 1 | 1 | 3 | 1 | 1 | 3 | 2 | 1 | 1 |
| ORIENTATION ANGLE AVERAGE (°) | 80 | 80 | 93 | 93 | 90 | 90 | 88 | 93 | 90 |
| FLUCTUATION (°) | 1 | 1 | 4 | 1 | 1 | 4 | 3 | 4 | 1 |
| BOWING STRAIN (%) | 0 | 1 | 2 | 1 | 2 | 3 | 2 | 1 | 1 |
| #8 | ◎ | ◎ | ○ | ◎ | ◎ | ◎ | ◎ | ○ | ◎ |

#1:EXAMPLE
#2:COMPARATIVE EXAMPLE
#3:FUSION
#4:SEQUENTIAL (LONGITUDINAL→TRANSVERSE)
#5:SIMULTANEOUS
#6:LONGITUDINAL DRAWING PREHEATING-ZONE TEMPERATURE (RELATIVE TO Tg) (°C)
#7:IMMEDIATELY AFTER DRAWING (RELATIVE TO Tg) (°C)
#8:DISPLAY UNIFORMITY OF OPTICAL COMPENSATION FILM

**FIG.4E**

| | 1-29 (#1) | 1-30 (″) | 1-31 (″) | 1-32 (″) | 1-33 (″) | 1-34 (″) | 1-35 (″) | 1-36 (″) | 1-4 (#2) |
|---|---|---|---|---|---|---|---|---|---|
| CELLULOSE ACYLATE — DEGREE OF SUBSTITUTION — ACETATE GROUP (A) | ″ | ″ | 0.2 | 0.0 | 0.5 | 0.7 | 0.2 | SATURATED NORBORNENE SERIES | |
| PROPIONATE GROUP (B1) | | | 2.7 | 3.0 | 2.0 | | 1.5 | | |
| BUTYRYL GROUP (B2) | ″ | ″ | | | | 1.0 | | | |
| PENTANOYL GROUP (B3) | | | | | | 1.0 | | | |
| HEXANOYL GROUPP (B4) | | | | | | | 1.0 | | |
| B (SUM OF B1 TO B4) | ″ | ″ | 2.7 | 3.0 | 2.0 | 2.0 | 2.5 | | |
| A+B | ″ | ″ | 2.8 | 3.0 | 2.5 | 2.7 | 2.7 | | |
| POLYMERIZATION DEGREE | ″ | ″ | ″ | ″ | ″ | ″ | ″ | | |
| TYPE OF PLASTICIZER | ″ | ″ | PTP | ″ | ″ | PTP | ODA | – | – |
| ADDITION AMOUNT (wt%) | 19 | 21 | 10 | ″ | ″ | 3 | 12 | 0 | 0 |
| Tg (°C) | 100 | 73 | 118 | 112 | 128 | 105 | 100 | 139 | ″ |
| FILM FORMATION METHOD | ″ | ″ | ″ | ″ | ″ | ″ | ″ | ″ | ″ |
| DRAWING METHOD | ″ | ″ | ″ | ″ | ″ | ″ | ″ | #5 | #4 |
| TRANSVERSE (SIMULTANEOUS BIAXIAL) DRAWING ZONE — #6 | ″ | ″ | ″ | ″ | ″ | ″ | ″ | 10 | 10 |
| DRAWING ZONE TEMPERATURE (RELATIVE TO Tg)(°C) | ″ | ″ | ″ | ″ | ″ | ″ | ″ | 10 | ″ |
| LONGITUDINA DRAWING RATE | ″ | ″ | ″ | ″ | ″ | ″ | ″ | 2.5 | 2.5 |
| PREHEATING (RELATIVE TO Tg)(°C) | ″ | ″ | ″ | ″ | ″ | ″ | ″ | 10 | -15 |
| DRAWING (RELATIVE TO Tg)(°C) | ″ | ″ | ″ | ″ | ″ | ″ | ″ | 10 | 10 |
| #7 | ″ | ″ | ″ | ″ | ″ | ″ | ″ | -20 | -5 |
| TRANSVERSE DRAWING RATE | ″ | ″ | ″ | ″ | ″ | ″ | ″ | 1.2 | 1.2 |
| EVALUATION OF DRAWN FILM — Re AVERAGE (nm) | 70 | 80 | 30 | 50 | 20 | 30 | 20 | 580 | 580 |
| COEFFICIENT OF FLUCTUATION (%) | 1 | 3 | 1 | 1 | 1 | 2 | 2 | 2 | 11 |
| Rth AVERAGE (nm) | 320 | 330 | 220 | 270 | 220 | 270 | 260 | 360 | 350 |
| FLUCTUATION RATE (%) | 1 | 2 | 1 | 2 | 1 | 2 | 2 | 2 | 10 |
| ORIENTATION ANGLE AVERAGE (°) | 90 | 89 | 90 | 88 | 90 | 93 | 87 | -1 | 13 |
| FLUCTUATION (°) | 1 | 2 | 1 | 1 | 1 | 4 | 2 | 1 | 20 |
| BOWING STRAIN (%) | 2 | 3 | 0 | 1 | 3 | 2 | 1 | 2 | 12 |
| #8 | O | ◎ | ◎ | ◎ | O | ◎ | ◎ | ◎ | × |

#1: EXAMPLE
#2: COMPARATIVE EXAMPLE
#3: FUSION
#4: SEQUENTIAL (LONGITUDINAL→TRANSVERSE)
#5: SIMULTANEOUS
#6: LONGITUDINAL DRAWING PREHEATING-ZONE TEMPERATURE (RELATIVE TO Tg) (°C)
#7: IMMEDIATELY AFTER DRAWING (RELATIVE TO Tg) (°C)
#8: DISPLAY UNIFORMITY OF OPTICAL COMPENSATION FILM

# FIG.5A

| | CELLULOSE ACYLATE DEGREE OF SUBSTITUTION | | | | | | | POLYMERIZATION DEGREE | TYPE OF PLASTICIZER | ADDITION AMOUNT (wt%) | YGT (°C) | FILM FORMATION METHOD | SOLUTION METHOD SOLVENT | CASTING METHOD | REMAINING SOLVENT | LONGITUDINAL DRAWING | | | | #10 | | | | EVALUATION OF DRAWN ELM | | | | | | | |
| | ACETATE GROUP (A) | PROPIONATE GROUP (B1) | BUTYRYL GROUP (B2) | PENTANOYL GROUP (B3) | HEXANOYL GROUP (B4) | SUM OF B1 TO B4 | A+B | | | | | | | | | DRAWING METHOD | #8 | #9 | RATE | PREHEATING (RELATIVE TO Tg)(°C) | DRAWING (RELATIVE TO Tg)(°C) | #11 | TRANSVERSE DRAWING RATE | Re AVERAGE | FLUCTUATION RATE | Rth AVERAGE (nm) | FLUCTUATION RATE (%) | ORIENTATION ANGLE AVERAGE (°) | FLUCTUATION (°) | BOWING STRAIN (%) | #12 |
|---|---|---|---|---|---|---|---|---|---|---|---|---|---|---|---|---|---|---|---|---|---|---|---|---|---|---|---|---|---|---|---|
| #1 2-1 | 1.0 | | 1.7 | | | 1.7 | 2.7 | 300 | TPP | 6 | 105 | #3 | #4 | BAND | 0 | #6 | -3 | +15 | 1.2 | +10 | +10 | -20 | 1.8 | 55 | 1 | 290 | 1 | 92 | 2 | 2 | ◎ |
| " 2-2 | " | | " | | | " | " | " | " | " | " | " | " | " | 0 | " | " | " | " | " | " | " | 1.5 | 35 | 3 | 320 | 3 | 92 | 3 | 1 | ◎ |
| " 2-3 | " | | " | | | " | " | " | " | " | " | " | " | " | 0 | " | " | " | " | " | " | " | 1.0 | 90 | 2 | 230 | 2 | -1 | 1 | 0 | ◎ |
| #2 2-1 | " | | " | | | " | " | " | " | " | " | " | " | " | 0 | " | " | " | " | -5 | " | -2 | " | 55 | 7 | 290 | 5 | 6 | 6 | 13 | △ |
| " 2-2 | " | | " | | | " | " | " | " | " | " | " | " | " | 0 | #6 | " | " | " | +15 | " | +10 | " | 55 | 5 | 290 | 5 | 7 | 8 | 11 | × |
| #1 2-4 | " | | " | | | " | " | " | " | " | " | " | " | " | 0 | #7 | +10 | +10 | 1.8 | +10 | +10 | -20 | 1.8 | 50 | 1 | 270 | 1 | 1 | 1 | 3 | O |
| " 2-5 | " | | " | | | " | " | " | " | " | " | " | " | " | 0 | " | " | " | " | " | " | " | 1.5 | 30 | 3 | 280 | 3 | -2 | 2 | 2 | O |
| " 2-6 | " | | " | | | " | " | " | " | " | " | " | " | " | 0 | " | " | " | " | " | " | " | 1.0 | 60 | 2 | 210 | 2 | 2 | 3 | 4 | O |
| #2 2-3 | " | | " | | | " | " | " | " | " | " | " | " | " | 0 | #7 | -10 | " | " | -10 | " | " | " | 55 | 7 | 280 | 5 | 7 | 9 | 14 | × |

#1:EXAMPLE
#2:COMPARATIVE EXAMPLE
#3:SOLUTION
#4:CHLORINE SERIES
#5:NON-CHLORINE SERIES
#6:SEQUENTIAL (LONGITUDINAL TRANSVERSE)

#7:SIMULTANEOUS
#8:PREHEATING-ZONE TEMPERATURE (RELATIVE TO Tg) (°C)
#9:DRAWING ZONE TEMPERATURE (RELATIVE TO Tg) (°C)
#10:TRANSVERSE (SIMULTANEOUS BIAXIAL) DRAWING ZONE
#11:IMMEDIATELY AFTER DRAWING (RELATIVE TO Tg) (°C)
#12:DISPLAY UNIFORMITY OF OPTICAL COMPENSATION ELM

EP 1 773 572 B1

42

## FIG.5B

| | | #1 2-7 | "2-8 | "2-9 | "2-10 | "2-11 | "2-12 | "2-13 |
|---|---|---|---|---|---|---|---|---|
| EVALUATION OF DRAWN ELM | #12 | O | O | O | O | ◎ | ◎ | ◎ |
| | BOWING STRAIN (%) | 2 | 1 | 1 | 1 | 0 | 2 | 3 |
| | FLUCTUATION (°) | 2 | 4 | 4 | 3 | 2 | 2 | 1 |
| | ORIENTATION ANGLE AVERAGE (°) | 1 | 2 | 88 | 92 | 89 | 88 | 1 |
| | FLUCTUATION RATE (%) | 1 | 3 | 1 | 1 | 1 | 1 | 1 |
| | Rth AVERAGE (nm) | 270 | 200 | 290 | 310 | 230 | 280 | 310 |
| | FLUCTUATION RATE | 1 | 8 | 1 | 1 | 1 | 1 | 1 |
| | Re AVERAGE | 45 | 20 | 55 | 36 | 90 | 180 | 20 |
| #10 | TRANSVERSE DRAWING RATE | 1.2 | " | 1.8 | " | " | 2.4 | 1.4 |
| | #11 | -20 | " | -20 | -10 | -1 | " | " |
| | DRAWING (RELATIVE TO Tg) (°C) | +10 | " | +10 | " | " | " | " |
| | PREHEATING (RELATIVE TO Tg) (°C) | +10 | " | +10 | " | " | " | " |
| LONGITUDINAL DRAWING | RATE | 1.8 | " | 1.2 | 1.5 | 1.1 | 1.1 | 1.6 |
| | #9 | +10 | " | +10 | " | " | " | " |
| | #8 | +10 | " | +10 | " | " | -3 | " |
| DRAWING METHODT | | #7 | #7 | #7 | " | " | #6 | " |
| REMAINING SOLVENT | | 2.5 | 3.2 | 0 | 0 | 0 | 0 | 0 |
| CASTING METHOD | | = | = | = | = | = | = | = |
| SOLUTION METHOD SOLVENT | | = | = | = | = | = | = | = |
| FILM FORMATION METHOD | | = | = | = | = | = | = | = |
| YGT (°C) | | = | = | = | = | = | = | = |
| ADDITION AMOUNT (wt%) | | = | = | = | = | = | = | = |
| TYPE OF PLASTICIZER | | = | = | = | = | = | = | = |
| POLYMERIZATION DEGREE | | = | = | = | = | = | = | = |
| CELLULOSE ACYLATE DEGREE OF SUBSTITUTION | A+B | = | = | = | = | = | = | = |
| | SUM OF B1 TO B4 | = | = | = | = | = | = | = |
| | HEXANOYL GROUP (B4) | | | | | | | |
| | PENTANOYL GROUP (B3) | | | | | | | |
| | BUTYRYL GROUP (B2) | = | = | = | = | = | = | = |
| | PROPIONATE GROUP (B1) | | | | | | | |
| | ACETATE GROUP (A) | = | = | = | = | = | = | = |

#1: EXAMPLE
#2: COMPARATIVE EXAMPLE
#3: SOLUTION
#4: CHLORINE SERIES
#5: NON-CHLORINE SERIES
#6: SEQUENTIAL (LONGITUDINAL TRANSVERSE)

#7: SIMULTANEOUS
#8: PREHEATING-ZONE TEMPERATURE (RELATIVE TO Tg) (°C)
#9: DRAWING ZONE TEMPERATURE (RELATIVE TO Tg) (°C)
#10: TRANSVERSE (SIMULTANEOUS BIAXIAL) DRAWING ZONE
#11: IMMEDIATELY AFTER DRAWING (RELATIVE TO Tg) (°C)
#12: DISPLAY UNIFORMITY OF OPTICAL COMPENSATION ELM

## FIG.5C

| | | #1 2-14 | ″2-15 | ″2-16 | ″2-17 | ″2-18 | ″2-19 | #2 2-4 | ″2-5 |
|---|---|---|---|---|---|---|---|---|---|
| | #12 | O | O | ◎ | ◎ | ◎ | O | △ | × |
| EVALUATION OF DRAWN ELM | BOWING STRAIN (%) | 1 | 1 | 2 | 1 | 2 | 7 | 13 | 11 |
| | FLUCTUATION (°) | 1 | 1 | 1 | 1 | 1 | 1 | 14 | 10 |
| | ORIENTATION ANGLE AVERAGE (°) | 0 | 0 | 90 | 91 | 90 | 88 | 83 | 8 |
| | FLUCTUATION RATE (%) | 1 | 1 | 3 | 3 | 3 | 3 | 8 | 9 |
| | Rth AVERAGE (nm) | 270 | 100 | 150 | 330 | 220 | 320 | 150 | 100 |
| | FLUCTUATION RATE | 1 | 1 | 3 | 3 | 3 | 3 | 3 | 9 |
| | Re AVERAGE | 180 | 5 | 65 | 10 | 120 | 180 | 55 | 78 |
| #10 | TRANSVERSE DRAWING RATE | 1.0 | 1.2 | 1.5 | 2.4 | 1.0 | 1.0 | 2.4 | 1.0 |
| | #11 | = | -20 | = | = | = | -1 | 1 | = |
| | DRAWING (RELATIVE TO Tg) (°C) | = | +10 | +30 | +50 | +15 | +10 | = | = |
| | PREHEATING (RELATIVE TO Tg) (°C) | = | +10 | = | = | = | = | = | = |
| LONGITUDINAL DRAWING | RATE | 2.4 | 1.2 | = | = | 1.6 | 2.4 | 1.2 | 2.5 |
| | #9 | = | +10 | +30 | +60 | +15 | +10 | +30 | +50 |
| | #8 | = | +10 | = | = | = | = | = | = |
| | DRAWING METHODT | = | #7 | = | = | = | #6 | = | = |
| | REMAINING SOLVENT | 0 | 0 | 0 | 1 | 2 | 3 | 0 | 0 |
| | CASTING METHOD | = | DRUM | = | = | = | = | = | = |
| | SOLUTION METHOD SOLVENT | = | = | = | = | = | = | = | = |
| | FILM FORMATION METHOD | = | = | = | = | = | = | = | = |
| | YGT (°C) | = | = | = | = | = | = | = | = |
| | ADDITION AMOUNT (wt%) | = | = | = | = | = | = | = | = |
| | TYPE OF PLASTICIZER | = | = | = | = | = | = | = | = |
| | POLYMERIZATION DEGREE | = | = | = | = | = | = | = | = |
| CELLULOSE ACYLATE DEGREE OF SUBSTITUTION | A+B | = | = | = | = | = | = | = | = |
| | SUM OF B1 TO B4 | = | = | = | = | = | = | = | = |
| | HEXANOYL GROUP (B4) | | | | | | | | |
| | PENTANOYL GROUP (B3) | | | | | | | | |
| | BUTYRYL GROUP (B2) | = | = | = | = | = | = | = | = |
| | PROPIONATE GROUP (B1) | | | | | | | | |
| | ACETATE GROUP (A) | = | = | = | = | = | = | = | = |

#1:EXAMPLE
#2:COMPARATIVE EXAMPLE
#3:SOLUTION
#4:CHLORINE SERIES
#5:NON-CHLORINE SERIES
#6:SEQUENTIAL (LONGITUDINAL TRANSVERSE)

#7:SIMULTANEOUS
#8:PREHEATING-ZONE TEMPERATURE (RELATIVE TO Tg) (°C)
#9:DRAWING ZONE TEMPERATURE (RELATIVE TO Tg) (°C)
#10:TRANSVERSE (SIMULTANEOUS BIAXIAL) DRAWING ZONE
#11:IMMEDIATELY AFTER DRAWING (RELATIVE TO Tg) (°C)
#12:DISPLAY UNIFORMITY OF OPTICAL COMPENSATION ELM

## FIG.5D

| | 2-20 (#1) | 2-21 (″) | 2-22 (″) | 2-23 (″) | 2-24 (″) | 2-25 (″) | 2-26 (″) | 2-27 (″) |
|---|---|---|---|---|---|---|---|---|
| CELLULOSE ACYLATE DEGREE OF SUBSTITUTION — ACETATE GROUP (A) | 1.2 | 0.4 | 1.2 | 1.0 | ″ | ″ | ″ | 0.7 |
| PROPIONATE GROUP (B1) | | | | | | | | |
| BUTYRYL GROUP (B2) | 1.3 | 2.5 | 1.5 | 1.7 | ″ | ″ | ″ | 1.0 |
| PENTANOYL GROUP (B3) | | | | | | | | 1.0 |
| HEXANOYL GROUP (B4) | | | | | | | | |
| SUM OF B1 TO B4 | 1.3 | 2.5 | 1.5 | 1.7 | ″ | ″ | ″ | 2.0 |
| A+B | 2.5 | 2.9 | 2.7 | 2.7 | ″ | ″ | ″ | 2.7 |
| POLYMERIZATION DEGREE | ″ | ″ | ″ | 300 | ″ | ″ | ″ | ″ |
| TYPE OF PLASTICIZER | ″ | ″ | ″ | TPP | ″ | ″ | ″ | PTP |
| ADDITION AMOUNT (wt%) | ″ | ″ | ″ | 0 | 1 | 19 | 21 | 3 |
| YGT (°C) | 133 | 90 | 158 | 125 | 122 | 100 | 73 | 105 |
| FILM FORMATION METHOD | ″ | ″ | ″ | ″ | ″ | ″ | ″ | ″ |
| SOLUTION METHOD SOLVENT | ″ | ″ | ″ | ″ | ″ | ″ | ″ | ″ |
| CASTING METHOD | BAND | ″ | ″ | ″ | ″ | ″ | ″ | ″ |
| REMAINING SOLVENT | 0 | 0 | 0 | 0 | 0 | 0 | 0 | 0 |
| DRAWING METHODT | ″ | ″ | ″ | ″ | ″ | ″ | ″ | ″ |
| LONGITUDINAL DRAWING — #8 | -3 | ″ | ″ | ″ | ″ | ″ | ″ | ″ |
| #9 | +15 | ″ | ″ | ″ | ″ | ″ | ″ | ″ |
| RATE | 1.8 | ″ | ″ | ″ | ″ | ″ | ″ | ″ |
| #10 — PREHEATING (RELATIVE TO Tg) (°C) | +10 | ″ | ″ | ″ | ″ | ″ | ″ | ″ |
| DRAWING (RELATIVE TO Tg) (°C) | +10 | ″ | ″ | ″ | ″ | ″ | ″ | ″ |
| #11 | -20 | ″ | ″ | ″ | ″ | ″ | ″ | ″ |
| TRANSVERSE DRAWING RATE | 1.2 | ″ | ″ | ″ | ″ | ″ | ″ | ″ |
| EVALUATION OF DRAWN ELM — Re AVERAGE | 25 | 75 | 10 | 45 | 10 | 75 | 85 | 35 |
| FLUCTUATION RATE | 1 | 1 | 3 | 1 | 1 | 1 | 2 | 1 |
| Rth AVERAGE (nm) | 230 | 360 | 170 | 255 | 275 | 325 | 330 | 275 |
| FLUCTUATION RATE (%) | 1 | 1 | 3 | 1 | 1 | 1 | 2 | 1 |
| ORIENTATION ANGLE AVERAGE (°) | 1 | 2 | 2 | 1 | 0 | 0 | 0 | 2 |
| FLUCTUATION (°) | 1 | 2 | 3 | 2 | 1 | 1 | 1 | 2 |
| BOWING STRAIN (%) | 0 | 0 | 1 | 3 | 3 | 2 | 1 | 1 |
| #12 | ◎ | ○ | ○ | ◎ | ◎ | ○ | ○ | ◎ |

#1: EXAMPLE
#2: COMPARATIVE EXAMPLE
#3: SOLUTION
#4: CHLORINE SERIES
#5: NON-CHLORINE SERIES
#6: SEQUENTIAL (LONGITUDINAL TRANSVERSE)

#7: SIMULTANEOUS
#8: PREHEATING-ZONE TEMPERATURE (RELATIVE TO Tg) (°C)
#9: DRAWING ZONE TEMPERATURE (RELATIVE TO Tg) (°C)
#10: TRANSVERSE (SIMULTANEOUS BIAXIAL) DRAWING ZONE
#11: IMMEDIATELY AFTER DRAWING (RELATIVE TO Tg) (°C)
#12: DISPLAY UNIFORMITY OF OPTICAL COMPENSATION ELM

# FIG.5E

| | CELLULOSE ACYLATE DEGREE OF SUBSTITUTION | | | | | | | POLYMERIZATION DEGREE | TYPE OF PLASTICIZER | ADDITION AMOUNT (wt%) | YGT (°C) | FILM FORMATION METHOD | SOLUTION METHOD SOLVENT | CASTING METHOD | REMAINING SOLVENT | DRAWING METHODT | LONGITUDINAL DRAWING | | | #10 TRANSVERSE (SIMULTANEOUS BIAXIAL) DRAWING ZONE | | | | EVALUATION OF DRAWN ELM | | | | | | | #12 |
| | ACETATE GROUP (A) | PROPIONATE GROUP (B1) | BUTYRYL GROUP (B2) | PENTANOYL GROUP (B3) | HEXANOYL GROUP (B4) | SUM OF B1 TO B4 | A+B | | | | | | | | | | #8 | #9 | RATE | PREHEATING (RELATIVE TO Tg)(°C) | DRAWING (RELATIVE TO Tg)(°C) | #11 | TRANSVERSE DRAWING RATE | Re AVERAGE | FLUCTUATION RATE | Rth AVERAGE (nm) | FLUCTUATION RATE (%) | ORIENTATION ANGLE AVERAGE (°) | FLUCTUATION (°) | BOWING STRAIN (%) | |
|---|---|---|---|---|---|---|---|---|---|---|---|---|---|---|---|---|---|---|---|---|---|---|---|---|---|---|---|---|---|---|---|
| #1 2-28 | 0.2 | 1.5 | | | 1.0 | 2.5 | 2.7 | " | DOA | 12 | 100 | " | " | " | 0 | " | " | " | " | " | " | " | " | 25 | 1 | 265 | 1 | −1 | 1 | 0 | ○ |
| " 2-29 | 0.2 | 2.7 | | | | 2.7 | 2.9 | " | BDP | 2 | 155 | " | #5 | BAND | 0 | " | " | " | " | " | " | " | " | 30 | 1 | 225 | 1 | −1 | 1 | 0 | ○ |
| " 2-30 | 0 | 3 | | | | 3.0 | 3.0 | " | " | " | 142 | " | " | " | 0 | " | " | " | " | " | " | " | " | 45 | 2 | 275 | 2 | −2 | 2 | 1 | ◎ |
| " 2-31 | 0.5 | 2 | | | | 2.0 | 2.5 | " | " | " | 173 | " | " | " | 0 | " | " | " | " | " | " | " | " | 20 | 1 | 215 | 1 | 0 | 1 | 2 | ◎ |
| " 2-32 | 1.95 | 0.7 | | | | 0.7 | 2.55 | " | " | " | 115 | " | " | " | 0 | " | " | " | " | " | " | " | " | 20 | 3 | 200 | 3 | 0 | 1 | 2 | ○ |
| " 2-33 | 1.0 | 1.7 | | | | 1.7 | 2.7 | " | TPP | 6 | 136 | " | #4 | " | 0 | " | " | " | " | " | " | " | " | 45 | 2 | 250 | 2 | 1 | 1 | 3 | ○ |
| " 2-34 | SATURATED NORBORNENE SERIES | | | | | | | − | | 0 | 136 | " | #4 | " | 0 | " | +10 | " | 1.8 | " | " | " | 1.2 | 85 | 3 | 340 | 3 | 0 | 1 | 1 | ◎ |
| #2 2-6* | " | | | | | | | − | | 0 | " | " | #5 | " | 0 | " | −30 | " | 1.4 | " | " | " | 1 | 135 | 10 | 100 | 10 | 13 | 13 | 11 | × |
| #2 2-7** | " | | | | | | | − | | 0 | " | " | #5 | " | 0 | " | +30 | " | 1.5 | " | " | " | 1 | 250 | 15 | 100 | 15 | 12 | 12 | 13 | × |

#1:EXAMPLE
#2:COMPARATIVE EXAMPLE
#3:SOLUTION
#4:CHLORINE SERIES
#5:NON-CHLORINE SERIES
#6:SEQUENTIAL(LONGITUDINAL TRANSVERSE)

#7:SIMULTANEOUS
#8:PREHEATING-ZONE TEMPERATURE(RELATIVE TO Tg)(°C)
#9:DRAWING ZONE TEMPERATURE(RELATIVE TO Tg)(°C)
#10:TRANSVERSE(SIMULTANEOUS BIAXIAL)DRAWING ZONE
#11:IMMEDIATELY AFTER DRAWING(RELATIVE TO Tg)(°C)
#12:DISPLAY UNIFORMITY OF OPTICAL COMPENSATION ELM

EP 1 773 572 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 4074635 A
- EP 0423630 A
- JP 9095538 A
- JP 6501040 A
- JP 2004182979 A
- JP 51070316 A
- JP 10036175 A
- JP 57078431 A
- JP 54157159 A
- JP 55013765 A
- JP 11323017 A
- JP 10067860 A
- JP 10095854 A
- JP 10324774 A
- JP 11302388 A
- JP 2002082226 A
- WO 0246809 A
- JP 8338913 A
- JP 9152509 A
- JP 9316127 A
- US 23297 A
- JP 2002086554 A
- JP 2000155216 A
- JP 2002062426 A
- JP 8160430 A
- JP 2002062427 A
- JP 8050206 A
- JP 8027284 A
- JP 2002296423 A
- JP 2002330725 A
- US 2367661 A
- US 2367670 A
- US 2448828 A
- US 2722512 A
- US 3046127 A
- US 2951758 A
- US 3549367 A
- JP 60105667 A
- US 4239850 A
- US 4212970 A
- US 4583825 A
- US 5410422 A
- JP 2176625 A
- JP 9157855 A
- JP 2002327310 A
- JP 8122504 A
- JP 8110401 A
- JP 10300902 A
- JP 2002243906 A
- JP 2000111706 A
- JP 10206603 A
- JP 11295503 A
- JP 11153703 A
- JP 2000009908 A
- JP 2001310432 A
- JP 2001166104 A
- US 6210858 B1
- JP 20022776069 B
- JP 2000047004 A
- JP 2001315242 A
- JP 2001031871 A
- JP 2001296401 A
- JP 2001293818 A
- JP 9222503 A
- JP 11038202 A
- JP 2001040284 A
- JP 2000284102 A
- JP 11258403 A
- JP 58142958 A
- JP 58147483 A
- JP 58147484 A
- JP 9157582 A
- JP 11106704 B
- JP 2000117902 A
- JP 2001048590 A
- JP 2002053804 A
- JP 11003820 A
- JP 2002144913 A
- WO 046617 A
- JP 11038208 A
- JP 2000199809 A
- JP 2002107512 A
- US 2681294 A
- JP 2000271878 A
- JP 2000281410 A
- JP 2000095893 A
- JP 2001100004 A
- JP 2001281407 A
- JP 63278839 A
- JP 11183710 A
- JP 2000275401 A
- JP 2003029040 A
- JP 2003066230 A
- JP 11314233 A
- JP 2001141926 A
- JP 2000154261 A
- JP 11316378 A
- JP 7333433 A

- JP 2002311240 A
- JP 2003315551 A
- JP 2001042130 A

- JP 10048420 A
- JP 9026572 A

**Non-patent literature cited in the description**

- **MIGITA et al.** Wood Chemistry. Kyoritsu Shuppan, 1968, 180-190
- **KAZUO UDA ; HIDEO SAITO.** *Journal of the Society of Fiber Science and Technology,* 1962, vol. 18 (1), 105-120
- Kokai Gihou. Japanese Institute of Invention and Innovation, 15 March 2001, 17-22
- Kokai Gihou. Japanese Institute of Invention and Innovation, 15 March 2001, 12-16
- Kokai Gihou. Japanese Institute of Invention and Innovation, 15 March 2001, 25
- Kokai Gihou. Japanese Institute of Invention and Innovation, 15 March 2001, 30-32
- Kokai Gihou. Japanese Institute of Invention and Innovation, 15 March 2001, 32
- Kokai Gihou. Japanese Institute of Invention and Innovation, 15 March 2001, 32-45
- Kokai Gihou. Japanese Institute of Invention and Innovation, 15 March 2001, 58

- Survey of Chemistry, Quarterly. Chemistry of Liquid Crystal. Chemical Society of Japan, 1994, vol. 22
- Liquid crystal device handbook
- **C. DESTRADE et al.** *Mol. Cryst.,* 1981, vol. 71, 111
- **C. DESTRADE et al.** *Mol. Cryst.,* 1985, vol. 122, 141
- 78. *Physicslett, A,* 1990, 82
- **B. KOHNE et al.** *Angew. Chem.,* 1984, vol. 96, 70
- **J. M. LEHN et al.** *J. Chem. Commun.,* 1985, 1794
- **J. ZHANG et al.** *J. Am. Chem. Soc.,* 1994, vol. 116, 2655
- **TEZUKA.** *Carbonhydr. Res,* 1995, vol. 273, 83-91
- Kokai Gihou. Japanese Institute of Invention and Innovation